(19) Europäisches Patentamt / European Patent Office / Office européen des brevets

(11) **EP 2 767 927 B1**

(12) **EUROPEAN PATENT SPECIFICATION**

(45) Date of publication and mention
of the grant of the patent:
**12.06.2024 Bulletin 2024/24**

(21) Application number: **14155489.9**

(22) Date of filing: **18.02.2014**

(51) International Patent Classification (IPC):
**G06V 20/56** *(2022.01)*    **G06V 20/58** *(2022.01)*

(52) Cooperative Patent Classification (CPC):
**G06V 20/588; G06V 20/56; G06V 20/58**

(54) **Road surface information detection apparatus, vehicle device control system employing road surface information detection apparatus, and carrier medium of road surface information detection program**

Straßenbelaginformationserkennungsvorrichtung, Fahrzeugvorrichtung mit der Straßenbelaginformationserkennungsvorrichtung, und Trägermedium des Straßenbelaginformationserkennungsprogramms

Appareil de détection d'information de la surface d'une route, système de commande de dispositif de véhicule utilisant un appareil de détection d'information de la surface d'une route et support de programme de détection d'information de la surface d'une route

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.02.2013   JP 2013028942**
**26.04.2013   JP 2013093257**
**06.12.2013   JP 2013253026**

(43) Date of publication of application:
**20.08.2014 Bulletin 2014/34**

(73) Proprietor: **Ricoh Company, Ltd.**
**Tokyo 143-8555 (JP)**

(72) Inventor: **Takahashi, Sadao**
**Tokyo,, 143-8555, (JP)**

(74) Representative: **SSM Sandmair**
**Patentanwälte Rechtsanwalt**
**Partnerschaft mbB**
**Joseph-Wild-Straße 20**
**81829 München (DE)**

(56) References cited:
**US-A1- 2006 050 338**

- **NICOLAS SOQUET ET AL: "Road Segmentation Supervised by an Extended V-Disparity Algorithm for Autonomous Navigation", INTELLIGENT VEHICLES SYMPOSIUM, 2007 IEEE, IEEE, PI, 1 June 2007 (2007-06-01), pages 160-165, XP031126938, ISBN: 978-1-4244-1067-5**
- **STEPHEN J KROTOSKY ET AL: "A Comparison of Color and Infrared Stereo Approaches to Pedestrian Detection", INTELLIGENT VEHICLES SYMPOSIUM, 2007 IEEE, IEEE, PI, 1 June 2007 (2007-06-01), pages 81-86, XP031126925, ISBN: 978-1-4244-1067-5**

**Description**

BACKGROUND

Technical Field

The present invention relates to a face information detection apparatus for vehicles to detect information of a face where the vehicles move based on a plurality of captured images captured by a plurality of image capturing units, and a vehicle-device control system using the face information detection apparatus, and a carrier medium of face information detection program.

Background Art

JP-2010-271964-A discloses a road shape recognition apparatus for vehicles as a face information detection apparatus, wherein the road shape recognition apparatus includes a stereo camera composed of a plurality of cameras such as a first camera and a second camera that can capture images of road face (hereinafter, face) ahead of vehicle. Upon capturing images ahead of the vehicle using the stereo camera, a stereo matching processing is conducted for image data of reference image captured by one camera (e.g., first camera) and image data of comparison image captured by other camera (e.g., second camera). Then, parallax is sequentially computed for each pixel of the reference image, and distance data D is computed using the parallax and pixel coordinates on the image based on the fundamental of triangulation. The distance data D includes information of distance Z and height Y, wherein the distance Z is a distance in actual space computed for each pixel on the captured image (distance from the vehicle to a target object displayed on a concerned pixel), and the height Y is a height of the concerned target object from a road face right below the vehicle. Among such computed distance data D, the distance data D of pixel displaying the road face is extracted, and face information such as height from the road face ahead of the vehicle can be recognized by obtaining a profile of the distance data D.

Nicolas Soquet et al: "Road Segmentation Supervised by an Extended V-Disparity Algorithm for Autonomous Navigation", Intelligent Vehicles Symposium, 2007 IEEE, IEEE, PI, 1 June 2007, pages 160-165 deals with free space estimation by stereovision and road detection by color segmentation.

Stephen J. Krotosky et al: "A Comparison of Color and Infrared Stereo Approaches to Pedestrian Detection", Intelligent Vehicles Symposium, 2007 IEEE, IEEE, PI, 1 June 2007, pages 81-86 presents an analysis of color and infrared stereo approaches to pedestrian detection.

At present, object detection apparatuses that can detect a target object existing ahead of a vehicle such as ahead vehicles and lanes are applied to automobiles or the like. These object detection apparatuses can be used, for example, as driver support systems such as adaptive cruise control (ACC) to reduce the burden on drivers of vehicles. The driver support systems provide various functions including a brake-control-and-alert function that alerts the driver to take corrective action to avoid a collision or reduce the impact of the collision, a driving speed adjustment function to maintain a safe minimum distance between vehicles, and a stray prevention function to prevent the vehicle from straying into another lane. To effectively use these functions, various target objects existing around the vehicle need to be recognized with high precision in an image captured ahead of the vehicle, wherein the various target objects are, for example, other vehicles, pedestrians, road objects (lanes, manhole covers), road-side objects (telegraph poles, guard rails, curbstones, median strips), in which lanes of the vehicle need to be recognized, and objects to avoid a collision need to be recognized with high precision.

Typically, various target objects ahead of the vehicle exist at positions on the road face or at positions higher than the road face. Therefore, if a road face image (face image area) displaying the road face can be detected in the captured image with high precision, an image area displaying the target object exists can be limited using the road face image as a reference, with which the target object can be identified with high precision. Further, without detecting the road face image in the captured image, an image area displaying the target object exists can be limited, in which by obtaining height information (face information) of each road face portion and using the height at each road face portion as a reference, an image area displaying the target object exists can be identified, and in this case, the target object can be also identified with high precision.

SUMMARY

The invention is set out by the appended set of claims. The embodiments and/or examples of the following description which are not covered by the claims, are provided for illustrative purpose only and are only intended to assist the reader in understanding the present invention. However, such embodiments and/or examples which are not covered by the claims do not form part of the present invention that is solely defined by the claims.

In the present invention, selected targets to be processed can be determined based on parallax values selected previously. Typically, face information does not change abruptly. Therefore, even if parallax information generated for the current face information detection includes error, by using parallax values correctly selected previously as a reference, parallax values having wrong values (i.e., noise) for the face can be indentified. Therefore, the selected targets to be processed can be determined while removing the wrong parallax value (i.e., noise) based on the parallax values selected previously, and therefore, a group of parallax values matched to a feature of the face can be selected effectively, and face information can be detected and obtained with high precision.

In the present invention, the face information detection apparatus can detect face information with high precision, and the above described face information detection apparatus can be applied to a vehicle-device control system and face information detection program.

BRIEF DESCRIPTION OF THE DRAWINGS

A more complete appreciation of the disclosure and many of the attendant advantages and features thereof can be readily obtained and understood from the following detailed description with reference to the accompanying drawings, wherein:

FIG.1 is a schematic view a vehicle-mounted device control system according to an example embodiment;
FIG. 2 shows a schematic configuration of an image capturing unit and an image analyzer of the vehicle-mounted device control system of FIG. 1;
FIG.3 shows parallax of images captured by left and right image capturing units;
FIG.4 is a schematic configuration of a processing hardware and an image analyzer;
FIG 5 is a block diagram of an object detection processing according to an example embodiment;
FIG 6A is an example of parallax value profile of parallax image;
FIG 6B is an example of line parallax profile map (V map) indicating a frequency profile of parallax values for each line of parallax image of FIG 6A;
FIG 7 is an example of a reference image captured by one image capturing unit;
FIG 8 is a V map corresponding to the image of FIG 7;
FIG 9 is an example of V map explaining extraction condition according to an example embodiment;
FIG 10 is an example of V map information of road face of relatively upward slope;
FIG 11 is an example of V map information of road face when a vehicle is in acceleration;
FIG 12 is a block diagram showing a process in a V map generation unit;
FIG 13 is another block diagram showing a process in a V map generation unit;
FIG. 14 is a flowchart showing the steps of an example process of V map information generation processing for a first V map information generation processing;
FIG. 15 is an example of road face image candidate area set on a parallax image;
FIG. 16 is a flowchart showing the steps of another example process of V map information generation processing for a second V map information generation processing;
FIG. 17 is a block diagram showing a process in the road face shape detection unit;
FIG. 18 shows a chart explaining a detection method by a road face candidate point detection process (i) in the first road face candidate point detection process;
FIG. 19 shows a chart explaining a detection method by a road face candidate point detection process (ii) in the first road face candidate point detection process;
FIGs. 20A and 20B are a flowchart showing the steps of a process of road face candidate point detection process by a road face candidate point detection unit for the first road face candidate point detection process;
FIG. 21 is a chart for explaining a detection method for a road face candidate point detection process (i) and a road face candidate point detection process (ii) in a second road face candidate point detection process;
FIG. 22 is a flowchart showing the steps of a process of road face candidate point detection process conducted by a road face candidate point detection unit for the second road face candidate point detection process;
FIG. 23 shows an example case of segmenting V map into three segments (parallax value segment);
FIG. 24 shows another example case of segmenting V map into three segments (parallax value segment);
FIG. 25 shows further another example case of segmenting V map into three segments (parallax value segment);
FIG. 26A shows an example case of segmenting V map into four segments (parallax value segment), in which a last segment (fourth segment) width (parallax value range) is narrow;
FIG. 26B shows an example case that the last segment (fourth segment) is combined with a previous segment (third segment) to set the combined segment as a third segment;
FIG. 27 is a flowchart showing the steps of an example process of segment linear approximation processing for a first segment linear approximation processing conducted by a segment line approximation unit;

FIGs. 28A and 28B are a flowchart showing the steps of another example process of segment linear approximation processing for a second segment linear approximation processing conducted by a segment line approximation unit;

FIG. 29A shows an example of original segments having three segments;

FIG. 29B shows segments after extending an original first segment of FIG. 29A;

FIG. 30A shows another example of original segments having three segments;

FIG. 30B shows segments after extending an original second segment of FIG. 30A;

FIG. 31A shows an example case that approximated straight lines obtained for each of segments are not continuous at segment boundary;

FIG. 31B shows an example case that approximated straight lines obtained for each of segments shown in FIG. 31A are corrected so that the approximated straight lines become continuous at segment boundary;

FIG. 32 is an example of reference image captured by one image capturing unit;

FIG. 33 is an U map corresponding to the image of FIG. 32;

FIG. 34 is a flowchart showing the steps of a process of conducted by an isolation area detection unit;

FIG. 35 is a chart showing a labeling process conducted by the isolated area detection unit;

FIG. 36 is a chart showing a labeling process when different labels exist around a concerned coordinate;

FIG. 37 is an example of U map having set with a rectangle area that an isolated area, detected by the isolated area detection unit, inscribes;

FIG. 38 is a schematic parallax image corresponding to the U map of FIG. 37;

FIG. 39 is a schematic parallax image having set with a circumscribed rectangle by a group of object lines;

FIG. 40 is a flowchart showing the steps of a process conducted by a parallax-image corresponding area detection unit and an object area extraction unit;

FIG. 41 is an example of table data for classification of object types;

FIG. 42 is a flowchart showing the steps of a process of guard rail detection conducted by a guard rail detection unit;

FIG. 43 is an example of U map showing approximated straight line obtained by conducting linear approximation processing to a target area in guard rail detection processing;

FIG. 44 shows schematic charts when detecting guard rail candidate coordinates from obtained approximated straight line;

FIG. 45 is an example of a guard rail area on a parallax image, corresponding to the image of FIG. 32, detected by a guard rail detection unit;

FIG. 46 is a schematic chart of fundamentals of detecting an image left-right direction position Vx of a vanishing point from a rudder angle of a front wheel of a vehicle;

FIG. 47 is a schematic chart of fundamentals of detecting an image left-right direction position Vx of a vanishing point from yaw rate and vehicle speed of a vehicle;

FIG. 48 is a schematic chart showing a change of an image upper-lower direction position Vy of a vanishing point when a vehicle is in acceleration and deceleration;

FIG. 49 is a schematic image of captured image of road face having a zebra zone;

FIG. 50 is a V map prepared for parallax image corresponding to the captured image of FIG. 49;

FIG. 51 shows an approximated straight line (solid line)obtained from the V map of FIG. 50, in which the obtained approximated straight line (solid line) deviates from an approximated straight line (dashed line) having little error;

FIG. 52 is a block diagram showing a process of the V map generation unit in variant example 1;

FIG. 53 is a provisional V map having a noise area set using an approximated straight line obtained from a captured image of a previous frame;

FIG. 54 is a corrected V map for variant example 1;

FIG. 55 is a flowchart showing the steps of V map generation processing in variant example 1 conducted by a V map generation unit;

FIG. 56 is a flowchart showing the steps of another V map generation processing in variant example 1 conducted by a V map generation unit;

FIG. 57 is a flowchart showing the steps of a process of variant example 2;

FIG. 58 is an example parallax image in variant example 2, divided into two areas such as a left area and a right area, in which a straight line connecting a vanishing point of road face and the center of lowest end of parallax image is used as a boundary to divide the parallax image;

FIG. 59 is an example parallax image in variant example 2, setting a straight line connecting a vanishing point and a bottom-left point of parallax image, and a straight line connecting a vanishing point and a bottom-right point of parallax image;

FIG. 60 is an example parallax image in variant example 2, setting one image scanning line to the parallax image of FIG. 59;

FIG. 61 is an example linear interpolation of parallax values in variant example 2, in which parallax values on an image scanning line between two intersection points of two straight lines and the one image scanning line are linear interpolated;

FIG. 62 is an example parallax image in variant example 3, divided into two areas such as a left area and a right area, in which a straight line connecting a vanishing point of road face and the center of lowest end of parallax image is used as a boundary to divide the parallax image;

FIG. 63 is an example parallax image in variant example 3, setting a straight line connecting a vanishing point and a bottom-left point of parallax image, and a straight line connecting a vanishing point and a bottom-right point of parallax image;

FIG. 64 is an example parallax image in variant example 2, setting one image scanning line to the parallax image of FIG. 63;

FIG. 65 is an example parallax image in variant example 4, divided into three areas, in which a straight line connecting a vanishing point of road face and one-fourth (1/4) point in the left-side bottom, and a straight line connecting a vanishing point of road face and one-fourth (1/4) point in the right-side bottom are as boundary;

FIG. 66 is an example parallax image in variant example 4, setting one image scanning line to the parallax image of FIG. 65;

FIG. 67 is an example linear interpolation of parallax values in variant example 4, in which parallax values on an image scanning line between three intersection points of three straight lines and the one image scanning line are linear interpolated;

FIG. 68 is an example parallax image in variant example 5, divided into three areas, in which a straight line connecting a vanishing point of road face and one-fourth (1/4) point in the left-side bottom, and a straight line connecting a vanishing point of road face and one-fourth (1/4) point in the right-side bottom are as boundary; and

FIG. 69 is an example parallax image in variant example 5, setting one image scanning line to the parallax image of FIG. 68.

The accompanying drawings are intended to depict exemplary embodiments of the present invention and should not be interpreted to limit the scope thereof. The accompanying drawings are not to be considered as drawn to scale unless explicitly noted, and identical or similar reference numerals designate identical or similar components throughout the several views.

DETAILED DESCRIPTION

A description is now given of exemplary embodiments of the present invention. It should be noted that although such terms as first, second, etc. may be used herein to describe various elements, components, regions, layers and/or sections, it should be understood that such elements, components, regions, layers and/or sections are not limited thereby because such terms are relative, that is, used only to distinguish one element, component, region, layer or section from another region, layer or section. Thus, for example, a first element, component, region, layer or section discussed below could be termed a second element, component, region, layer or section without departing from the teachings of the present invention.

In addition, it should be noted that the terminology used herein is for the purpose of describing particular embodiments only and is not intended to be limiting of the present invention. Thus, for example, as used herein, the singular forms "a", "an" and "the" are intended to include the plural forms as well, unless the context clearly indicates otherwise. Moreover, the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Furthermore, although in describing views shown in the drawings, specific terminology is employed for the sake of clarity, the present disclosure is not limited to the specific terminology so selected and it is to be understood that each specific element includes all technical equivalents that operate in a similar manner and achieve a similar result. Referring now to the drawings, an apparatus or system according to an example embodiment is described hereinafter.

A description is now given of a face information detection apparatus according to an example embodiment of the present invention such as a road face detection apparatus. The road face detection apparatus can be applied to a vehicle-device control system such as a vehicle-mounted device control system. The vehicle is not limited to any specific type of vehicles and may include various types of vehicles such as automobiles, robots, or the like.

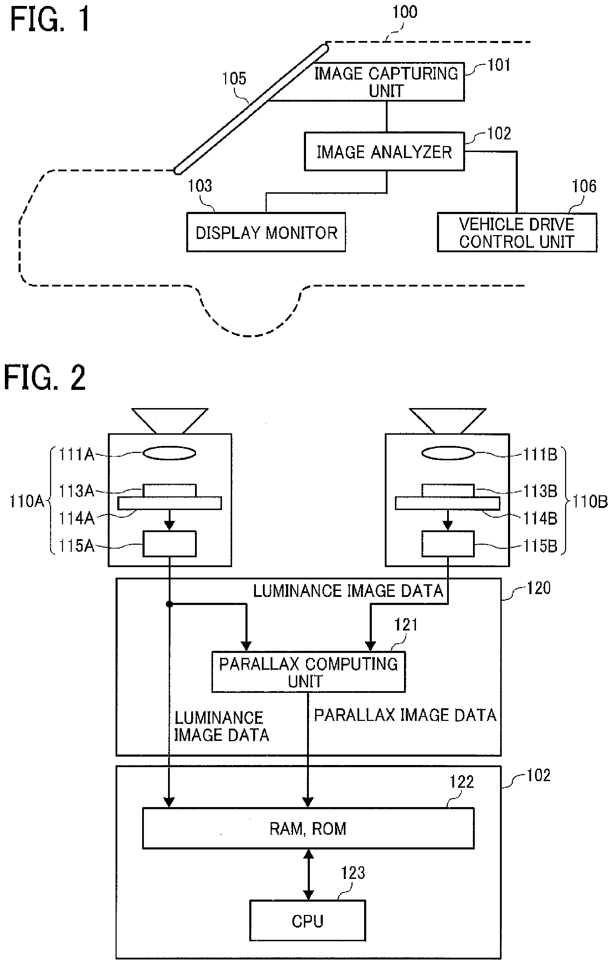

FIG.1 is a schematic view a vehicle-mounted device control system=according to an example embodiment of the present invention. As to the vehicle-mounted device control system, an image capturing unit disposed for a vehicle such as automobile captures image data a forward area of the moving direction of vehicle to detect relative height information (e.g., information of relative slope condition) of road face (or face) ahead of the vehicle. Because three dimensional shape of road ahead of the vehicle can be detected based on a detection result, the detection result can be used for controlling various vehicle-mounted devices.

FIG. 1 shows a schematic configuration of a vehicle-mounted device control system according to an example embodiment. The vehicle-mounted device control system includes an image capturing unit 101, used as an image capturing device or unit, to capture an image of an area ahead of a vehicle 100 that can move (e.g., run) in a given direction. The area ahead of the vehicle 100 may be referred to as an image capturing area, a captured image area ahead of the vehicle or a captured image area, as required. The image capturing unit 101 is mounted, for example, near a rear-view mirror disposed at a windshield 105 of the vehicle 100.

Various data such as image data captured by the image capturing unit 101 is input to the image analyzer 102 used as an image processing unit. The image analyzer 102 analyzes the data, transmitted from the image capturing unit 101, in which the image analyzer 102 detects relative height at each point (referred to as position information) on a road face ahead of the vehicle 100, and detects a three dimensional shape of road ahead of the vehicle 100, in which the relative height is a height from the road face where the vehicle 100 is running such as the road face right below the vehicle 100.

Further, the computation or recognition result of the image analyzer 102 is transmitted to a vehicle drive control unit 106. The vehicle drive control unit 106 recognize a recognition target object such as pedestrians, other vehicles, and various obstacles ahead of the vehicle 100 based on a recognition result of relative slope condition of road face by the image analyzer 102. Then, the vehicle drive control unit 106 can provide a cruise assist control based on the recognition or detection result of recognition target object such as pedestrians, other vehicles and various obstacles recognized or detected by the image analyzer 102. Specifically, when the vehicle 100 is to be collided with an object, the vehicle drive control unit 106 conducts the cruise assist control such as reporting a warning to a driver of the vehicle 100 and controlling the steering and brakes of the vehicle 100. This vehicle drive control unit 106 can be referred to as the vehicle controller.

FIG. 2 shows a schematic configuration of the image capturing unit 101 and the image analyzer 102. The image capturing unit 101 is, for example, a stereo camera having two capturing units such as a first capturing unit 110A and a second capturing unit 110B, in which the first capturing unit 110A and the second capturing unit 110B have the same configuration. The first capturing unit 110A is configured with a first capturing lens 111A, a first image sensor 113A, a first sensor board 114A, and a first signal processor 115A. The second capturing unit 110B is configured with a second capturing lens 111B, a second image sensor 113B, a second sensor board 114B, and a second signal processor 115B.

The first sensor board 114A is disposed with the first image sensor 113A having arranged image capturing elements (or light receiving elements) two-dimensionally, and the second sensor board 114B is disposed with the second image sensor 113B having arranged image capturing elements (or light receiving elements) two-dimensionally.

The first signal processor 115A converts analog electrical signals output from the first sensor board 114A (i.e., light quantity received by light receiving elements on the first image sensor 113A) to digital signals to prepare captured image data, and outputs the captured image data. The second signal processor 115B converts analog electrical signals output from the second sensor board 114B (i.e., light quantity received by light receiving elements on the second image sensor 113B) to digital signals to prepare captured image data, and outputs the captured image data. The image capturing unit 101 can output luminance image data and parallax image data.

Further, the image capturing unit 101 includes a processing hardware 120 used as an image processing board such as field-programmable gate array (FPGA). The processing hardware 120 includes a parallax computing unit 121 to obtain parallax image from the luminance image data output from the first capturing unit 110A and the second capturing unit 110B. The parallax computing unit 121 computes the parallax between an image captured by the first capturing unit 110A and an image captured by the second capturing unit 110B by comparing a corresponding image portion on the captured images. As described above, the parallax computing unit 121 can be used as a parallax information generation unit, which computes parallax values.

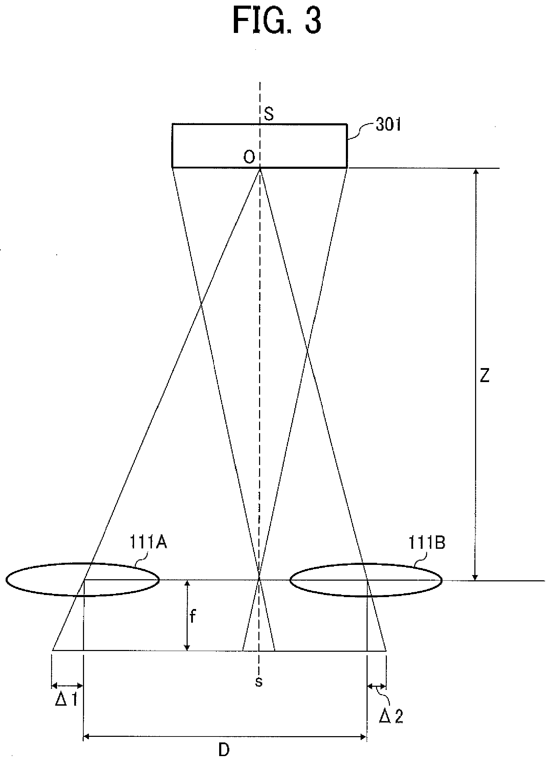

Values of parallax can be computed by using one image captured by one of the first and second capturing units 110A and 110B as a reference image and other image captured by other one of the first and second capturing units 110A and 110B as a comparing image. In the image capturing area, a concerned image portion at the same point of the reference image and the comparing image are compared to compute a positional deviation between the reference image and the comparing image as the parallax of the concerned image portion. By using fundamental of triangulation, the distance to the same point of the concerned image portion in the image capturing area can be computed based on the parallax. The parallax value can computed using the fundamental of triangulation as shown in FIG. 3, in which with respect to the point O on the object, distance $\Delta 1$ and distance $\Delta 2$ between the focal position and focal center for the left and right images are computed, with which the parallax value d ($\Delta$) can be computed as $\Delta = \Delta 1 + \Delta 2$. With this processing, the parallax value can computed for each pixel, and the parallax image obtained from the parallax value can be prepared.

The image analyzer 102, configured using an image processing board, includes, for example, a memory 122, and a central processing unit (CPU) 123. The memory 122 such as a random access memory (RAM) and a read only memory (ROM) stores luminance image data and parallax image data output from the image capturing unit 101. The MPU 123 executes computer programs used for the recognition processing of recognition target and controlling the parallax computation.

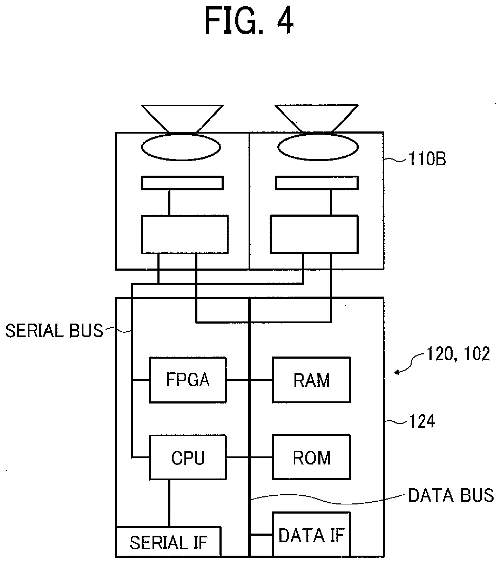

FIG.4 is an example hardware configuration of the processing hardware 120 and the image analyzer 102. An image processing board 124 that configures the processing hardware 120 and the image analyzer 102 conducts various processing such as light exposing control of the first image sensor 113 and the second image sensor 113B, image reading control, communication with external circuit, and image data transmission.

The first capturing unit 110A and the second capturing unit 110B are connected using a data bus and a serial bus. Luminance image data output from the first capturing unit 110A and the second capturing unit 110B is transferred to the RAM of the image processing board 124 via the data bus. The serial bus is used when the CPU and FPGA conducts communication for changing light exposing control value of sensors, changing image reading parameter, and communication of various setting data.

The image processing board 124 can be configured with CPU, FPGA, ROM, RAM, serial interface IF, serial bus, data interface (IF), and data bus or the like. The FPGA conducts real-time processing to image data stored in the RAM such as gamma correction, distortion correction (parallel processing of left and right captured images), parallax computing using block matching to generate parallax image information, and write data to the RAM.

The CPU controls image sensor controllers of the first capturing unit 110A and the second capturing unit 110B and the entire image processing board. Further, the CPU loads programs of detection process of three dimensional shape of road, and detection process of objects (or recognition target object) such as guard rail from the ROM, and conducts various processes using luminance image data and parallax image data stored in the RAM as input data, and outputs processing results to external units via the data IF and the serial IF. When conducting these processing, vehicle operation information such as vehicle speed, acceleration (acceleration in front-to-rear direction of vehicle), steering angle, and yaw rate of the vehicle 100 can be input using the data IF, and such information can be used as parameters for various processing. Data output to the external units can be used as input data used for controlling various devices of the vehicle 100 such as brake control, vehicle speed control, and warning control.

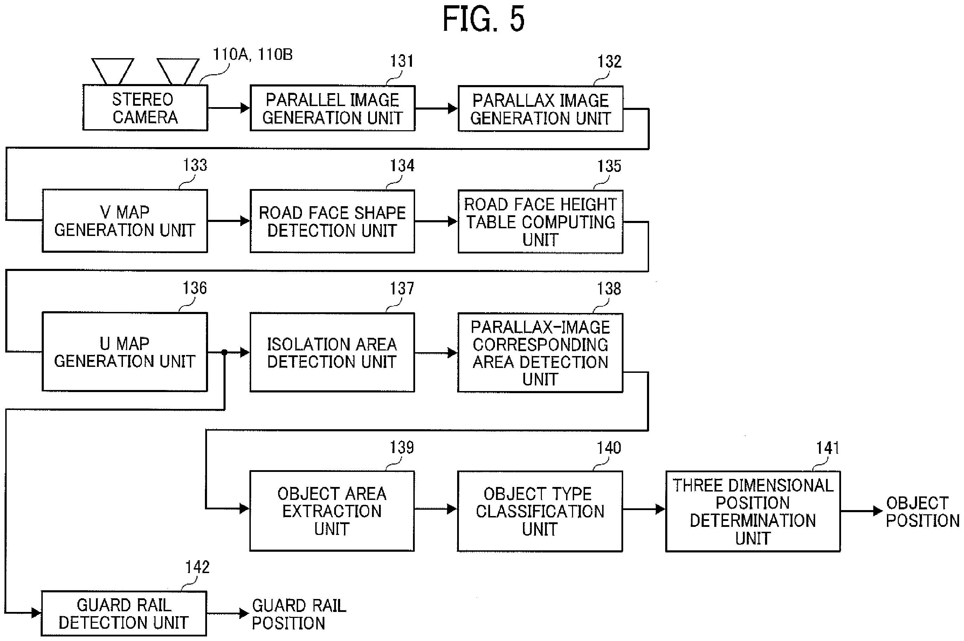

A description is given of an object detection processing such as a road shape detection processing to detect three dimensional shape of road according to an example embodiment. FIG 5 is a block diagram showing a process of an object detection processing according to an example embodiment.

The luminance image data is output from the first capturing unit 110A and the second capturing unit 110B of the stereo camera. If color image data is output from the first capturing unit 110A and the second capturing unit 110B, color luminance conversion for obtaining luminance signal (Y) from RGB signals is conducted, for example, using the following formula(1).

$$Y = 0.3R + 0.59G + 0.11B \qquad (1)$$

When the luminance image data is input, at first, a parallel image generation unit 131 conducts parallel image generation processing. In this parallel image generation processing, based on optical system distortion in the first capturing unit 110A and the second capturing unit 110B and relative positional relationship of the first capturing unit 110A and the second capturing unit 110B, the luminance image data (reference image and comparison image) output from each of the first capturing unit 110A and the second capturing unit 11 0B is converted to an ideal parallel stereo image which can be obtained when two pin-hole cameras are disposed in parallel, in which distortion amount at each pixel is computed using polynomial expressions such as $\Delta x = f(x, y)$, $\Delta y = g(x, y)$, and by using the computed distortion amount, each of pixels of the luminance image data (reference image and comparison image) output from each of the first capturing unit 110A and the second capturing unit 110B is converted. The polynomial expression is based on, for example, a fifth-order of polynomial expressions for x (horizontal direction position in image) and y (vertical direction position in image).

Upon conducting the parallel image generation processing, a parallax image generation unit 132 configured by the parallax computing unit 121 conducts parallax image generation processing that generates parallax image data (parallax information or parallax image information.

In the parallax image generation processing, as to the first capturing unit 110A and the second capturing unit 110B, the luminance image data of one capturing unit such as the first capturing unit 110A is used as reference image data, and the luminance image data of other capturing unit such as the second capturing unit 110B is used as comparison image data, and parallax of two images is computed by using the reference image data and comparison image data to generate and output parallax image data. The parallax image data indicates a parallax image composed of pixel values corresponding to parallax values "d" computed for each image portion on the reference image data.

Specifically, the parallax image generation unit 132 defines a block composed of a plurality of pixels (e.g., 16 × 1 pixel) having one concerned pixel at the center for a certain line in the reference image data. Further, in a certain line of the comparison image data, a block having the same size of the block defined for the reference image data is shifted for one pixel in the horizontal line direction (X direction), and a correlating value indicating correlation between a feature value indicating pixel value of the block defined in the reference image data and a feature value indicating pixel value of the block in the comparing image data is computed. Then, based on the computed correlating value, among blocks in the comparing image data, one block in the comparing image data having the most correlated relation with the block defined in the reference image data is selected, wherein this block selection process may be called as block matching algorithm or matching processing.

Then, a positional deviation between the concerned pixel of the block in the reference image data and a corresponding pixel in the block in the comparing image data selected by the block matching algorithm is computed as the parallax value d. By conducting the computing process of parallax value d for a part area or entire area of the reference image data, parallax image data can be obtained.

As for the feature value of block used for the block matching algorithm or processing, for example, value of each pixel (luminance value) in the block can be used. As for the correlating value, for example, a total of an absolute value of difference between a value of each pixel (luminance value) in the block in the reference image data and a value of corresponding each pixel (luminance value) in the block in the comparing image data can be used. In this case, a block having the smallest total value can be the most correlated block.

When the matching processing at the parallax image generation unit 132 is devised using hardware processing, for example, SSD (step Sum of Squared Difference), ZSSD (Zero-mean Sum of Squared Difference), SAD (step Sum of Absolute Difference), and ZSAD (Zero-mean Sum of Absolute Difference) can be used. In the matching processing, parallax value is computed with pixel unit. Therefore, if parallax value of sub-pixel level, which is less than one pixel is required, estimation value is required. The estimation value can be estimated using, for example, equiangular straight line method, quadratic curve method or the like. Because an error may occur to estimated parallax value of sub-pixel level, EEC (Estimation Error Correction) that can decrease estimation error can be used.

Upon conducting the parallax image generation processing, a V map generation unit 133 conducts V map generation processing that generates V map. Parallax pixel data included in the parallax image data is expressed by combination of x direction position, y direction position, and parallax value "d" such as (x, y, d). Then, this (x, y, d) is converted to three dimensional coordinate information (d, y, f) setting d for X-axis, y for Y-axis, and frequency "f" for Z-axis to generate parallax histogram information. Further, three dimensional coordinate information (d, y, f) exceeding a given frequency threshold among such three dimensional coordinate information (d, y, f) is generated as parallax histogram information. The parallax histogram information in this description is composed of three dimensional coordinate information (d, y, f), and a map of mapping this three dimensional histogram information on two dimensional coordinate system of X-Y is referred to as V map (parallax histogram map).

Specifically, an image is divided in a plurality of areas in the upper-lower direction to obtain each line area in the parallax image data. The V map generation unit 133 computes a frequency profile of parallax values for each line area in the parallax image data: Information of this frequency profile of parallax values becomes parallax histogram information.

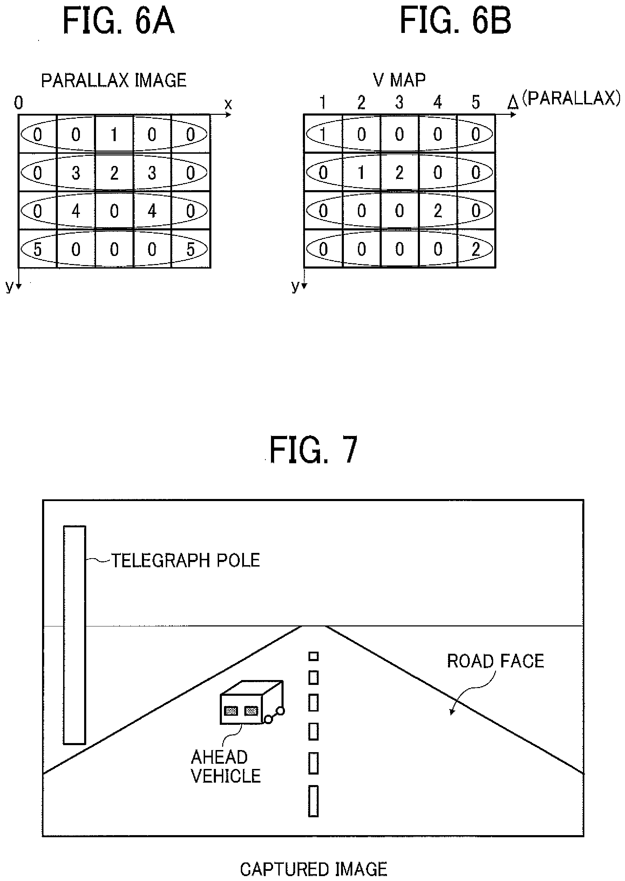

Specifically, when the parallax image data having a parallax value profile shown in FIG 6A is input, the V map generation unit 133 computes a frequency profile of parallax values, which is a frequency profile of the number of data of parallax values for each line, and outputs the frequency profile of parallax values as parallax histogram information. Information of the frequency profile of parallax values for each line area obtained as above is expressed as two dimensional orthogonal coordinate system setting y direction position (upper-lower direction position in captured image) of parallax image on Y-axis and parallax values on X-axis, with which a V map shown in FIG 6B can be obtained. The V map can be expressed as an image by mapping pixels having pixel values corresponding to frequency "f" on the above mentioned two-dimensional orthogonal coordinate system.

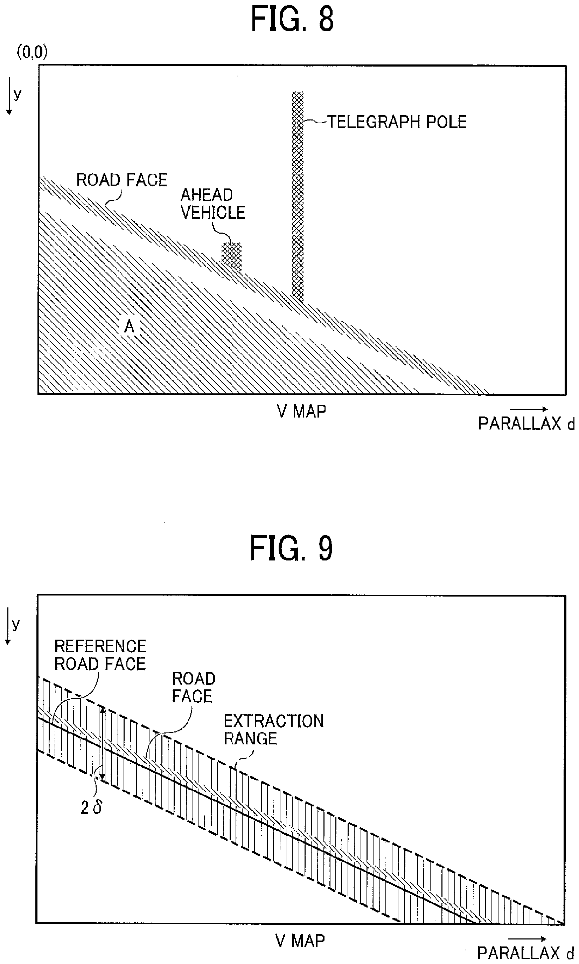

Then, based on the V map information (parallax histogram information) generated by the V map generation unit 133, a road face shape detection unit 134 conducts a road shape detection processing that detects a three dimensional shape of road ahead of the vehicle 100. FIG 7 is an example of a reference image captured by the first capturing unit 1 10A. FIG 8 is a V map corresponding to the image of FIG 7. In the image of FIG 7, an ahead vehicle existing ahead of the vehicle 100 and a telegraph pole existing outside the road are displayed on a road face where the vehicle 100 is moving,.

In this example image, a road face ahead of the vehicle 100 is a relatively flat road face, in which the road face ahead of the vehicle 100 can be matched to a virtual extended face obtained by extending a face parallel to a road face right below the vehicle 100 into a direction ahead of the vehicle 100 (i.e., image capturing direction), wherein the virtual extended face is also referred to as a reference road face or a virtual reference face.

In this case, as to high frequency points at the lower part of V map corresponding to the lower part of image, the parallax value "d" becomes smaller as closer to the upper part of the image and expressed as a substantially straight line having a gradient. Pixels having this feature exist at the substantially same distance on each line on the parallax image and have the highest occupation ratio, and such pixels may display a recognition target object having a feature that the distance of the recognition target object becomes continuously farther from the vehicle 100 as closer to the upper part of the image.

The first capturing unit 110A can capture images of the area ahead the vehicle 100. Example contents of captured image is shown in FIG 7, in which the occupation ratio of the road face at the lower part of the image is greater than the occupation ratio of the road face at the upper part of the captured image. Further, the parallax value "d" of the road face becomes smaller as closer to the upper part of the captured image. Further, as to the same line (horizontal line) in the captured image, pixels displaying the road face have a substantially same parallax value "d." Therefore, the high frequency points plotted as the substantially straight line in the above described V map corresponds to pixels displaying the road face. Therefore, pixels on or near an approximated straight line obtained by linear approximation of high frequency points on the V map can be estimated as pixels displaying the road face with high precision. Further, a distance to the road face displayed by each pixel can be obtained based on the parallax value "d" of corresponding point on the approximated straight line with high precision.

When the linear approximation of the high frequency points on the V map is conducted, precision of processing varies depending on a sampling size of high frequency points used for the linear approximation. The greater the sampling size used for the linear approximation, the greater the number of points not corresponding to the road face, with which processing precision decreases. Further, the smaller the sampling size used for the linear approximation, the smaller the number of points corresponding to the road face, with which processing precision decreases. In view of such issue, in this example embodiment, target parallax histogram information, which is a target of the to-be-described linear approximation is extracted as follows.

FIG 9 is an example of V map explaining extraction condition according to an example embodiment. Upon receiving the parallax image data, the V map generation unit 133 converts each parallax pixel data (x, y, d) included in the parallax image data to V map component (d, y, f), which is a component of parallax histogram information that is three dimensional coordinate information to generate V map information as parallax histogram information. In this process, among from the parallax image data, the V map generation unit 133 extracts parallax pixel data having image upper-lower direction position "y" and the parallax value "d" that satisfies a given condition, and conducts the above described conversion for the extracted parallax pixel data to generate the V map information.

The extraction condition according to an example embodiment is defined as follows. A virtual reference road face (virtual reference face) ahead of the vehicle 100 is obtained by extending a face of the road face parallel to the road face right below the vehicle 100 to ahead of the vehicle 100. Using a relationship of the parallax value "d" and the image upper-lower direction position "y" corresponding to the virtual reference road face (virtual reference face) as a reference, the extraction condition is set as a extraction range having a given range from the reference. The relationship of the parallax value "d" and the image upper-lower direction position "y" corresponding to this reference road face is indicated by a straight line (reference straight line, hereinafter) on the V map as shown in FIG 9. In an example embodiment, a range of $\pm\delta$ about this straight line in the image upper-lower direction is set as the extraction range. The extraction range is set by including a variation range of V map component (d, y, f) of actual road face, which changes over the time depending on conditions

Specifically, for example, when the road face ahead of the vehicle 100 is a relatively upward slope, compared to when the road face ahead of the vehicle 100 is relatively flat, the road face image portion (face image area) displayed in the captured image becomes broader in the upper part of the image.

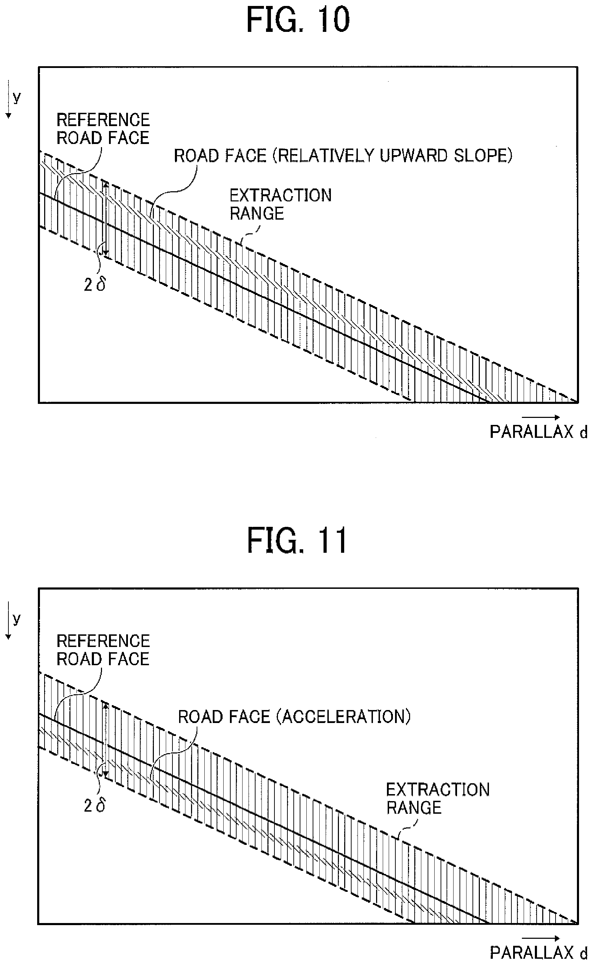

Further, when the road face image portions displayed at the same image upper-lower direction position "y" are compared, the parallax value "d" for relatively upward slope face becomes greater than the parallax value "d" for relatively flat face. In this case, the V map component (d, y, f) on the V map for the relatively upward slope face indicates a straight line existing above the reference straight line and has a gradient (absolute value) greater than the reference straight line as shown in FIG 10. In an example embodiment, if the relatively upward slope of the road face ahead of the vehicle 100 is within an expected range, the V map component (d, y, f) of the relatively upward slope face can be within the extraction range.

Further, for example, when a road face ahead of the vehicle 100 is a relatively downward slope, the V map component (d, y, f) on the V map for the relatively downward slope indicates a straight line existing at a portion lower than the reference straight line and has a gradient (absolute value) smaller than the reference straight line. In an example embodiment, if the relatively downward slope of the road face ahead of the vehicle 100 is within an expected range, the V map component (d, y, f) of the relatively downward slope is within the extraction range.

Further, for example, when the vehicle 100 is increasing speed (acceleration time), weight is loaded to the rear side of the vehicle 100, and the vehicle 100 has an attitude that a front side of the vehicle 100 is directed to an upward in the vertical direction.

In this case, compared to a case that the speed of the vehicle 100 is constant, the road face image portion (face image area) displayed in the captured image shifts to a lower part of the image. In this case, the V map component (d, y, f) on the V map for the acceleration time indicates a straight line existing at a portion lower than the reference straight line and substantially parallel to the reference straight line as shown in FIG 11. In an example embodiment, if the acceleration of the vehicle 100 is within an expected range, the V map component (d, y, f) of road face for the acceleration time can be within the extraction range.

Further, for example, when the vehicle 100 is decreasing speed (deceleration time), weight is loaded to the front side of the vehicle 100, and the vehicle 100 has an attitude that the front side of the vehicle 100 is directed to an downward in the vertical direction. In this case, compared to a case that the speed of the vehicle 100 is constant, the road face image portion (face image area) displayed in the captured image shifts to an upper part of the image. In this case, the V map component (d, y, f) on the V map for deceleration time indicates a straight line existing above the reference straight line and substantially parallel to the reference straight line. In an example embodiment, if the deceleration of the vehicle 100 is within an expected range, the V map component (d, y, f) of the road face for deceleration time can be within the extraction range.

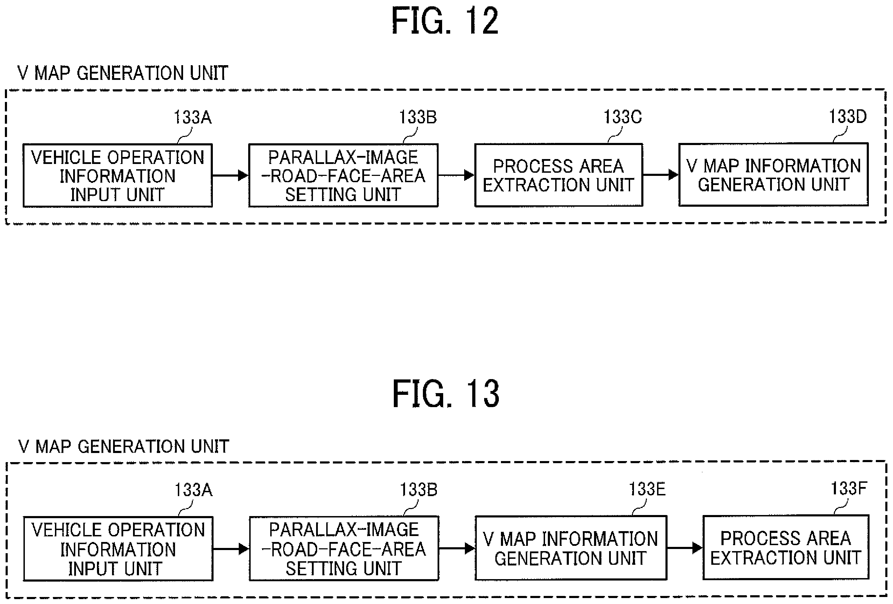

FIG 12 is a block diagram showing a process in the V map generation unit 133. In the V map generation unit 133, upon receiving the parallax image data output from the parallax image generation unit 132, a vehicle operation information input unit 133A obtains the vehicle operation information including acceleration/deceleration information of the vehicle 100. The vehicle operation information input to the vehicle operation information input unit 133A can be obtained from a device installed in the vehicle 100, or from a vehicle operation information obtaining unit such as an acceleration sensor installed in the image capturing unit 101.

Upon obtaining the vehicle operation information as described above, a parallax-image road-face-area setting unit 133B sets a given road face image candidate area (face image candidate area), which is a part of the captured image, to the parallax image data obtained from the parallax image generation unit 132. In this setting, within an expected condition range, an image area excluding a certain area not displaying the road face is set as the road face image candidate area. For example, a pre-set image area can be set as the road face image candidate area. In this example embodiment, the road face image candidate area is set based on vanishing point information indicating a vanishing point of a road face in the captured image.

Upon setting the road face image candidate area as described above, from the parallax image data in the road face image candidate area set by the parallax-image road-face-area setting unit 133B, a process area extraction unit 133C extracts parallax pixel data (parallax image information component) that satisfies the above described extraction condition. Specifically, parallax pixel data having the parallax value "d" and the image upper-lower direction position "y" existing in the $\pm\delta$ range of the image upper-lower direction on the V map with respect to the reference straight line is extracted. Upon extracting the parallax pixel data that satisfies the extraction condition, a V map information generation unit 133D converts parallax pixel data (x, y, d) extracted by the process area extraction unit 133C to V map component (d, y, f) to generate V map information.

In the above description, before generating the V map information using the V map information generation unit 133D, the parallax image data not corresponding to the road face image portion and the parallax image data corresponding to the road face image portion are separated, and the parallax image data corresponding to the road face image portion is extracted by the process area extraction unit 133C. Further, the extraction processing can be conducted similarly after generating the V map information as follows.

FIG 13 is another block diagram showing a process in the V map generation unit 133 conducting the extraction processing after generating V map information. In this case, in the V map generation unit 133, after setting the road face image candidate area by the parallax-image road-face-area setting unit 133B, a V map information generation unit 133E converts parallax pixel data (x, y, d) in the road face image candidate area set by the parallax-image road-face-area setting unit 133B to V map component (d, y, f) to generate V map information.

Upon generating the V map information, a process area extraction unit 133F extracts V map component that satisfies the above described extraction condition from the V map information generated by the V map information generation unit 133E. Specifically, V map component having the parallax value "d" and the image upper-lower direction position "y" existing in the $\pm\delta$ range of the image upper-lower direction on the V map with respect to the reference straight line is extracted. Then, V map information composed of the extracted V map component is output.

(First V map information generation processing)

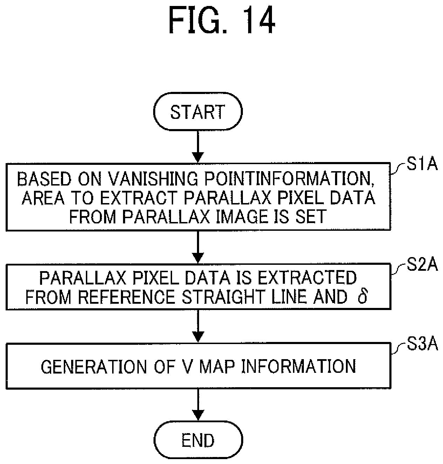

FIG. 14 is a flowchart showing the steps of an example process of V map information (hereinafter, first V map information generation processing) according to an example embodiment. In this first V map information generation processing, V map information is generated without using the vehicle operation information (acceleration/deceleration information in the front and rear side direction of the vehicle 100). In this first V map information generation processing, because acceleration/deceleration information of the vehicle 100 is not used, the extraction range (i.e., value of $\delta$) with respect to the reference straight line corresponding to the reference road face, is set relatively great.

In this first V map information generation processing, a road face image candidate area is set based on vanishing point information of a road face (step S1A). The vanishing point information of the road face can be obtained using known methods. In this first V map information generation processing, the vanishing point information of the road face is defined as (Vx, Vy), and a given offset value is subtracted from the image upper-lower direction position Vy of the vanishing point.

An area extending from a position having an image upper-lower direction position corresponding to "Vy - offset value" to the maximum value ysize (the lowest of parallax image) in the image upper-lower direction position "y" of the concerned parallax image data is set as a road face image candidate area.

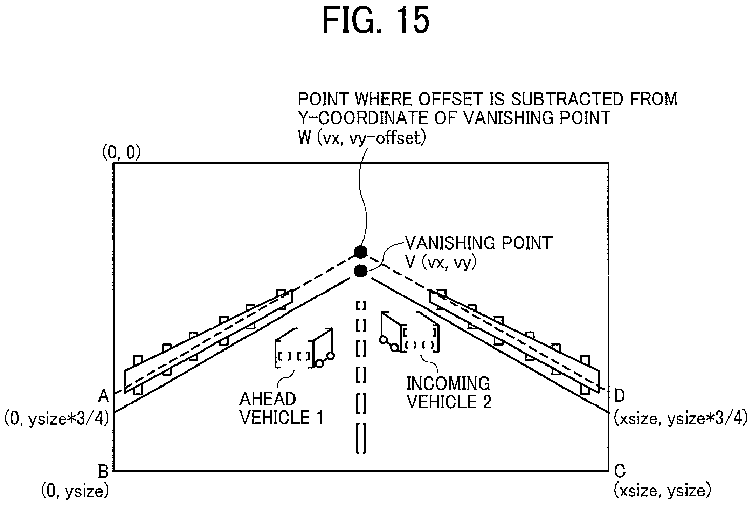

Further, a road face may not be displayed at the left and right side of an image portion corresponding at an image upper-lower direction position that is close to the vanishing point. Therefore, such image portion and its left and right side image portion can be excluded when setting the road face image candidate area. In this case, the road face image candidate area set on the parallax image corresponds to an area encircled by points of W, A, B, C, D shown in FIG. 15.

In this first V map information generation processing, upon setting the road face image candidate area as described above, parallax pixel data (parallax image information component) that satisfies the above described extraction condition is extracted from the parallax image data in the set road face image candidate area, (step S2A). In this processing, based on information of the pre-set reference straight line information and information of $\pm\delta$ that defines the extraction range using the reference straight line as reference, parallax pixel data existing in the concerned extraction range is extracted. Then, the extracted parallax pixel data (x, y, d) is converted to V map component (d, y, f) to generate V map information (step S3A).

(Second V map information generation processing)

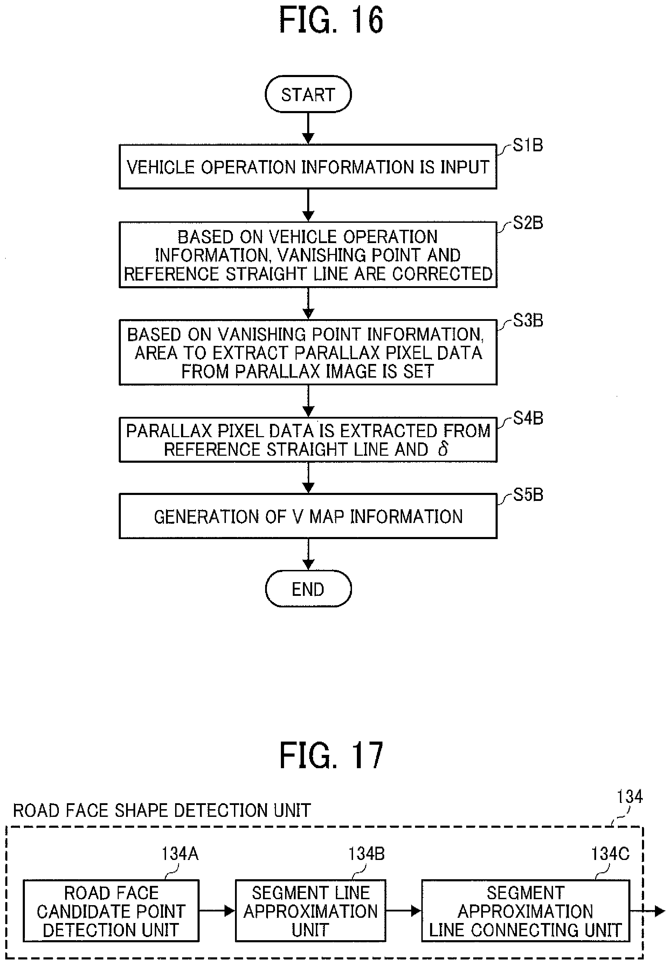

FIG. 16 is a flowchart showing the steps of another example process of V map information generation processing (hereinafter, second V map information generation processing) according to an example embodiment. In this second V map information generation processing, V map information is generated using the vehicle operation information such as acceleration/deceleration information deceleration in the front and rear side direction of the vehicle 100. When the vehicle operation information is input (step S1B), based on the acceleration/deceleration information in the front and rear side direction of the vehicle 100 included in the vehicle operation information, the vanishing point information and the reference straight line information are corrected (step S2B).

The vanishing point information can be corrected as follows. For example, when the vehicle 100 is in the acceleration, weight is loaded to the rear side of the vehicle 100, and the vehicle 100 has an attitude that the front side of the vehicle 100 is directed to an upward in the vertical direction. With this attitude change, the vanishing point of road face shifts to a lower side of the image. In line with this shifting of the vanishing point, the image upper-lower direction position Vy of the vanishing point of road face information can be corrected based on the acceleration information. Further, for example, when the vehicle 100 is in the deceleration, the image upper-lower direction position Vy of the vanishing point of road face information can be corrected based on the deceleration information. By conducting such correction, in the to-be-described setting process of road face image candidate area using the vanishing point information, an image portion displaying the road face can be effectively set as a road face image candidate area.

Further, the reference straight line information can be corrected as follows. The reference straight line information includes gradient $\alpha$ of the reference straight line, and an intercept $\beta$, which is a point in the image upper-lower direction position where the left end of image and the reference straight line intersect. For example, when the vehicle 100 is in the acceleration, weight is loaded to the rear side of the vehicle 100, and the vehicle 100 has an attitude that a front side of the vehicle 100 is directed to an upward in the vertical direction. With this attitude change, the road face image portion displaying the road face overall shifts to a lower side of the image. To shift the extraction range at a lower side of the image in line with such attitude change, the intercept $\beta$ of the reference straight line, which is used as a base of the concerned extraction range can be corrected based on the acceleration information. Further, for example, when the vehicle 100 is in the deceleration time, similarly, the intercept $\beta$ of the reference straight line can be corrected based on the deceleration information. By conducting such correction, in the process of extracting parallax pixel data within the extraction range, an image portion displaying the road face can be effectively set as a road face image candidate area. Because the reference straight line information can be corrected using the acceleration/deceleration information, the $\delta$ value defining the extraction range can be determined without an effect of acceleration/deceleration of the vehicle 100. Therefore, the extraction range of the second V map information generation processing can be set narrower compared to the extraction range set by using a fixed reference straight line as a reference used in the above described first V map information generation processing, with which processing time can be shortened and the road face detection precision can be enhanced.

As to the above described first and second V map information generation processing, before generating the V map information, the parallax image data corresponding to the road face image portion is extracted. Alternatively, V map component corresponding to the road face image portion can be extracted after generating the V map information.

A description is given of process conducted in the road face shape detection unit 134. When the V map information is generated by the V map generation unit 133, the road face shape detection unit 134 conducts linear approximation processing based on feature indicated by a combination of parallax value and y direction position (V map component) corresponding to the road face. Specifically, the linear approximation is conducted for high frequency points on the V map indicating a feature that parallax values become smaller as closer to the upper part of the captured image. If the road face is flat, approximation can be conducted using one straight line with enough precision. But if the road face condition changes in the moving direction of the vehicle 100 due to slope or the like, approximation using one straight line cannot be conducted with enough precision. Therefore, in an example embodiment, depending on parallax values of V map information (parallax histogram information), parallax values may be segmented into two or more parallax value segments, and linear approximation is conducted for each one of parallax value segments separately.

FIG. 17 is a block diagram showing a process in the road face shape detection unit 134. Upon receiving V map information (parallax histogram information) output from the V map generation unit 133, in the road face shape detection unit 134, based on a feature indicated by V map component corresponding to the road face, a road face candidate point detection unit 134A detects high frequency points on the V map indicating a feature that parallax values become smaller as closer to the upper part of the captured image as a road face candidate points, which may be referred to as selected targets to be processed.

In an example embodiment, the detection process of road face candidate point by the road face candidate point detection unit 134A can be conducted as follows. Specifically, V map information (parallax histogram information) is segmented into two or more parallax value segments depending on parallax values, and based on a determination algorism corresponding to each of the parallax value segments, road face candidate points (selected targets to be processed) for each of the parallax value segments are determined. Specifically, for example, V map is segmented into two segments in the X-axis direction with respect to a parallax value corresponding to a given reference distance, which means a segment having greater parallax values and a segment having smaller parallax values are set. Then, different detection algorisms for detecting road face candidate points are used for different segments to detect road face candidate points. As for a shorter distance area having greater parallax values, a first road face candidate point detection process is conducted, which is to be described later. As for a longer distance area having smaller parallax values, a second road face candidate point detection process is conducted, which is to be described later.

The road face candidate point detection process is changed between the shorter distance area having greater parallax values and longer distance area having smaller parallax values due to the following reasons.

As shown in FIG 7, in the captured image capturing ahead of the vehicle 100, the occupation area of road face image area at the shorter distance road face becomes great, and the number of pixels corresponding to the road face is great, with which frequency on the V map becomes great. By contrast, the occupation area of road face image area at the longer distance road face becomes small, and the number of pixels corresponding to the road face is small, with which frequency on the V map is small. Therefore, frequency value of points corresponding to the road face on the V map becomes small at the longer distance, and becomes great at the shorter distance. Therefore, for example, if the same value such as the same frequency threshold is used for road face candidate point detection in the shorter distance area and longer distance area, road face candidate points can be effectively detected for the shorter distance area, but road face candidate points may not be effectively detected for the longer distance area, with which road face detection precision for the longer distance area decreases. By contrast, if a value that can effectively detect a road face candidate point for the longer distance area is used for detection of the shorter distance area, noise may be detected for the shorter distance area, with which road face detection precision for the shorter distance area decreases. Therefore, in an example embodiment, V map is segmented into the shorter distance area and longer distance area, and the road face candidate points are detected using different values and detection methods suitable for each segment, with which road face detection precision for each area can be maintained at a high level.

(First road face candidate point detection process)

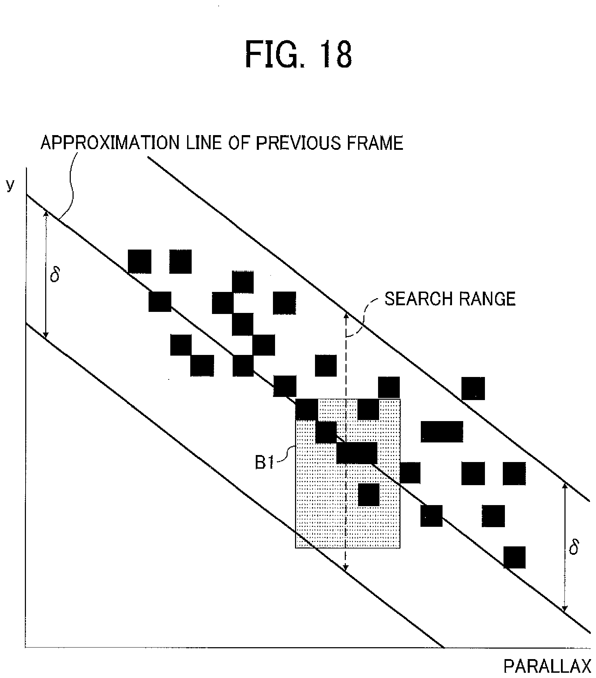

A description is given of one example of a road face candidate point detection process or method (hereinafter, first road face candidate point detection process) according to an example embodiment. FIG. 18 shows a chart explaining a detection method by road face candidate point detection process (i) for the first road face candidate point detection process.

In the road face candidate point detection process (i), for example, a coordinate block of 5×7 using coordinates (d, y) as the center is used. For each parallax value "d" on the V map in the coordinate block of 5×7, the value of y is varied within a given search range to obtain a total of frequency values of the coordinate block.

Then, a maximum value of total of frequency values among the total of frequency values of each of coordinate block obtained for the same parallax value "d" is multiplied by a given coefficient (e.g., 1/2) to set a frequency threshold for the concerned parallax value "d." Then, based on frequency threshold set for each of the parallax values "d", among coordinate blocks having a total of frequency values for the concerned parallax value "d" greater than the frequency threshold, a coordinate block having the greatest y value is identified, and a center coordinate of this coordinate block is determined as a road face candidate point for the concerned parallax value "d."

The search range for changing y value of coordinate block is determined based an approximated straight line detected by the road face shape detection unit 134 using images captured previously such as images captured in the past or the like. Specifically, coordinate (d, yp) on the approximated straight line of the captured image of a previous frame is set as the center of the search range, and a range from "yp - $\delta$" to "yp + $\delta$" is set as the search range. With this configuration, the search range that is required to be searched for y value can be set narrower, with which the road face candidate point detection process can be devised with high speed.

Further, parameter $\delta$ for determining the search range may deviate a little between the approximated straight line featuring the road face obtained from the previous frame and an approximated straight line currently obtained due to fluctuation of the attitude of the vehicle 100 by vibration, acceleration and deceleration or change of slope condition of road face such as change to upward slope and downward slope. Therefore, the parameter $\delta$ may be set to a suitable value in view of such conditions. However, if the parameter $\delta$ is set too great, the search range becomes too broad, with which points other than the road face may be detected as road face candidate points. Further, if the previous frame has no approximated straight line, an approximated straight line set as an initial value can be used.

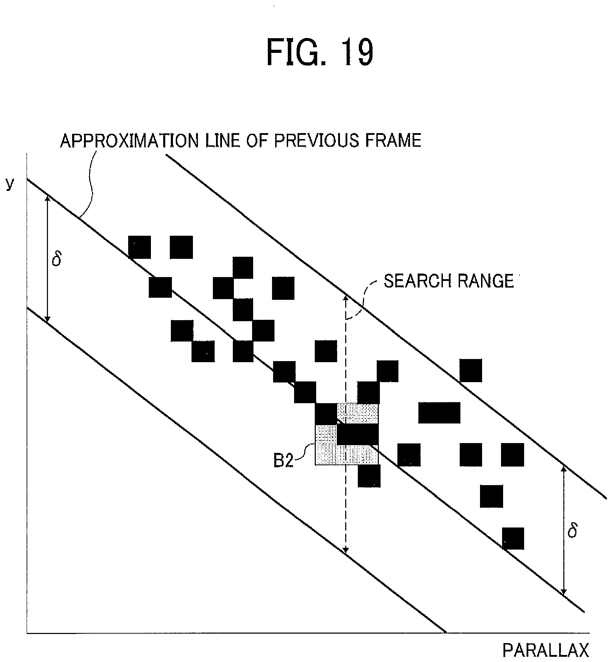

FIG. 19 shows a chart explaining a detection method by the road face candidate point detection process (ii) in the first road face candidate point detection process. In the road face candidate point detection process (ii), as for each of the parallax values "d" on the V map, y value of coordinate (d, y) is changed within a given search range to search following cases. In one case, coordinates having a frequency value greater than a given first threshold are searched. Or in another case, coordinates having a frequency value greater than zero and also at the first threshold or less, and further a total of frequency value of adjacent eight points surrounding the concerned coordinate greater than a second threshold are searched. Then, among the coordinate points obtained by searching for each of the parallax values "d", a coordinate block having the greatest y value is identified. Then, this coordinate block having the greatest y value is determined as a road face candidate point for the concerned parallax value "d." The search range is set as same as the road face candidate point detection process (i).

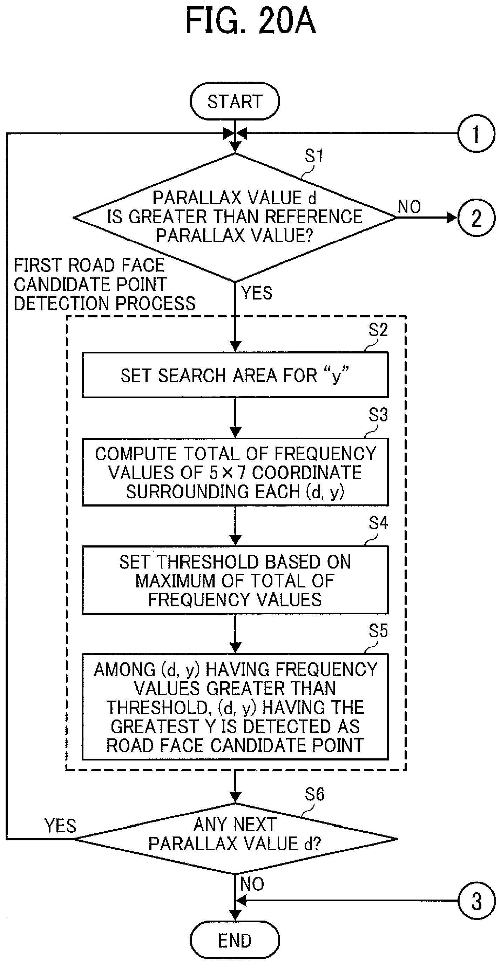

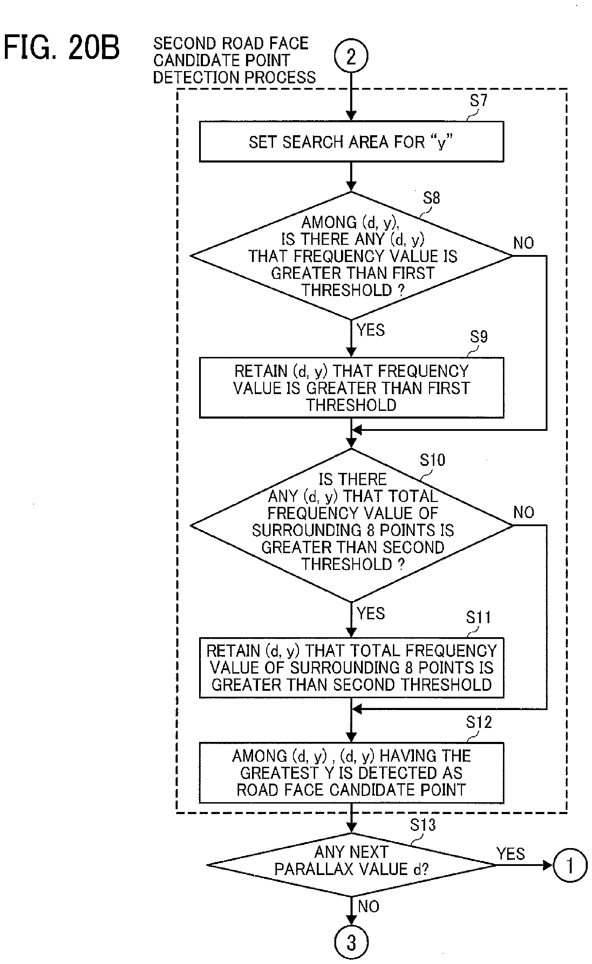

FIGs. 20A and 20B is a flowchart showing the steps of a process of road face candidate point detection process by the road face candidate point detection unit 134A for the first road face candidate point detection process. For example, as to the input V map information, road face candidate points are detected for each parallax value "d" starting from a parallax value "d" having the greatest value to detect a road face candidate point (y, d) for each parallax value "d."

If the parallax value "d" is greater than a reference parallax value corresponding to a given reference distance (step S1: YES), the above described road face candidate point detection process (i) is conducted. Specifically, a search range for "y" such as "y-6" to "y+$\delta$" is set corresponding to the concerned parallax value "d" (step S2), and then total of frequency values of each coordinate block composed of each concerned coordinate (d, y) and $5 \times 7$ coordinates surrounding the concerned coordinate (d, y) is computed (step S3). Then, a maximum value among the total of frequency values of the coordinate block is multiplied with 112 to set as a threshold (step S4). Among coordinate blocks having the total of frequency values greater than the threshold, a center coordinate of a coordinate block having the maximum y value is detected as a road face candidate point for the concerned parallax value "d" (step S5).

The road face candidate point detection process (i) is repeatedly conducted until the parallax value "d" becomes the reference parallax value or less (step S6). When the parallax value "d" becomes the reference parallax value or less, the above mentioned road face candidate point detection process (ii) is conducted for road face candidate point detection. In the road face candidate point detection process (ii), a search range "y-$\delta$" to "y+$\delta$" is set for y corresponding to the concerned parallax value "d" (step S7).

If frequency value of each (d, y) coordinate in this search range is greater than a first threshold (step S8: YES), such coordinate having frequency value greater than the first threshold is retained as a candidate of road face candidate point (step S9). If a coordinate having a frequency value greater than the first threshold does not exist (step S8: NO), the process proceed to step S10.

Further, if the total of frequency values of eight points surrounding the each (d, y) coordinate in this search range is greater than a second threshold (step S10: YES), such point is similarly retained as a candidate of road face candidate point (step S11).

If the eight points surrounding the each (d, y) coordinate and having total of frequency values greater than the second threshold does not exist (step S10: NO), the process proceeds to step S12. Then, among the retained road face candidate points, a coordinate point (d, y) having the maximum y value is detected as a road face candidate point for the concerned parallax value "d" (step S12). This road face candidate point detection process (ii) is repeatedly conducted until the parallax value "d" exhausted (step S13).

(Second road face candidate point detection process)

A description is given of another example of road face candidate point detection process according to an example embodiment (hereinafter, second road face candidate point detection process).

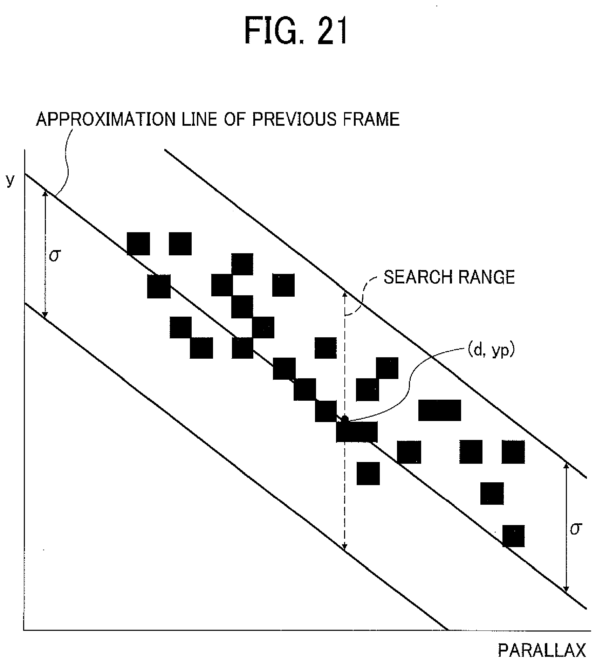

FIG. 21 is a chart for explaining a detection method for the road face candidate point detection process (i) and the road face candidate point detection process (ii) in the second road face candidate point detection process.

In the road face candidate point detection process (i), as for each parallax value "d," V map component (d, y, f) included in the V map information is searched within a given search range by changing positions in the y direction. Specifically, among V map component (d, y, f) included in the V map information, a V map component having a frequency value greater than a first frequency threshold and having the greatest frequency value f is searched, and this searched V map component is determined as a road face candidate point for the concerned parallax value "d." In this process, the first frequency threshold is preferably set to a lower value so that V map component corresponding to the road face may not be missed. As above described, because the V map generation unit 133 extracts V map component corresponding to the road face, even if the first frequency threshold is set to a lower value, a probability of determining V map component not corresponding to the road face as a road face candidate point can be reduced.

The search range for changing y value for each parallax value "d" corresponds to the extraction range set for the above described V map generation unit 133, which means a range of $\pm\delta$ in the image upper-lower direction is set using an image upper-lower direction position "yp" of the reference straight line as the center. Specifically, a range from "yp-$\delta$" to "yp+$\delta$" is used as the search range. With this configuration, a y-value range that is required to be searched as y value can be set narrower, with which the road face candidate point detection process can be devised with high speed.

The road face candidate point detection process (ii) can be conducted as similar to the above described road face candidate point detection process (i) except using the second frequency threshold instead of the first frequency threshold. In the road face candidate point detection process (ii), as to each of parallax value "d," V map component is searched by changing positions in the y direction within a given search range. Specifically, V map information includes a plurality of V map components (d, y, f). Among the V map components (d, y, f) included in the V map information, V map component (d, y, f) having a frequency value f greater than the second frequency threshold and further having the greatest frequency value f is searched, and this searched V map component is determined as a road face candidate point for the concerned parallax value "d.

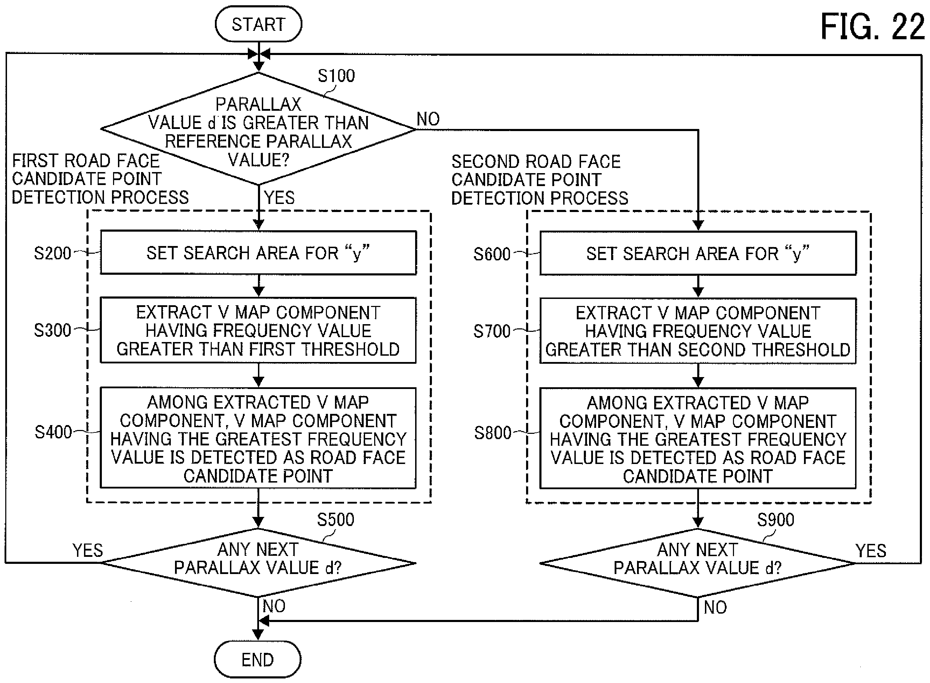

FIG. 22 is a flowchart showing the steps of a process of road face candidate point detection process conducted by the road face candidate point detection unit 134A.

For example, as to the input V map information, road face candidate points are detected for each parallax value "d" starting from a parallax value "d" having the greatest value to detect a road face candidate point (y, d) for each parallax value "d."

If the parallax value "d" is greater than a reference parallax value corresponding to a given reference distance (step S1: YES), the above described road face candidate point detection process (i) is conducted. Specifically, a search range for "y" such as "yp-$\delta$" to "yp+$\delta$" corresponding to the concerned parallax value "d" is set (step S200), and then V map component (d, y, f) within the search range and having a frequency value f greater than the first frequency threshold is extracted (step S300). Then, among the extracted V map components, V map component (d, y, f) having the maximum frequency value f is detected as a road face candidate point for the concerned parallax value "d" (step S400)

The road face candidate point detection process (i) is repeatedly conducted until the parallax value "d" becomes the reference parallax value or less (step S500). When the parallax value "d" becomes the reference parallax value or less (step S1: NO), the above described road face candidate point detection process (ii) is conducted for the road face candidate point detection. In the road face candidate point detection process (ii), a search range for y such as "yp-$\delta$" to "yp+$\delta$" corresponding to the concerned parallax value "d" is set (step S600). Then, V map component (d, y, f) within the search range and having a frequency value f greater than the second frequency threshold is extracted (step S700). Then, among the extracted V map components, V map component (d, y, f) having the maximum frequency value f is detected as a road face candidate point for the concerned parallax value "d" (step S800). This road face candidate point detection process (ii) is repeatedly conducted until the parallax value "d" does not exist any more (step S900).

By conducting the above road face candidate point detection process using the road face candidate point detection unit 134A, the road face candidate point (selected targets to be processed or extraction processing targets) is detected for each parallax value "d."

Then, a segment line approximation unit 134B conducts linear approximation processing for the road face candidate points to obtain an approximated straight line on V map. If the road face is flat, approximation for entire parallax values on the V map can be conducted using one straight line with enough precision. But if the road face condition changes in the moving direction of the vehicle 100 due to slope condition or the like, approximation using one straight line cannot be conducted with enough precision. Therefore, in an example embodiment, V map information (parallax histogram information) is segmented into two or more parallax value segments depending on parallax values, and linear approximation is conducted for each one of parallax value segments separately.

The linear approximation processing can be conducted using least squares approximation, but the linear approximation processing can be conducted more correctly using other approximation such as RMA (Reduced Major Axis). The least squares approximation can be computed correctly on an assumption that X-axis data has no error and Y-axis data has error. However, when considering a feature of road face candidate point detected from the V map information, Y-axis data "y" of each V map component included in the V map information may indicate a correct position on an image, but X-axis data of each V map component such as the parallax value "d" may include error. Further, in the road face candidate point detection process, searching of road face candidate point is conducted along the Y-axis direction to detect a V map component having the maximum y value as a road face candidate point. Therefore, the road face candidate point may also include error in the Y-axis direction. Therefore, V map component set as the road face candidate point may include error in the X-axis direction and the Y-axis direction, which means the assumption of the least squares approximation may not be established. Therefore, reduced major axis (RMA) compatible with two variables (d and y) can be effectively used.

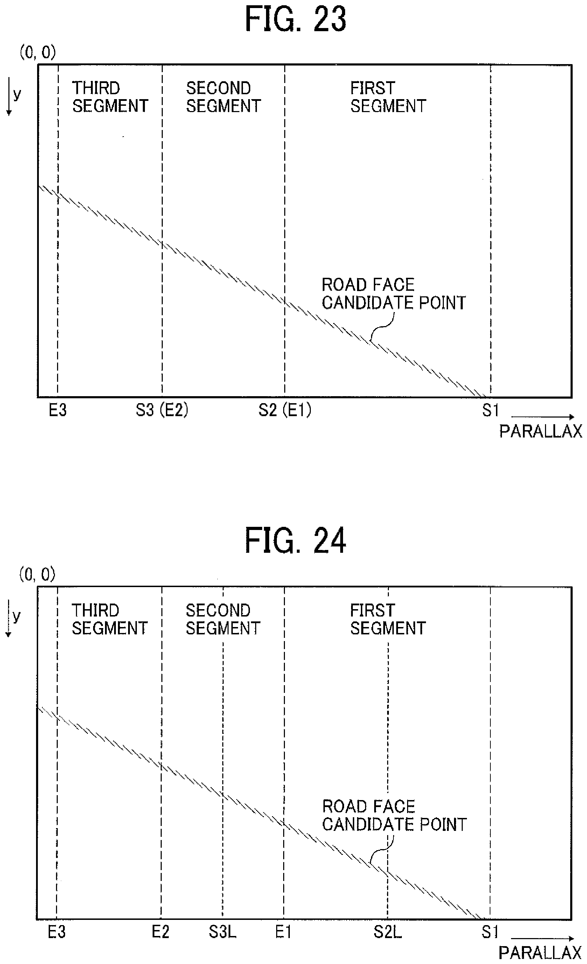

FIG. 23 shows an example case of segmenting V map into three segments (parallax value segment). In this example case, V map information (parallax histogram information) is segmented into, for example, three parallax value segments depending on parallax values. Specifically, in the order from great to small parallax values, a first segment, a second segment, and a third segment are set. If the V map information is segmented into a plurality of segments having equal range using the distance as a reference, a segment width (parallax value range) becomes narrower for a segment having a longer distance on the V map, in which linear approximation precision deteriorates. Further, if the V map information is segmented into a plurality of segments equally using the parallax value as a reference, a segment width (parallax value range) becomes narrower for a segment having a shorter distance on the V map, in which the first segment becomes too narrow, and the first segment becomes useless.

In an example embodiment, a segmentation rule is set, in which the first segment is set with a width corresponding to a pre-set fixed distance, and the second segment and the third segment are set with a width in view of a previous segment right before a concerned segment (e.g. the first segment is right before the second segment). Specifically, for example, a width corresponding to a distance of the previous segment right before the second segment is multiplied by a constant number (e.g., two), and is set as a width of the second segment. With this segmentation rule, a suitable width (parallax value range) can be set for any segments. With this segmentation rule, a distance range becomes different for each of the segments, but the number road face candidate points used for the linear approximation processing for each of the segments can be equalized, with which the linear approximation processing can be conducted effectively at any segments.

In an example case shown in FIG. 23, the first segment and the second segment are continuous without overlapping the segments, and the second segment and the third segment are continuous without overlapping the segments, but each segment can be set by overlapping with other segment. For example, as shown in FIG. 24, the start point S2L of the second segment can be set at a middle point between the start point S1 and the end point E1 of the first segment while the end point E2 of the second segment is same as FIG. 23. Further, the start point S3L of the third segment can be set at a middle point between the end point E1 of the first segment and the end point E2 of the second segment while the end point E3 of the third segment is same as FIG. 23.

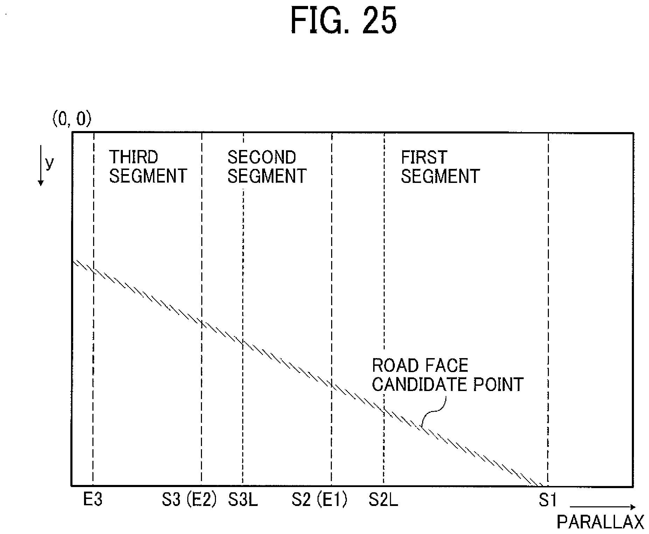

Further, for example, as shown in FIG. 25, the start point S2L of the second segment can be set at a 3 : 1 internally dividing point of the first segment while the end point E2 of the second segment is same as FIG. 23. Further, the start point S3L of the third segment can be set at a 3 : 1 internally dividing point between the end point E1 of the first segment and the end point E2 of the second segment while the end point E3 of the third segment is same as FIG. 23.

By changing a distance range depending on the segment and overlapping the segments, the number of candidate points used for the linear approximation processing for each segment can be equalized, with which precision of the linear approximation processing for each segment can be enhanced. Further, by overlapping segments, correlation of the linear approximation processing between each of the segments can be enhanced.

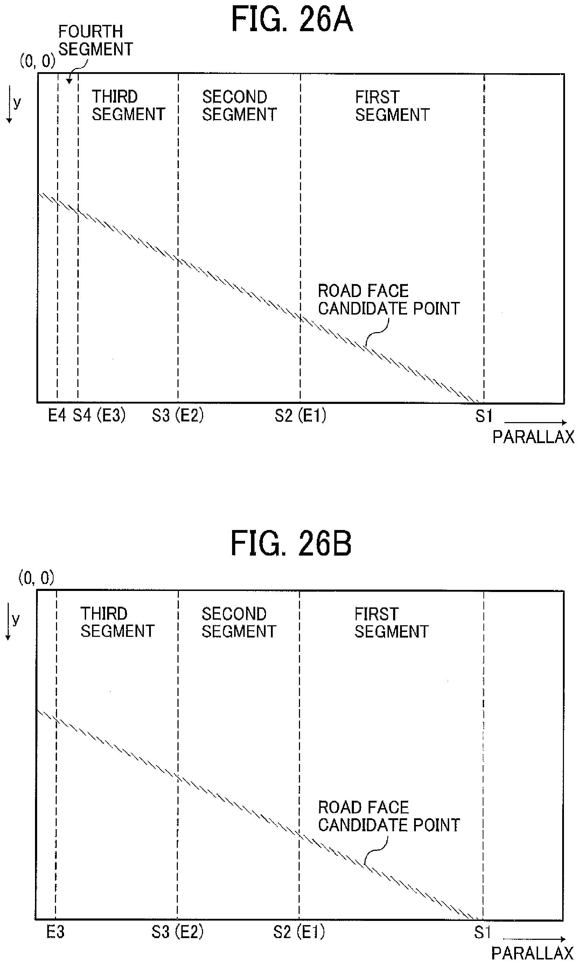

Further, if segments are set in the order from great to small parallax values using the above described segmentation rule, as shown in FIG. 26A, for example, a last segment such as a fourth segment may be set with a width (parallax value range) narrower than a width that may be required for one segment. In this case, as shown in FIG. 26B, the fourth segment, which is the last segment, can be combined with a previous segment (i.e., third segment) and the combined one segment can be used as a third segment.

(First segment linear approximation processing)

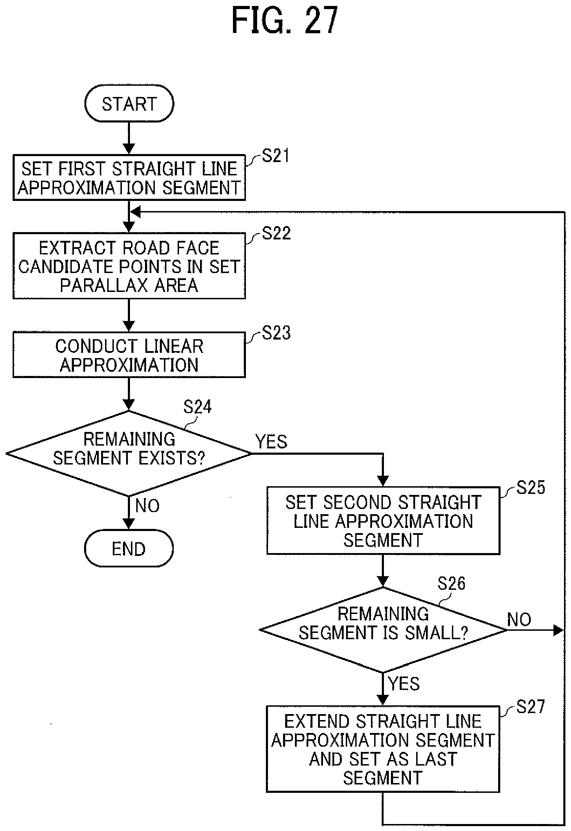

FIG. 27 is a flowchart showing the steps of an example process of segment linear approximation processing (hereinafter, first segment linear approximation processing") conducted by the segment line approximation unit 134B.

In this first segment linear approximation processing, upon receiving data of road face candidate point of each parallax value "d" output from the road face candidate point detection unit 134A, the segment line approximation unit 134B sets the first segment, which have the shortest distance from the vehicle (segment having the greatest parallax value) (step S21).

Then, the segment line approximation unit 134B extracts road face candidate points corresponding to each parallax value "d" in this first segment (step S22), and conducts the linear approximation processing for the extracted road face candidate points (step S23).

Then, if a remaining segment exists (step S24: YES), the segment line approximation unit 134B sets a next segment (second segment) having a width corresponding to a distance obtained by multiplying the distance of the previous segment (such as first segment) with a given constant number, wherein the distance of the previous segment corresponds to a width of the previous segment (step S25).

Then, the segment line approximation unit 134B determines whether a remaining segment that remains after setting the segment (second segment) is smaller than a next setting segment (third segment) (step S26). In this case, the remaining segment is a segment between the minimum parallax value E2 of the second segment and a minimum parallax value (effective on V map) required for linear approximation, and the remaining segment is compared with the next setting segment. If it is determined that the remaining segment is not smaller than the next setting segment, the segment line approximation unit 134B extracts road face candidate points corresponding to each parallax value "d" in the second segment (step S22), and conducts the linear approximation processing for the extracted road face candidate points (step S23).

By repeating the setting of segments sequentially and the linear approximation processing for the set segments as above described, at last at step S26, it is determined that the remaining segment is smaller than a next setting segment (step S26: YES). In this case, the set segment is extended to include the concerned remaining segment, and this extended segment is set as a last segment (step S27). Then, the segment line approximation unit 134B extracts road face candidate points corresponding to each parallax value "d" in this last segment (step S22), and conducts the linear approximation processing for the extracted road face candidate points (step S23). With this configuration, it is determined that no remaining segment exists at step S24 (step S24: NO), and then the segment line approximation unit 134B ends the segment linear approximation processing.

(Second segment linear approximation processing)

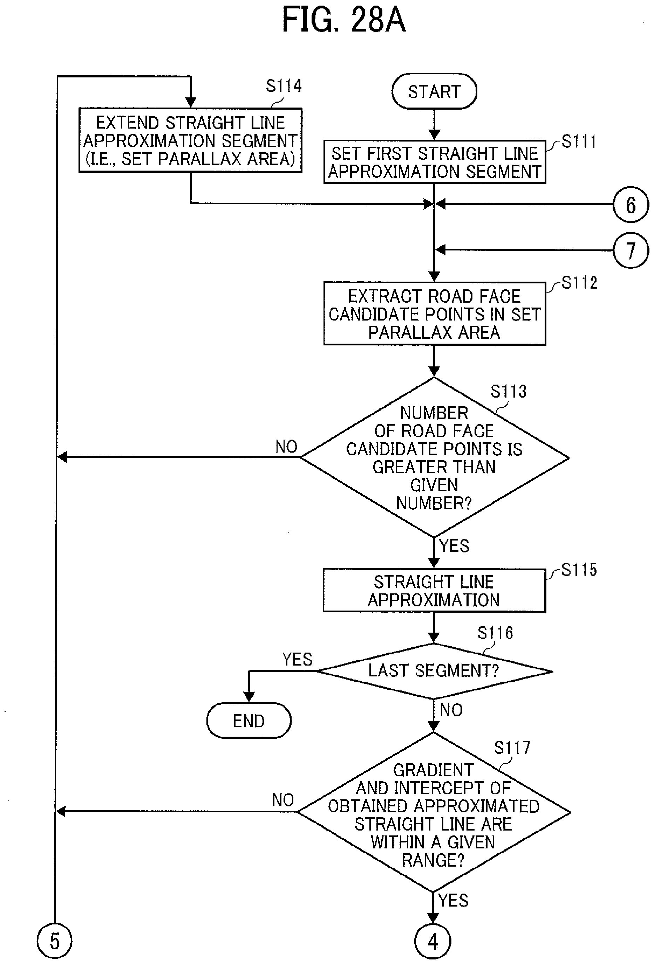

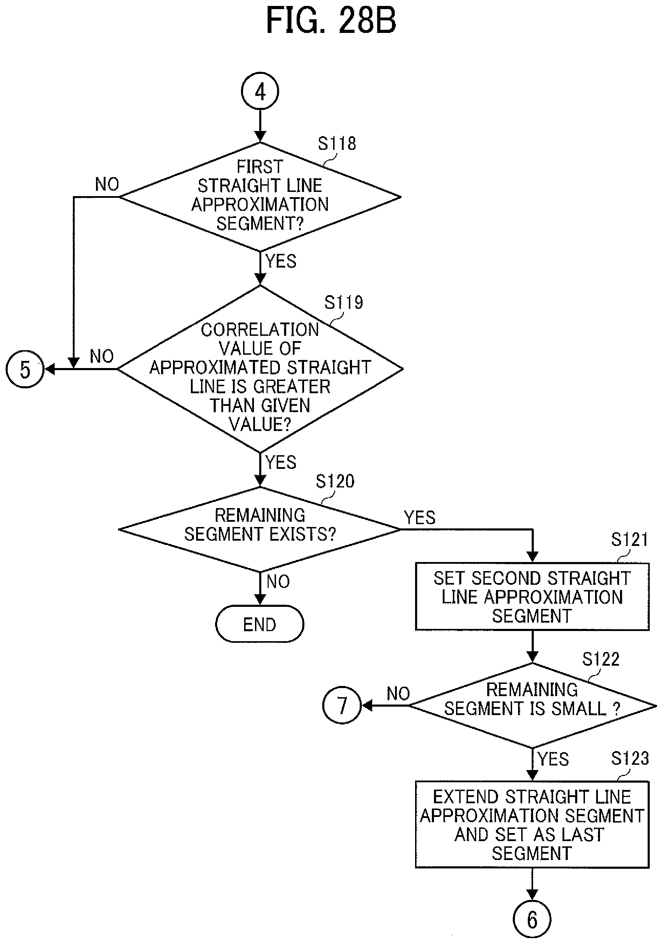

FIGs. 28A and 28B are a flowchart showing the steps of another example process of segment linear approximation processing (hereinafter, second segment linear approximation processing) conducted by the segment line approximation unit 134B.

In this second segment linear approximation processing (example 2 例 2) ,upon receiving data of road face candidate point of each parallax value "d" output from the road face candidate point detection unit 134A, the segment line approximation unit 134B sets the first segment, which have the shortest distance from the vehicle (segment having the greatest parallax value) (step S111).

Then, the segment line approximation unit 134B extracts road face candidate points corresponding to each parallax value "d" in this first segment (step S112).

If the extracted number of road face candidate points is a given number of less (step S113: NO), the concerned first segment is extended for a given parallax value (step S114).

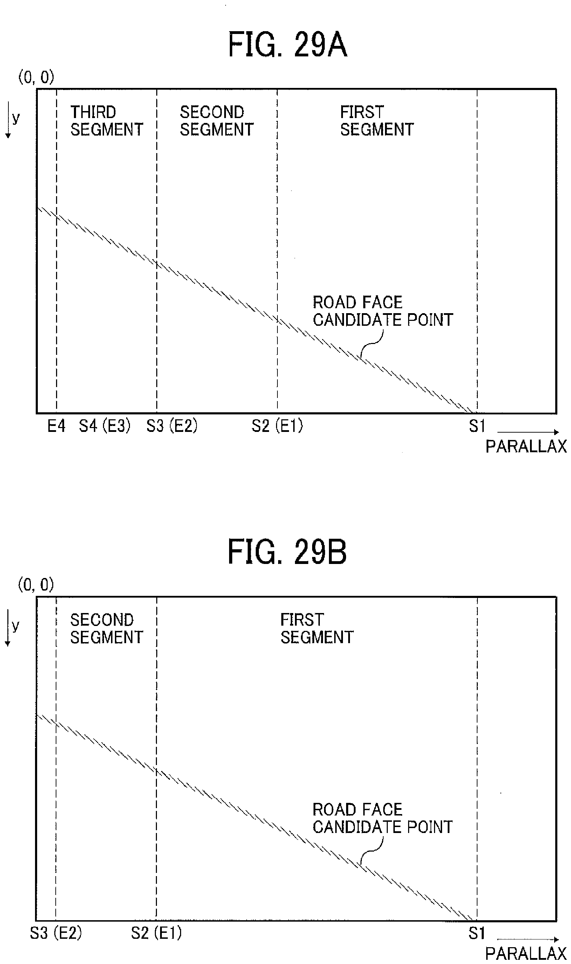

Specifically, an original first segment and an original second segment shown in FIG. 29A are combined, and the combined segment is prepared as a new one segment, which is referred to as a first segment (extended first segment) as shown in FIG. 29B. In this case, an original third segment becomes a new second segment. Then, the segment line approximation unit 134B extracts road face candidate points corresponding to each parallax value "d" in the extended first segment again (step S112).

If the extracted number road face candidate points becomes greater than a given value (step S113: YES), the linear approximation processing is conducted for the extracted road face candidate points (step S115).

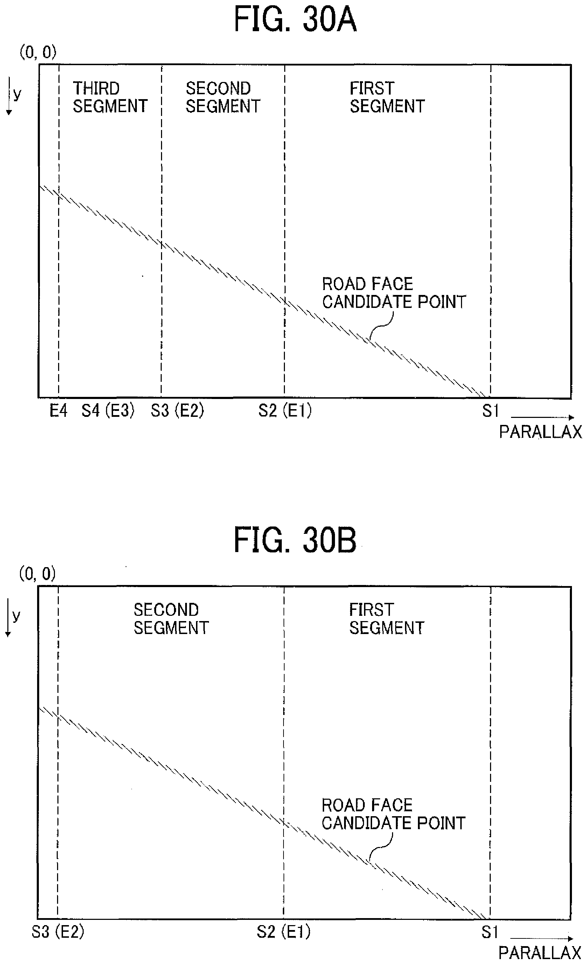

When a segment other than the first segment is extended such as when the second segment is extended, the original second segment and the original third segment shown in FIG. 30A are combined to prepare a new one segment, which is referred to as a new second segment (extended second segment) as shown in FIG. 30B.

Upon conducting the linear approximation processing as described above, reliability determination processing is conducted for an approximated straight line obtained by the linear approximation processing.

In this reliability determination processing, at first, it is determined whether the gradient and the intercept of the obtained approximated straight line are within a given range (step S117). If it is determined that the gradient and the intercept are not within the given range (step S117: NO), the concerned first segment is extended for a given parallax value (step S114), and the linear approximation processing is conducted for the extended first segment again (steps S112 to S115).

If it is determined that the gradient and the intercept are within the given range (step S17: YES), it is determined whether the segment having received the linear approximation processing is the first segment (step S118).

If it is determined that the segment having received the linear approximation processing is the first segment (step S118: YES), it is determined whether a correlation value of the approximated straight line is greater than a given value (step S119). If it is determined that the correlation value of the approximated straight line is greater than the given value, the concerned approximated straight line is determined as an approximated straight line of the concerned first segment.

If it is determined that the correlation value of the approximated straight line is the given value or less, the concerned first segment is extended for a given parallax value (step S114), and the linear approximation processing is conducted for the extended first segment again (steps S112 to S115), and the reliability determination processing is conducted again (steps S117 to S1 19). If it is determined that the segment having received the linear approximation processing is not the first segment (step S118: NO), the determination process for the correlation value of the approximated straight line (step S119) is not conducted.

Then, it is checked whether a remaining segment exists (step S120). If the remaining segment does not exist (step S120: NO), the segment line approximation unit 134B ends the segment linear approximation processing.

By contrast, if the remaining segment exists (step S120: YES), a next segment (e.g., second segment) is set, in which the next segment (e.g., second segment) is set with a width corresponding to a distance obtained by multiplying the distance corresponding to the width of the previous segment width with a constant number (step S121).

Then, the segment line approximation unit 134B determines whether a remaining segment that remains after setting one segment (second segment) is smaller than a next setting segment (third segment) (step S122). If it is determined that the remaining segment is not smaller than the next setting segment, the segment line approximation unit 134B extracts road face candidate points corresponding to each parallax value "d" in the concerned second segment (step S122: NO), and conducts the linear approximation processing for the extracted road face candidate points (step S112 to S115), and the reliability determination processing is conducted (steps S117 to S119).

By repeating the setting of segments sequentially and the linear approximation processing and reliability determination processing for the concerned segment as above described, at last at step S122, it is determined that the remaining segment is smaller than a next setting segment (step S122: YES). In this case, the set segment is extended to include the concerned remaining segment, and this extended segment is set as a last segment (step S123). Then, the segment line approximation unit 134B extracts road face candidate points corresponding to each parallax value "d" in this last segment (step S112), and conducts the linear approximation processing to the extracted road face candidate points (step S115). Then, it is determined that the concerned segment is the last segment (step S116: YES), with which the segment line approximation unit 134B ends the segment linear approximation processing.

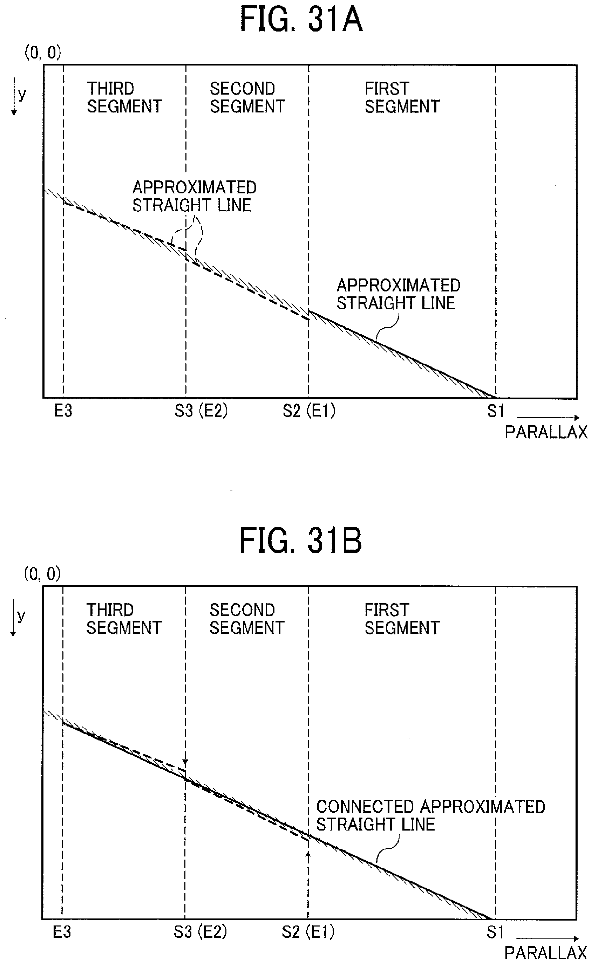

Typically, a plurality of approximated straight lines obtained by conducting the linear approximation processing to each of segments by the segment line approximation unit 134B are not continuous at the segment boundary as shown in FIG. 31A. Therefore, in an example embodiment, to set approximated straight lines of each of the segments as a continuous line at the segment boundary, the approximated straight lines output from the segment line approximation unit 134B are corrected so that approximated straight lines of each of the segments become continuous at the segment boundary as shown in FIG. 31B. Specifically, for example, as for segments of the second segment and subsequent segment, the start point of approximated straight line of one segment (side where parallax value is greater) is shifted to the end point of approximated straight line of the previous segment. Further, for example, two end points of approximated straight lines of two adjacent segments at one segment boundary are corrected, in which two end points of approximated straight lines of two adjacent segments are corrected to a middle point of the two end points so than the two approximated straight lines are connected at the middle point.

Upon obtaining information of approximated straight line on the V map by the road face shape detection unit 134 as described above, a road face height table computing unit 135 conducts road face height table computing processing, in which road face height, which is a relative height from the road face right below the vehicle 100 is computed and tabled.

Based on the approximated straight line information on the V map generated by the road face shape detection unit 134, a distance to each road face portion displayed in each line area (each position in the image upper-lower direction) of a captured image can be computed.

Further, the virtual plane extended in the moving direction of the vehicle 100 parallel to the road face right below the vehicle 100 is assumed, and the virtual plane is composed of a plurality of partial faces. It can be pre-determined which line area in the captured image displays each of the partial faces of the virtual plane in the moving direction of the vehicle 100, and the virtual plane (reference road face) is expressed by a straight line (reference straight line) on the V map.

By comparing the approximated straight line output from the road face shape detection unit 134 with the reference straight line, height information of each road face portion ahead of the vehicle 100 is obtained. In a simple method, height information of road face portion existing ahead of the vehicle 100 can be computed based on Y-axis position of the road face portion on the approximated straight line output from the road face shape detection unit 134, and distance to the road face portion obtained from a parallax value corresponding to the Y-axis position. The road face height table computing unit 135 prepares a table of height of each road face portion obtained from the approximated straight line for a required parallax range.

Height of object from the road face, displayed at one point in the captured image, can be computed as follows. When the object displayed in the captured image has y' for Y-axis position at one parallax value "d," the height of object displayed in the captured image from the road face can be computed as "y' -y0", wherein y0 is the Y-axis position on the approximated straight line for the concerned parallax value "d." The height H of object from the road face, corresponding to the coordinates (d, y') on the V map, can be computed using the following formula (2). In the following formula (2), "z" is distance computed from the parallax value "d" (z = BF/(d-offset)), and "f" is a value obtained by converting the unit of focal distance of the camera to the same unit used for (y'-y0). "BF" is a value obtainable by multiplying a base length of the stereo camera and focal distance of the stereo camera, and "offset" is a parallax value when an object at infinity is captured.

$$H \;=\; z \times (y'\text{-}y0)/f \qquad (2)$$

A description is given of a U map generation unit 136. The U map generation unit 136 conducts U map generation processing that generates U map. Each parallax pixel data included in the parallax image data includes (x, y, d), which is a combination of x direction position, y direction position and parallax value "d" respectively set on the X-axis, Y-axis, and Z-axis. By setting x for X-axis, d for Y-axis and frequency for Z-axis, a X-Y two dimensional histogram can be generated, which is referred to as a U map.

In an example embodiment, based on the height information of each road face portion tabled by the road face height table computing unit 135, the U map generation unit 136 generates a U map for parallax image points (x, y, d) existing in a given height range, wherein the height H from the road face is, for example, within a given height range (e.g., from 20 cm to 3m). In this configuration, an object existing in the given height range from the road face can be effectively extracted. For example, the U map may be generated for parallax image points (x, y, d) corresponding to the lower fifth-sixth (5/6) of the image area of the captured image because the upper one-sixth (1/6) of the captured image displays sky in most cases, which means a target object may not be displayed in the upper one-sixth.

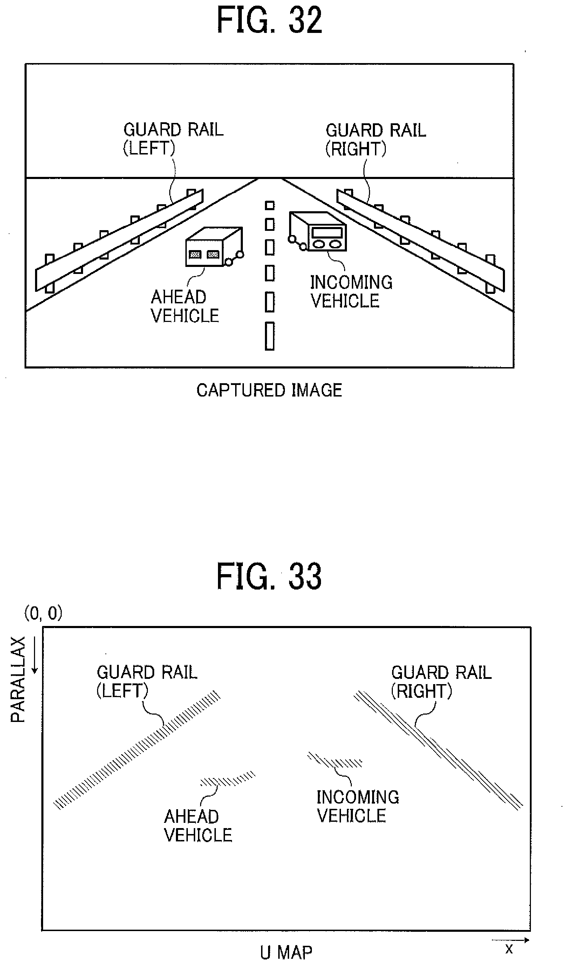

FIG. 32 is an example of a reference image captured by the first capturing unit 110A. FIG. 33 is a U map corresponding to the image of FIG. 32. In an example image shown in FIG. 32, guard rails exist at the left and right sides of the road face, and other vehicles such as one ahead vehicle and one incoming vehicle exist on the road face. In this example case, as shown in the U map of FIG. 33, high frequency points corresponding to the left and right guard rails are plotted as substantially straight lines extending from the left end and the right end to the center while directed to a upward direction in the image. Further, high frequency points corresponding to other vehicle are plotted as a line substantially parallel to the X-axis direction between the left and right guard rails.

Further, in a case that a side face of other vehicle is displayed in addition to a rear side of ahead vehicle or a front side of the incoming vehicle, parallax occurs in an image area displaying the same other vehicle. In this case, as shown in FIG. 33, high frequency points corresponding to other vehicle are plotted as a line substantially parallel to the X-axis direction and a line slanted to the X-axis direction, and these lines are connected.

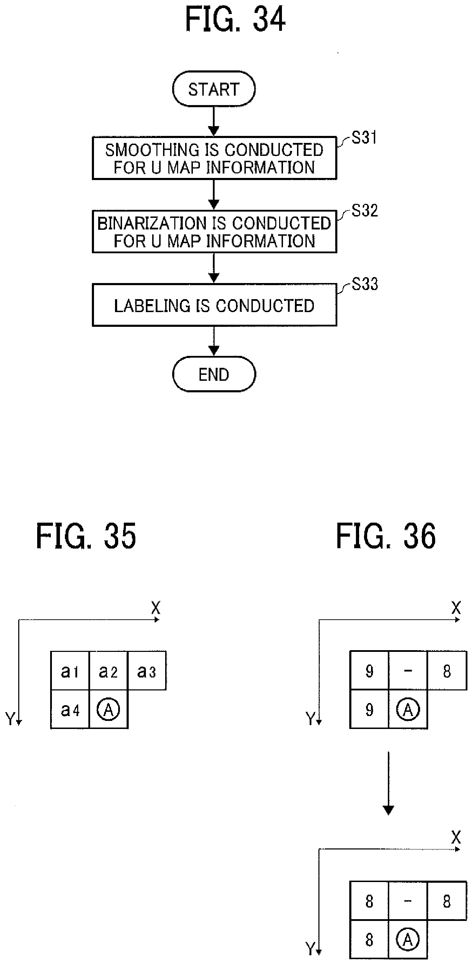

A description is given of an isolation area detection unit 137. FIG. 34 is a flowchart showing the steps of a process of conducted by the isolation area detection unit 137. In the isolation area detection unit 137, smoothing processing is conducted using U map information generated by the U map generation unit 136 (step S31), and then binarization processing is conducted (step S32). Then, labeling is conducted for coordinates having values (step S33), and then isolated area is detected. A description is given of each process hereinafter.

Because parallax values have variance due to computation error, and parallax values may not be computed for the entire pixels, an actual U map has noise, which is different from a schematic view of FIG. 33. Therefore, to remove noise and to identify a target object easily, the smoothing processing is conducted for the U map. Similar to the image smoothing processing, in the smoothing processing, a smoothing filter (e.g., simple average of $3\times3$ pixel) can be applied to the frequency values. With this configuration, the frequency of points on the U map, which may be noise, can be decreased, and the frequency of points of the target object becomes high compared to a surrounding area. Therefore, an isolated area can be detected easily at a later stage processing.

Based on the smoothed U map information, an isolated area having higher frequency compared to a surrounding area on the U map is detected. In this detection process, at first, the binarization processing is conducted for the U map. The binarization processing can use, for example, an adaptive binarization method disclosed in JP-4018310-B or the like. Each of target objects has difference in height, shape, and contrast with background. Therefore, isolated areas corresponding to each of the target objects may have greater frequency value or a smaller frequency value. Therefore, if the binarization processing is conducted using a single threshold, some isolated area may not be detected effectively (error detection). To prevent such error detection, the above described adaptive binarization method is preferably used. In the binarization processing, an area having higher frequency is set with "1" (black), and an area having lower frequency is set with "0" (white).

The above described points having the value of "1" (black) obtained by the binarization processing correspond to coordinates having frequency values greater than the binarization threshold. Based on connectivity of such points, labeling is conducted, in which an area having assigned with the same label is detected as one isolated area. A labeling method can be conducted as follows. For example, as shown in FIG. 35, in a case of labeling for a concerned coordinate A, if coordinates corresponding to positions $a_1$, $a_2$, $a_3$, $a_4$ around the concerned coordinate A (FIG. 35) are labeled already, the same label of the pixels $a_1$, $a_2$, $a_3$, $a_4$ is assigned to this concerned coordinate A. Further, if different labels are assigned to coordinates at the above described positions $a_1$, $a_2$, $a_3$, $a_4$ as shown in FIG. 36, a label having the smallest value is assigned to a coordinate of the concerned coordinate A and the coordinates of $a_1$, $a_2$, $a_3$, $a_4$.

The above obtained each isolated area has a width, which is a length in the X-axis direction in U map. Distance z between a target object displayed in the concerned isolated area and the vehicle 100 can be computed from a minimum parallax value "d" in the isolated area. By using the width of isolated area and the distance z, a width W of an object displayed in an image area corresponding to the concerned isolated area can be computed using the following formula (3).

$$W \ = \ z \times (xmax - xmin)/f \qquad (3)$$

An isolated area that the object width W is within a pre-set range is determined as an object candidate area.

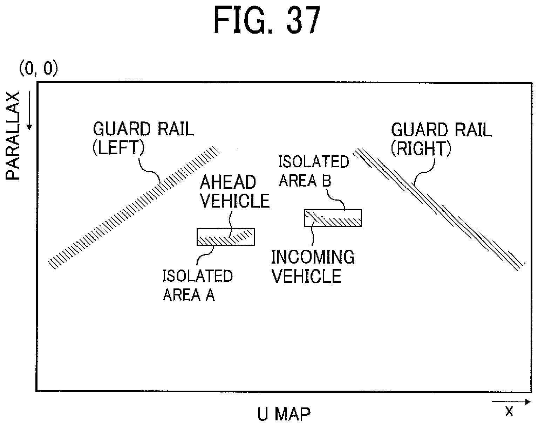

A description is given of a parallax-image corresponding area detection unit 138. As to the isolated area determined as the object candidate area by the isolation area detection unit 137, as shown in FIG. 37, a rectangle area that the concerned isolated area is inscribed is set, in which the width of the rectangle area (length in X-axis direction on U map) corresponds to a width of the target object corresponding to the concerned isolated area. Further, the height of the rectangle area corresponds to the depth of target object (length in the moving direction of the vehicle 100) corresponding to the concerned isolated area while the height of the target object corresponding to each isolated area is not determined yet. To obtain the height of the object corresponding to the isolated area (object candidate area), the parallax-image corresponding area detection unit 138 detects a corresponding area on the parallax image, which corresponds to the concerned isolated area.

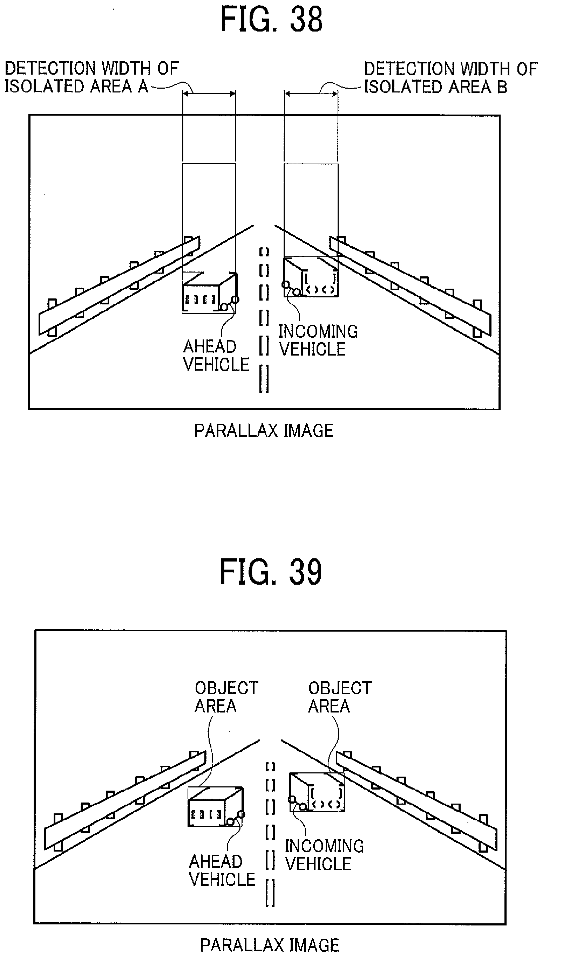

FIG. 38 is a schematic parallax image corresponding to the U map of FIG. 37. Based on the isolated area information output from the isolation area detection unit 137, the parallax-image corresponding area detection unit 138 scans the parallax image in a given range in the Y-axis direction for a width of the concerned isolated area corresponding to a range from xmin to xmax in the X-axis direction coordinates (detection width), and the parallax-image corresponding area detection unit 138 extracts pixels having parallax values in a range from dmin to dmax in the Y-axis direction coordinates (parallax value) of the U map as candidate pixels, wherein the range from dmin to dmax corresponds to the height of the rectangle area set for the concerned isolated area on the U map. In this scanning process, the scanning range (range of parallax image in Y-axis direction) starts, for example, from a position below a one-sixth of parallax image from the top end of the parallax image toward the lower part of the parallax image, and ends at a road face obtained based on the maximum parallax dmax.

Among the above extracted candidate pixels, a horizontal direction line where a given number or more of candidate pixels exist in the X-axis direction of the parallax image with respect to the above described detection width is determined as a concerned object candidate line. Then, the vertical direction scanning is conducted, and if other object candidate lines exist around the concerned object candidate line with a given density or more, the concerned object candidate line is determined as an object line.

An object area extraction unit 139 searches the object line, which is determined as above described, for each detection width corresponding to each isolated area. Based on the detected object lines, the object area extraction unit 139 determines a circumscribed rectangle of the detected object lines (line group) as an object area on the parallax image as shown in FIG. 39.

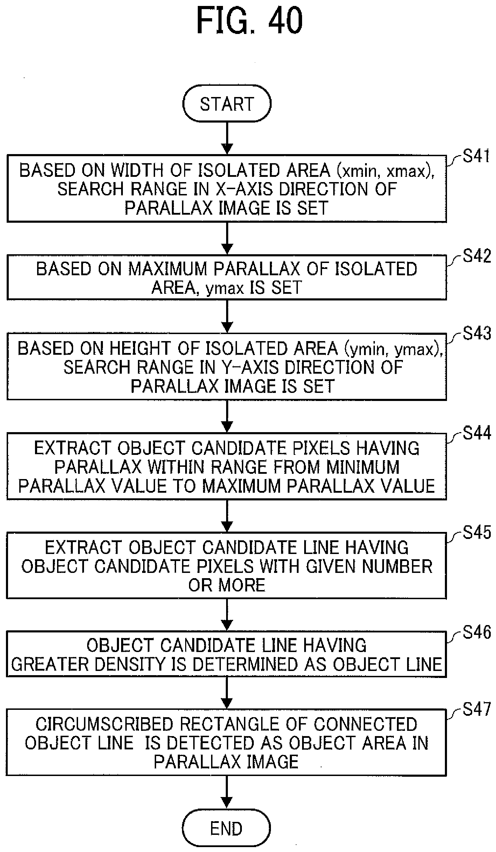

FIG. 40 is a flowchart showing the steps of a process conducted by the parallax-image corresponding area detection unit 138 and the object area extraction unit 139. At first, based on a width of each isolated area (island) on the U map, a search range in the X-axis direction of the parallax image is set (step S41). Further, based on a relationship of maximum parallax dmax and a height from road face (road face height) of each isolated area (island), a maximum search value ymax in the Y-axis direction of the parallax image is set (S42). Further, a minimum search value ymin is set with a given value corresponding to, for example, a position below the one-sixth of parallax image from the top end of the captured image. Parallax image is searched in the above set search range (S43) to extract pixels existing in a range from the minimum parallax value dmin to the maximum parallax value dmax in the concerned isolated area (island), and the extracted pixels are used as object candidate pixels (step S44). Then, a horizontal direction line where the object candidate pixels exist in the X-axis direction of the parallax image with a given number or more is extracted as an object candidate line (step S45). Then, the density of the object candidate line is computed. If the computed density is greater than a given value, the horizontal direction line is determined as an object line (step S46). Then, a circumscribed rectangle of the object line group composed of the determined object lines is set, and the circumscribed rectangle is detected as an object area in the parallax image (step S47).

A description is given of an object type classification unit 140. Based on the height of "yomax - yomin" of the object area extracted by the object area extraction unit 139, an actual height Ho of a target object displayed in an image area corresponding to the object area can be computed using the following formula (4), wherein "zo" is a distance between the vehicle 100 and an object corresponding to the concerned object area, which is computed from a minimum parallax value dmin of the concerned object area, and "f" is a value obtained by converting the unit of focal distance of the camera to the same unit of "yomax - yomin".

$$Ho = zo \times (yomax - yomin) / f \qquad (4)$$

Similarly, based on a width of "xomax-xomin" of the object area extracted by the object area extraction unit 139, an actual width Wo of the target object displayed in the image area corresponding to the concerned object area can be computed using the following formula (5).

$$Wo = zo \times (xomax - xomin) / f \qquad (5)$$

Further, based on a maximum parallax value dmax and a minimum parallax value dmin in an isolated area corresponding to the concerned object area, a depth Do of the target object displayed in the image area corresponding to the concerned object area can be computed using the following formula (6).

$$Do = BF \times (1/(dmin - offset) - 1/(dmax - offset)) \qquad (6)$$

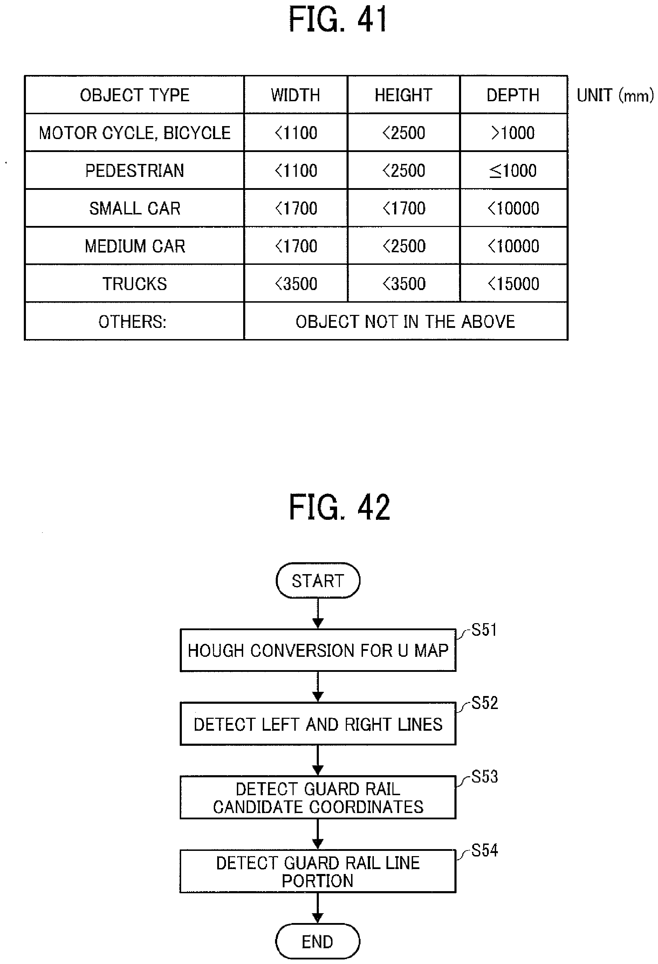

Based on the height, width, and depth information of the object corresponding to the object area computable as above described, the object type classification unit 140 conducts classifications of object types. FIG. 41 is an example of table data for classification of object types. With this table, types of target object such as pedestrians, bicycles, small cars, or trucks existing ahead of the vehicle 100 can be separately detected.

A description is given of a three dimensional position determination unit 141. Because a distance to the object corresponding to the detected object area, and a distance on the image between the image center of the parallax image and the center of the object area on the parallax image can be determined, a three dimensional position of the object can bed determined. When the center coordinate of the object area on the parallax image is defined as (region_centerX, region_centerY) and the image center coordinate of the parallax image is defined as (image_centerX, image_centerY), a relative horizontal direction position and relative height direction position of the target object with respect to the first capturing unit 110A and the second capturing unit 110B can be computed using the following formula (7) and (8).

$$Xo = Z \times (region\_centerX - image\_centerX)/f \qquad (7)$$

$$Yo = Z \times (region\_centerY - image\_centerY)/f \qquad (8)$$

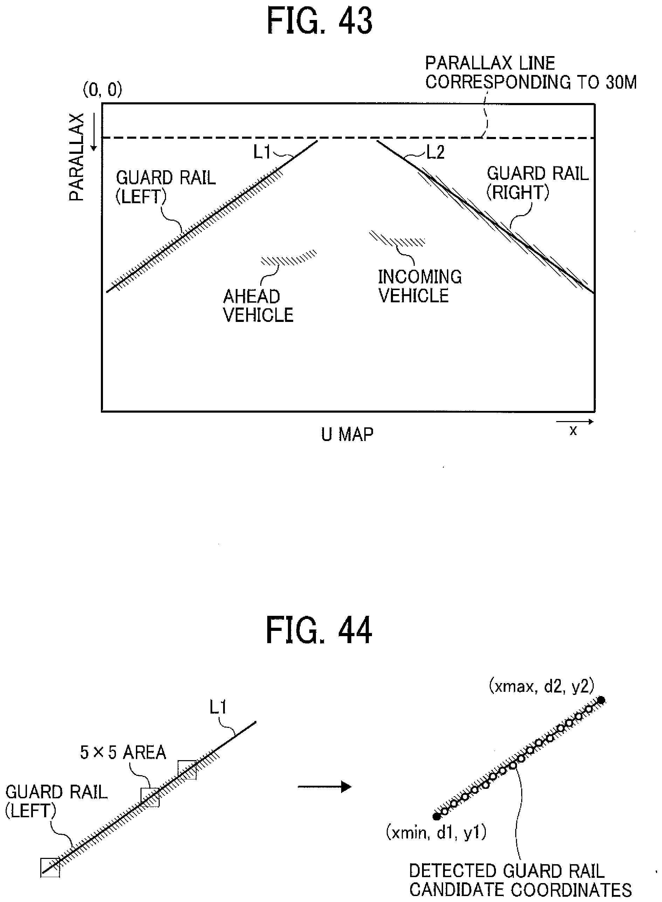

A description is given of a guard rail detection unit 142. FIG. 42 is a flowchart showing the steps of a process of guard rail detection conducted by the guard rail detection unit 142. Typically, side walls and guard rails existing at sides of road faces may exist in a height range of, for example, 30 cm to 100 cm from the road faces. As a target area of the guard rail detection process, an area in U map corresponding to this guard rail range is selected. Then, weighting is conducted for frequency on the U map for this target area, and Hough conversion is conducted (step S51), with which approximated straight lines L1 and L2 shown in FIG. 43 are detected (step S52). As to the end points of the approximated straight lines L1 and L2, an end point having a greater parallax is used as image boundary, and an end point having a smaller parallax corresponds to a parallax value corresponding to a distance of, for example, 30m, which can be obtained by distance conversion. Further, if no straight lines are detected by Hough conversion, guard rails are not detected.

Upon obtaining the approximated straight line as above described, as shown in FIG. 44, a given surrounding area (e.g., 5×5 area) using a coordinate position on the approximated straight line as the center of the surrounding area is set. Coordinate positions in the surrounding area having a total of frequency values exceeding a given threshold can be detected as guard rail candidate coordinates (step S53). If an interval between the detected guard rail candidate coordinates is a given distance or less, these guard rail candidate coordinates are connected and determined as a guard rail line portion (step S54).

Then, parallax values d1 and d2 respectively corresponding to a minimum X coordinate "xgmin" and a maximum X coordinate "xgmax2 of the guard rail line portion, obtained as above, can be computed based on the formula of the detected approximated straight line.

Based on the approximated straight line for "y" and "d" computed by the above described road face shape detection unit 134, road face coordinates (y1, y2) at the concerned parallax d1 and d2 can be determined. Because the height of guard rail is set in a range of, for example, 30 cm to 1 m from the road face, the height of guard rail (e.g., 30 cm and 1 m) on the parallax image, yg1_30, yg1_100, yg2_30, yg2_100 can be determined by using the above formula (2),.

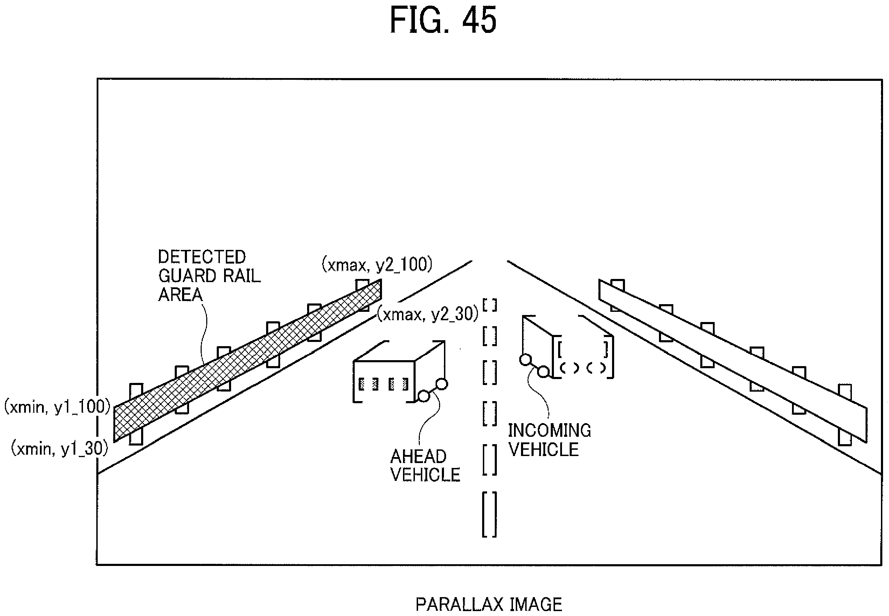

FIG. 45 is an example of a guard rail area on a parallax image, corresponding to the image of FIG. 32, detected by the guard rail detection unit 142. The guard rail area on the parallax image corresponds to an area encircled by four points of (xgmin, yg1_30), (xgmin, yg1_100), (xgmax, yg2_100), and (xgmax_yg2_30) indicated as a meshed portion in FIG. 45. FIG. 45 shows the guard rail area for a left side guard rail. Similarly, the guard rail area for a right side guard rail can be detected.

A description is given of vanishing point information used for the processing by the V map generation unit 133. The vanishing point information indicates a coordinate position on an image corresponding to a vanishing point of road face. The vanishing point information can be indentified using a white line on a road face displayed on a captured image and vehicle operation information.

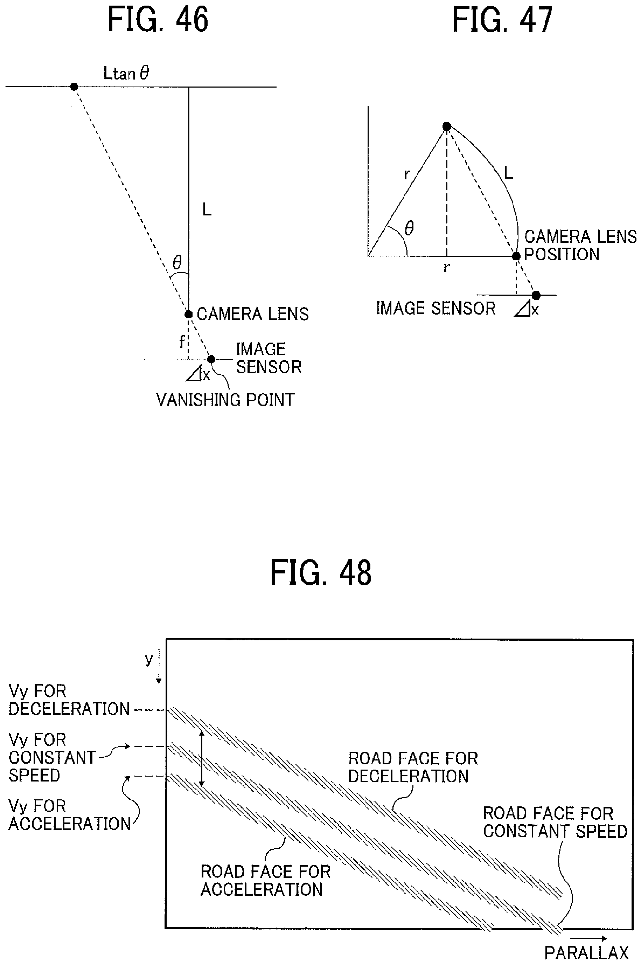

For example, if a rudder angle $\theta$ of a front wheel of the vehicle 100 can be obtained as the vehicle operation information, as shown in FIG. 46, based on the rudder angle $\theta$, an image left-right direction position Vx of the vanishing point can be detected. At a position distanced from a camera lens for a distance L, a positional deviation amount in a horizontal direction from the camera can be computed as "L $\times$ tan$\theta$." Therefore, a positional deviation amount $\Delta x$ on an image sensor in the horizontal direction can be computed using the following formula (9), wherein f is a focal distance of camera, and pixelsize is a pixel size of the image sensor. When the size of the image sensor in the X direction is defined as xsize, X coordinate Vx of the vanishing point can be computed using the following formula (9) and the following formula (10).

$$\Delta x = f \times \tan\theta/\text{pixelsize} \quad (9)$$

$$Vx = \text{xsize}/2 + \Delta x \quad (10)$$

Further, for example, if yaw rate (angular velocity) $\omega$ and vehicle speed v of the vehicle 100 can be obtained as the vehicle operation information, as shown in FIG. 47, the image left-right direction position Vx of the vanishing point can be detected using the yaw rate $\omega$ and the vehicle speed v. A positional deviation amount in the horizontal direction, which is to occur when the vehicle 100 moves for the distance L, becomes "1-cos$\theta$" based on a rotation radius r (r = L/$\theta$) and rotation angle $\theta$ of the vehicle 100. Therefore, a positional deviation amount $\Delta x$ on the image sensor in the horizontal direction can be computed using the following formula (11). By using $\Delta x$ obtained by the formula (11), the X coordinate Vx of vanishing point can be computed using the formula (10), in which the distance L is set, for example, 100 m.

$$\Delta x = \pm(1\text{-cos}\theta) \times f \times r/L/\text{pixelsize} \quad (11)$$

If the X coordinate Vx of the vanishing point, determined by the above process, indicates outside the image, the X coordinate Vx of the vanishing point information is set as an end of image.

Further, the Y coordinate Vy of the vanishing point can be obtained from the intercept of approximated straight line of the road face obtained by the previous processing. The Y coordinate Vy of the vanishing point corresponds to the intercept of approximated straight line of the road face obtained by the above described processing on the V map. Therefore, the intercept of approximated straight line of the road face obtained by the above described processing can be determined as the Y coordinate Vy of the vanishing point.

When the vehicle 100 is increasing speed (acceleration), weight is loaded to the rear side of the vehicle 100, and the vehicle 100 has an attitude that a front side of the vehicle 100 is directed to an upward in the vertical direction. With this attitude change, compared to an approximated straight line of the road face when the speed of the vehicle 100 is constant, an approximated straight line of the road face when the vehicle 100 is in the acceleration is shifted to a lower part of the V map as shown in FIG. 48. By contrast, compared to the approximated straight line of the road face when the speed of the vehicle 100 is constant, an approximated straight line of the road face when the vehicle 100 is in the deceleration is shifted to a upper part of the V map as shown in FIG. 48. Therefore, the Y coordinate Vy of the vanishing point is preferably determined by correcting the intercept of approximated straight line of the road face obtained by the previous processing using vehicle operation information such as information of acceleration/deceleration in the front and rear direction of the vehicle.

(Variant example 1)

A description is given of a variant example of the processing by the V map generation unit 133 of the above described example embodiment (hereinafter, variant example 1). Typically, as to objects displayed in a captured image, the objects do not exist lower than the road face. Therefore, in usual cases, no coordinate points is detected at a portion lower than the coordinate points corresponding to the road face on the V map generated by the V map generation unit 133. Therefore, no corresponding pixels exist in a slashed line area A on the V map of FIG 8.

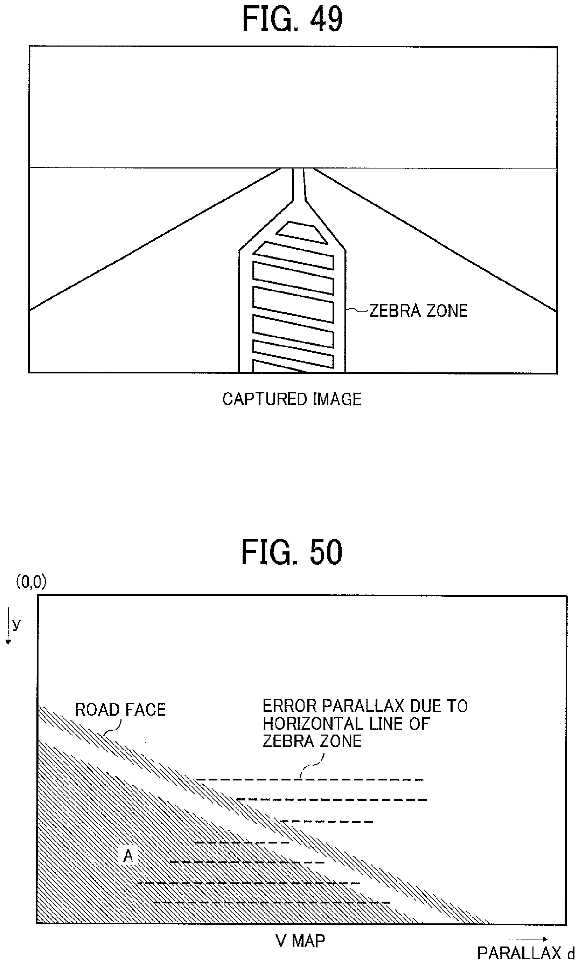

However, corresponding pixels may exist in the slashed line area A on the V map of FIG 8 in some cases. For example, when a zebra zone exists on a road face as shown in FIG. 49, corresponding pixels of the zebra zone may exist in the slashed line area A of FIG 8. If the zebra zone exists, a plurality of straight line images having a feature of high contrast and substantially horizontal lines appears in the image upper-lower direction in a captured image, wherein the plurality of straight line images may be referred to as a pattern image. Such pattern image increases an effect of parallel image generation error remaining after the parallel image generation processing conducted by the above described parallel image generation unit 131. Resultantly, parallax values, computed based on the captured image having received the parallel image generation processing includes greater errors. Resultantly, in the V map generated by using parallax image including such errors, points are plotted as a straight line extending in the X-axis direction (i.e., direction that parallax value changes) above or below points corresponding to the road face as shown in FIG. 50.

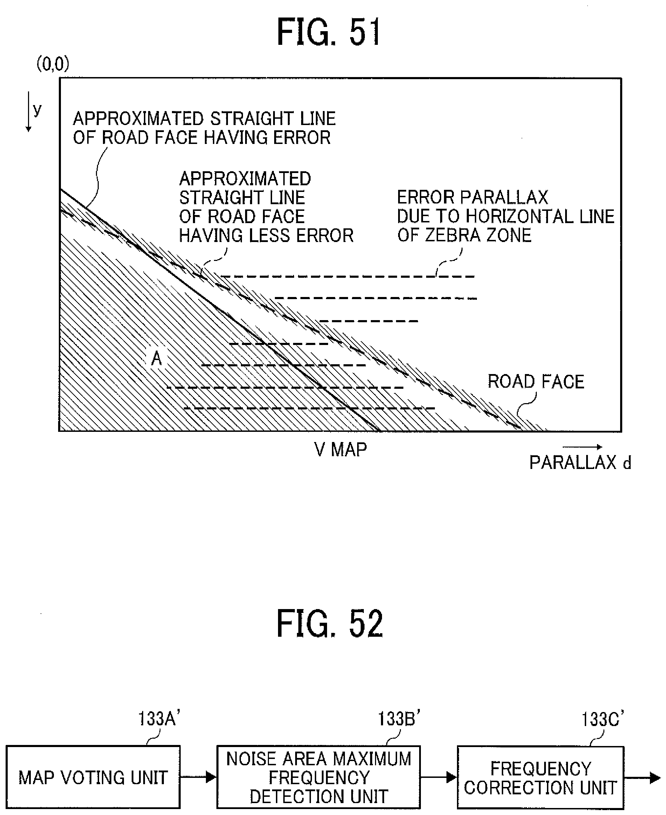

Such errors included in V map cause a negative effect for detecting road face candidate points by the road face shape detection unit 134. Specifically, as shown in FIG. 50, when the road face shape detection unit 134 conducts detection of road face candidate points using V map including errors due to the zebra zone, a maximum value of y is extracted for each parallax value "d" on the V map as a road face candidate point to conduct the linear approximation processing. Therefore, as shown in FIG. 51, an approximated straight line, which deviates from an approximated straight line for the road face having little error (see short/long dashed line in FIG. 51) is detected. Resultantly, the height of each road face portion ahead of the vehicle 100 is computed with error, and the object recognition may be conducted with error.

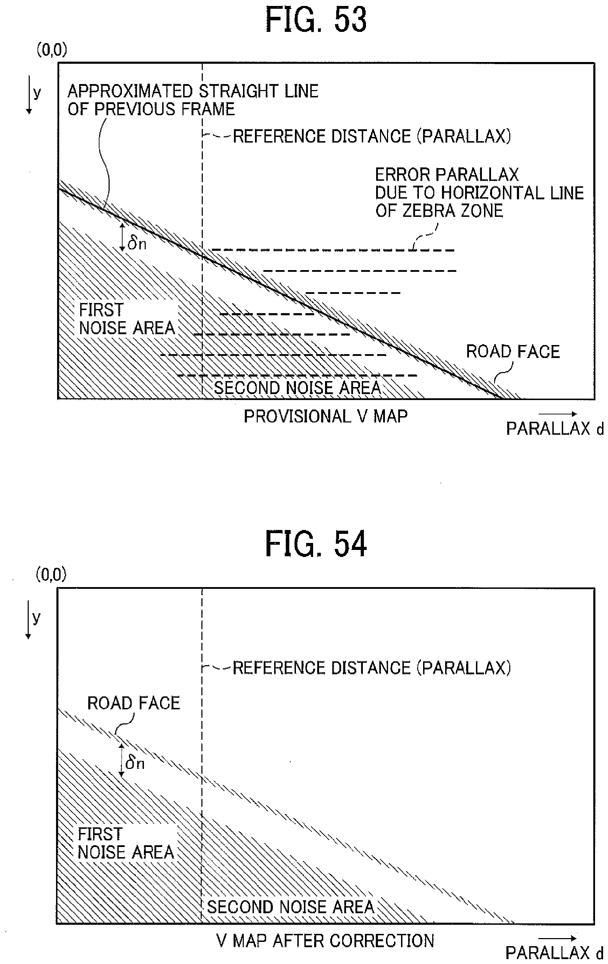

FIG. 52 is a block diagram showing a process of the V map generation unit 133 in the variant example 1. In the variant example 1, the V map generation unit 133 computes the frequency profile of parallax values for each line of the parallax image data generated by the parallax image generation unit 132. Specifically, a map voting unit 133A' conducts voting for combination of coordinates (d, y) on the V map. After completing this voting, a noise area maximum frequency detection unit 133B' computes a maximum frequency value in a noise area. In this example case, the noise area corresponds to a slashed line area in FIG. 53.

FIG. 53 shows an approximated straight line (solid line) obtained from a captured image of a previous frame. A given value $\delta n$ is added to the Y-axis direction position y of the coordinate points corresponding to the road face (i.e., points on the approximated straight line) as "y+$\delta n$." An area of Y-axis direction position y in the V map greater than "y+$\delta n$" indicated by the slashed line area in FIG. 53 corresponds to the noise area. If the approximated straight line of the previous frame does not exist such as right after an activation, a straight line, which is pre-set as an initial value, can be used to set the noise area.

The value of $\delta n$ used for setting the noise area can be determined as follows. When an actual height of each road face portion is set as H, a distance to each road face portion is set as Z, and a focal distance is set as f, a height on the first image sensor 113 and the second image sensor 113B is set as h, and then h can be computed using the following formula (12).

$$H = H \times f/Z \qquad (12)$$

In variant example 1, when determining the value $\delta n$, for example, H = 2 m, Z = 50m, f = 5mm are used as reference values, and in this example case, h = 0.2 mm is obtained. If the pixel size of the first image sensor 113 and the second image sensor 113B is, for example, 0.004 mm, h = 0.2 mm = 50 pixels is obtained, and this value is used as $\delta n$. In this case, If the $\delta n$ is variably determined depending on the distance (parallax) Z, the processing becomes complex. Therefore, the reference distance is set, for example, 50 m, and $\delta n$ = 50 pixels, determined based on the distance of 50 m, is applied to any distance. Therefore, in the variant example 1, $\delta n$ = 50 pixels is used as a constant for any distance (parallax).

If the reference distance is set longer than 50 m for a given length or more, the value of $\delta n$ becomes too small, with which the noise area may increase too much. Resultantly, correct coordinate points on the V map corresponding to the road face may be removed as the noise. By contrast, if the reference distance is set shorter than 50m for a given length or more, the value of $\delta n$ becomes too great, with which noise may not be removed effectively, and detection error of the road face candidate points may not be decreased effectively. Therefore, the reference distance is preferably set with a given allowable range using, for example, 50 m as the center value.

By using a maximum frequency value in the noise area computed by the noise area maximum frequency detection unit 133B' as above described, a frequency correction unit 133C' conducts a correction process of frequency values of coordinate points for the entire area of V map, in which frequency values of coordinate points having the frequency value of the concerned maximum frequency value or less are corrected to zero. Resultantly, coordinate points (d, y) having frequency of not zero are limited to points that are not noise. By conducting this correction process, the V map shown in FIG. 53 becomes a corrected V map shown in FIG. 54.

Parallax of the zebra zone fluctuates greatly on the V map. Therefore, frequency values of coordinate points existing in the noise area are too small compared to a frequency value corresponding to the road face. Therefore, the maximum frequency value in the noise area is a relatively small value. Among frequency values for the entire area of V map, frequency values greater than the maximum frequency value of the noise area originate from parallax data of a vertical white line and road side end in an image or parallax data of objects on the road face. Therefore, as shown in FIG. 54, on the V map, the number of coordinate points having frequency values that are not zero after the correction process becomes small, but coordinate points corresponding to the actual road face remains after the correction process. Therefore, precision of linear approximation processing can be enhanced, with which detection precision of road face candidate points can be enhanced.

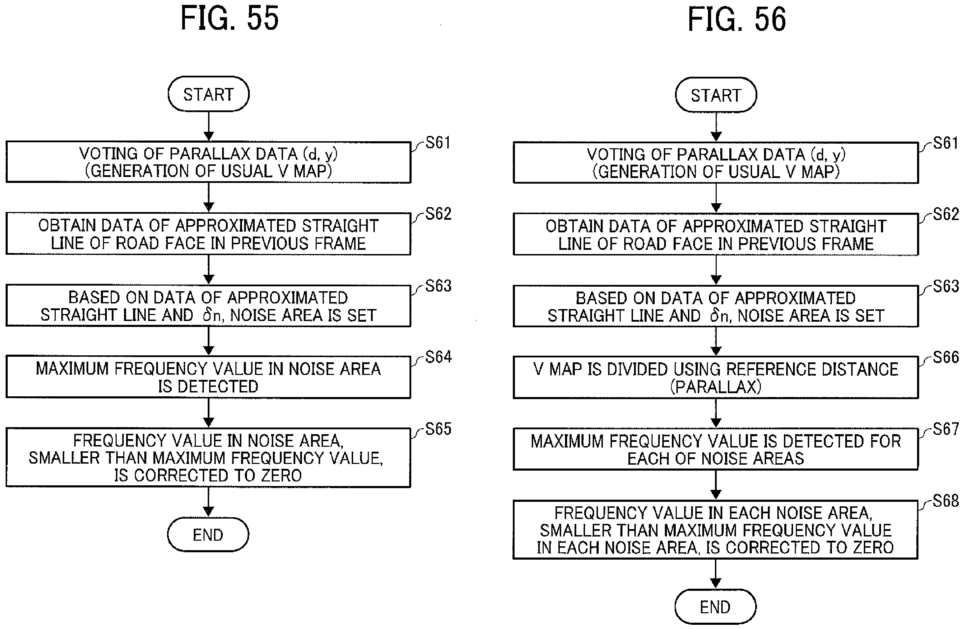

FIG. 55 is a flowchart showing the steps of V map generation processing in the variant example 1 conducted by the V map generation unit 133.

At first, to compute a frequency profile of parallax values for each line of the parallax image data generated by the parallax image generation unit 132, the map voting unit 133A' conducts voting to combination of coordinates (d, y) on the V map to generate an usual V map, which may be referred to as provisional V map (step S61). The noise area maximum frequency detection unit 133B' obtains data of approximated straight line corresponding to the road face detected in the captured image of the previous frame (step S62). Based on this data of the approximated straight line of the previous frame and the above described given value $\delta n$, the noise area is set in the provisional V map generated by the above step S61 (step S63). Then, a maximum frequency value in the set noise area is detected (step S64), and the maximum frequency value in the detected noise area is set as a threshold. Then, the frequency correction unit 133C' compares all frequency values existing in the provisional V map with the concerned threshold, and corrects a frequency value at a point where the frequency value becomes the concerned threshold or less to zero (step S65). The provisional V map can be corrected as above described, and the corrected provisional V map is output as a V map from the V map generation unit 133.

FIG. 56 is a flowchart showing the steps of another V map generation processing in the variant example 1 conducted by the V map generation unit 133. In this another processing, the provisional V map is divided into areas using a parallax value corresponding to the reference distance, and the noise removing is conducted at each area to obtain V map. The process from generating the provisional V map to setting the noise area in the provisional V map is same as the process shown in FIG. 55. Then, in another processing, the provisional V map is divided into two areas (left and right areas) using the reference distance (parallax) value, which is used for determining the given value $\delta n$ (step S66). Resultantly, as shown in FIG. 53, by using the reference distance (parallax) indicated by a vertical dot line as a boundary, a noise area having a distance shorter than the reference distance is set as a first noise area, and a noise area having a distance greater than the reference distance is set as a second noise area.

Then, a maximum frequency value is detected for each of the first noise area and second noise area (step S67), with which the maximum frequency value in each noise area (first noise area and second noise area) is set as a threshold. Then, all frequency values and the threshold are compared in each divided area of the provisional V map, and frequency values of points where the frequency value becomes the threshold or less is corrected to zero (step S68). FIG. 54 shows a V map after the correction.

(Variant example 2)

A description is given of other variant example (hereinafter, variant example 2) of the above described example embodiment. In the above described example embodiment, a height change of road face in the moving direction of the vehicle 100 (uphill and downhill of road face in the moving direction of the vehicle 100) can be detected, but difference of height of road face (inclination in the width direction of the road face) in a width direction of the road face cannot be detected. In this variant example 2, a configuration that can detect the inclination of road face in the road face width direction is described.

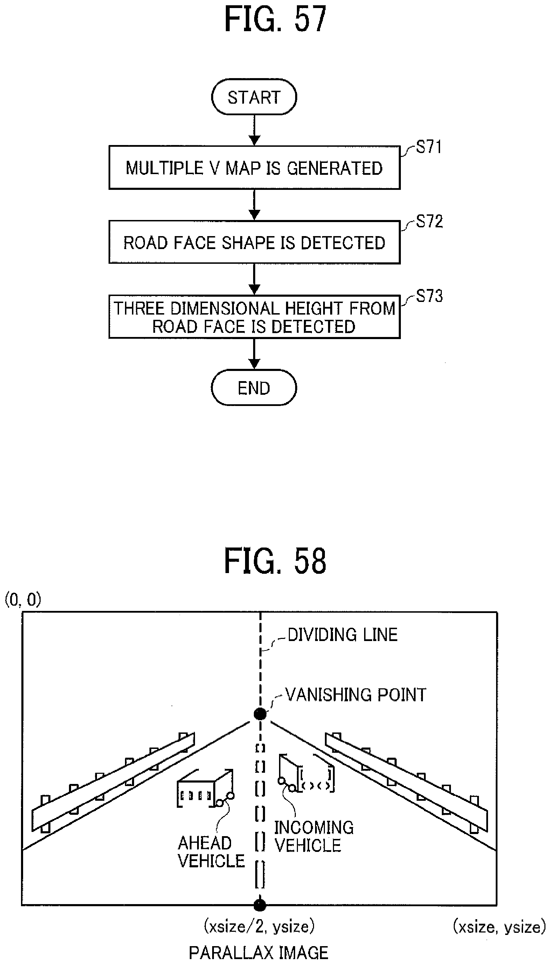

FIG. 57 is a flowchart showing the steps of a process of the variant example 2. As shown in FIG. 58, a parallax image is divided into two areas such as a left area and a right area on the parallax image, in which a straight line connecting the vanishing point of road face and the center of lowest end of parallax image (xsize/2, ysize) is used as a boundary to divide the parallax image into two areas such as the left area and the right area.

A V map is generated using the above described method for each of the left area and the right area separately (step S71). In this process, the parallax image is divided into a plurality of areas, and a V map is generated separately for each of the areas, wherein each V map may be referred to as a partial V map. When a plurality of partial V maps is combined, such combined V map may be referred to as a multiple V map.

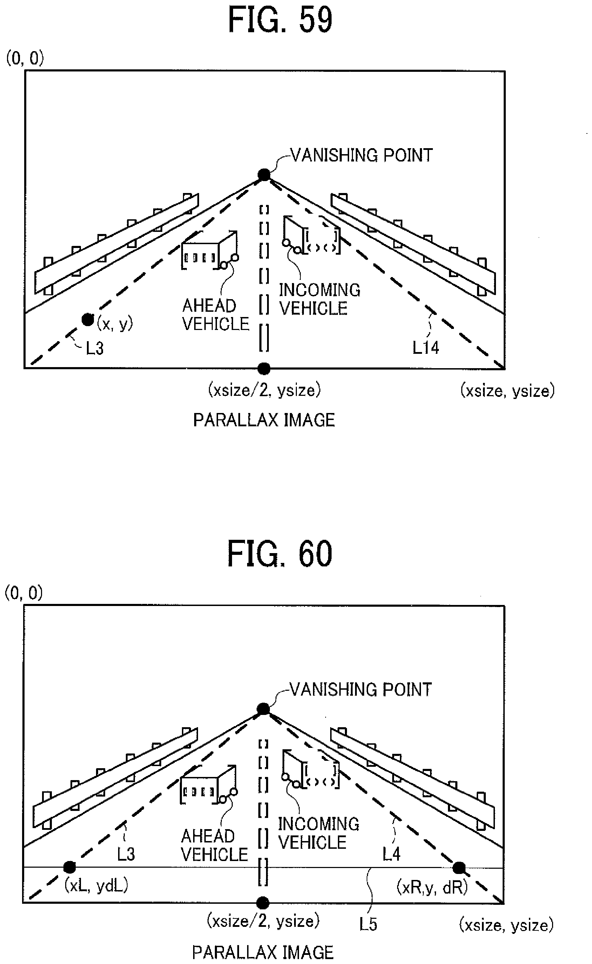

Then, based on the partial V map for each of areas, a approximated straight line corresponding to the road face is obtained for each area using the above described method. Further, as shown in FIG. 59, a straight line L3 connecting the vanishing point and a bottom-left point of parallax image (0, ysize), and a straight line L4 connecting the vanishing point and a bottom-right point of parallax image (xsize, ysize) are generated. Then, points (x, y) on each straight line are related to points (y, d) on the approximated straight line obtained for the each of left area and right area to generate a relationship of (x, y, d). With this configuration, the height from the road face on the straight lines L3 and L4 shown in FIG. 59 can be determined.

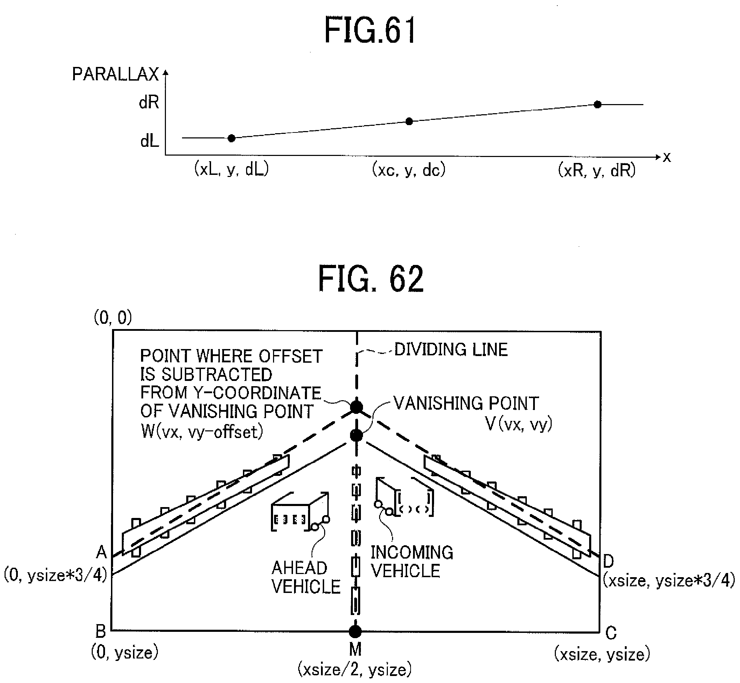

Then, the height of the road face, other than the straight lines L3 and L4 shown in FIG. 59, is determined. As shown in FIG. 60, one image scanning line L5 (X-axis direction line in parallax image) is set. An intersection point of the image scanning line L5 and the straight line L3 (left side) is set as (xL, y, dL), and an intersection point of the image scanning line L5 and the straight line L4 (right side) is set as (xR, y, dR). Parallax values on the image scanning line L5 between the two intersection points are linear interpolated as shown in FIG. 61, and parallax values outside the intersection points (left intersection point and right intersection point) on the image scanning line L5 are assigned with a parallax value same as the parallax value dR or dL at the right intersection point or left intersection point. With this configuration, even if the road face has inclination in the width direction of the road face, the road face shape having such inclination can be detected (steps S72 and S73).

(Variant example 3)

A description is given of further other variant example (hereinafter, variant example 3) of the example embodiment. Similar to the above variant example 2, in this variant example 3, the road face slanting in the road face width direction can be detected. Because a flowchart showing the steps of a process of the variant example 3 is similar to the flowchart of FIG. 57 used for the above variant example 2, FIG. 57 is referred for the variant example 3.

In this variant example 3, similar to the above described example embodiment, as shown in FIG. 62, a given offset value is subtracted from the image upper-lower direction position Vy of the vanishing point (Vx, Vy), which is the vanishing point of road face, to set a point W having the image upper-lower direction position (Vy - offset value). Then, a area encircled by points A, B, C, D and W is set as shown in FIG. 62.

Then, as shown in FIG. 62, by using a straight line connecting the vanishing point of road face (Vx, Vy) and the center of lowest end of parallax image M (xsize/2, ysize) as a boundary on the parallax image, the area encircled by the points W, A, B, C, D is divided into a left area encircled by the points W, A, B, M, and a right area encircled by the points W, M, C, D, and each of left area and right area is set as a road face image candidate area. Then, a V map is generated for each road face image candidate area separately using the above described method (step S71). In this process, the road face image candidate area on the parallax image is divided into a plurality of areas, and the V map is generated separately for each of areas, wherein each V map is referred to as a partial V map. When a plurality of partial V maps is combined, such combined V map may be referred to as a multiple V map.

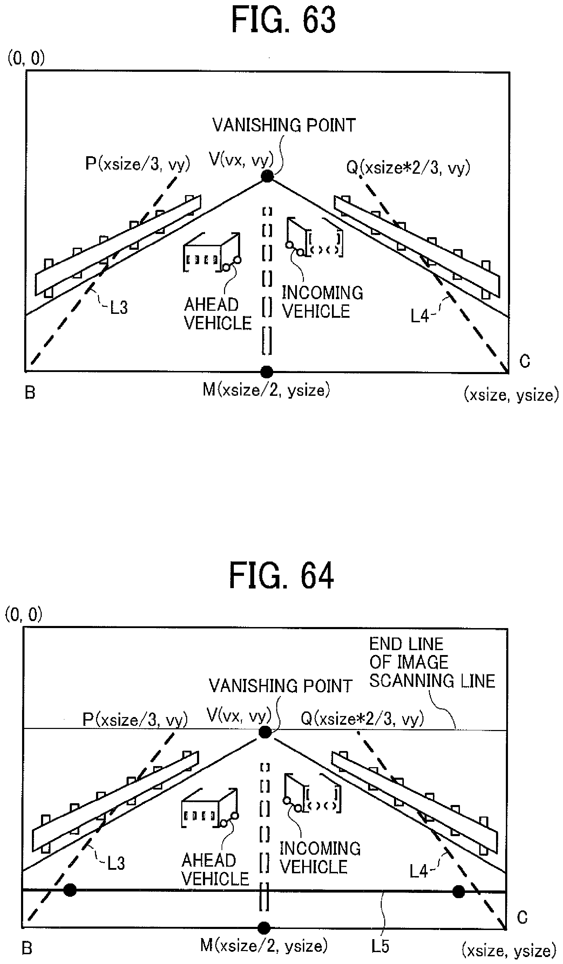

Then, based on the partial V map for each of areas, an approximated straight line corresponding to the road face is obtained for each area using the above described method. Further, as shown in FIG. 63, a straight line L3 connecting the point B (0, ysize) and a point P (xsize/3, Vy) having the same y coordinate of the vanishing point V (Vx, Vy) is generated. Further, a straight line L4 connecting the point C (xsize, ysize) and a point Q (xsize×2/3, Vy) having the same y coordinate of the vanishing point V (Vx, Vy) is generated. Then, points (x, y) on each straight line are related to points (y, d) on the approximated straight line obtained for the each of left area and right area to generate a relationship of (x, y, d). With this configuration, the height from the road face on the straight lines L3 and L4 shown in FIG. 63 can be determined.

If the X coordinate of points P and Q is set at points having the same X coordinate of the vanishing point V, when a height of the point P from the road face and a height of the point Q from the road face are different, the height from the road face may change abruptly at such points, and error may occur.

Further, if the X direction distance between the points P and Q is set too far, it may not be matched to an actual condition of a road face having a feature that the road face becomes narrower as farther away in an image from the vehicle. In view of such issues, in the variant example 3, for example, the X coordinate of point P is set to xsize/3 and the X coordinate of point Q is set to xsize×2/3.

Then, the height of the road face at a portion other than the straight lines L3 and L4 shown in FIG. 63 is determined. As shown in FIG. 64, one image scanning line L5 (X-axis direction line in parallax image) is set. An intersection point of the image scanning line L5 and the straight line L3 (left side) is set as (xL, y, dL), and an intersection point of the image scanning line L5 and the straight line L4 (right left side) is set as (xR, y, dR). Similar to the above described variant example 2, parallax values on the image scanning line L5 between the two intersection points are linear interpolated as shown in FIG. 61, and parallax values outside the intersection points (left intersection point and right intersection point) on the image scanning line L5 are assigned with a parallax value same as the parallax value dR or dL of the right intersection point or left intersection point. With this configuration, even if the road face has inclination in the width direction of the road face, the road face shape having such inclination can be detected (steps S72 and S73). Further, a scanning start of the image scanning line L5 is a line connecting the point B and point C, and a scanning end of the image scanning line L5 is a line connecting the point P and point Q.

(Variant example 4)

A description is given of further other variant example (hereinafter, variant example 4) of the example embodiment. As to actual road faces, some road faces have a semicircular shape, in which the center portion in the width of road face is set higher than other portions to drain water from the road face effectively. As to this road face, the road face inclination in the road face width direction cannot be detected effectively using the above described variant example 1. Compared to the above described variant example 2 and variant example 3, the road face inclination in the road face width direction can be detected with high precision using this variant example 4.

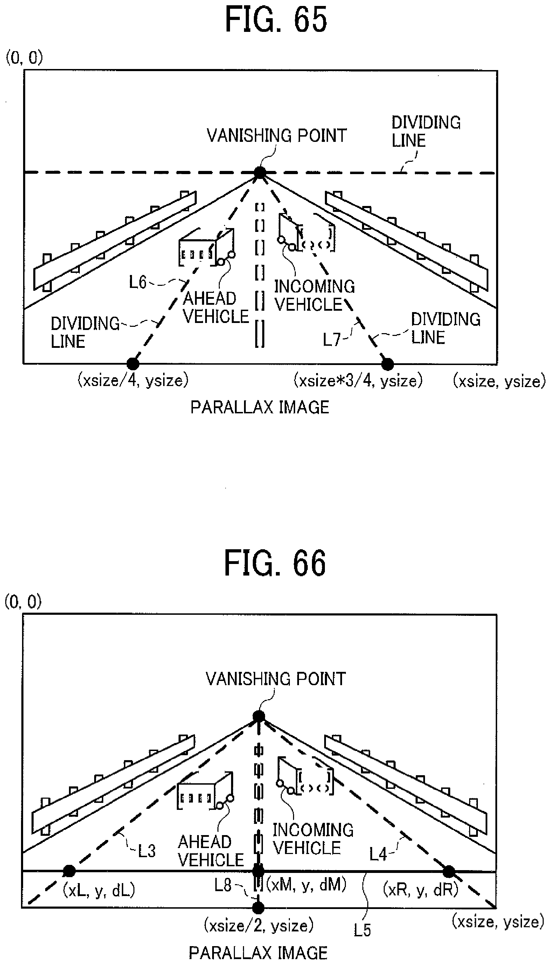

Specifically, as shown in FIG. 65, the lowest end of parallax image is equally divided into four points on the parallax image, in which a point (xsize/4, ysize) corresponding a one-fourth (1/4) point among the four points from the left-side bottom, and a point (xsize/34, ysize) corresponding a one-fourth (114) point among the four points from the right-side bottom are set. Then, a straight line L6 connecting the one-fourth (114) point (xsize/4, ysize) in the left and the vanishing point of road face is set, and a straight line L7 connecting the one-fourth (114) point (3/4×xsize, ysize) in the right and the vanishing point of the road face is set. In this variant example 4, a parallax image is divided into three areas using the straight lines L6 and L7 as boundary. Then, a V map is generated using the above described method for each of the divided areas separately. Then, based on the V map for each of areas, an approximated straight line corresponding to the road face is obtained for each area using the above described method.

Further, as shown in FIG. 66, similar to the above described variant example 2, in this variant example 4, the straight line L3 connecting the vanishing point and a bottom-left point of parallax image (0, ysize), and the straight line L4 connecting the vanishing point and a bottom-right point of parallax image (xsize, ysize) are generated. Further, in this variant example 4, a straight line L8 connecting the vanishing point of road face and the center of lowest end of parallax image (xsize/2, ysize) is newly generated. Then, points (x, y) on each straight line are related to points (y, d) on the approximated straight line obtained for the three areas, obtained as above, to generate a relationship of (x, y, d). With this configuration, the height from the road face on the three straight lines L3, L4, L8 shown in FIG. 66 can be determined.

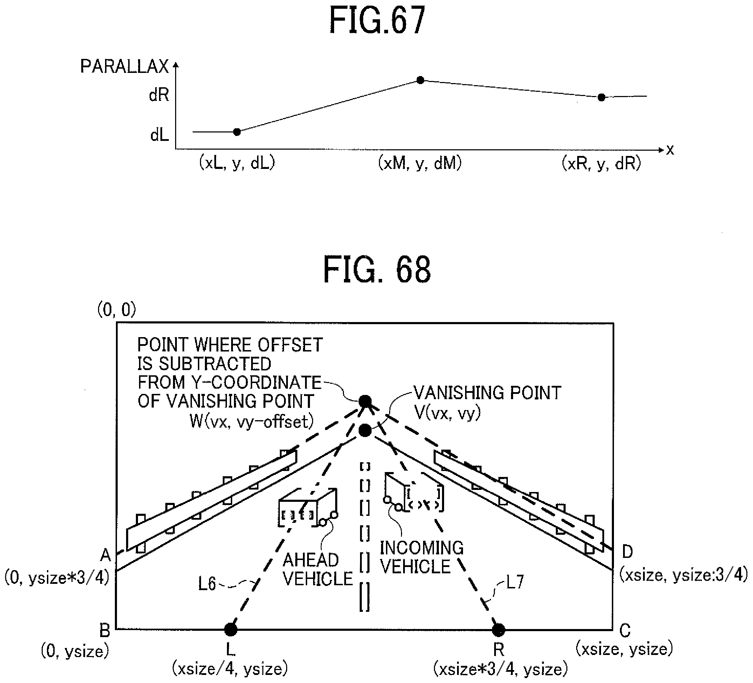

Then, the height of the road face portion other than the three straight lines L3, L4, L8 shown in FIG. 66 is determined. Similar to the above described variant example 2, as shown in FIG. 66, one image scanning line L5 (X-axis direction line in parallax image) is set. An intersection point of the image scanning line L5 and the straight line L3 (left side) is set as (xL, y, dL), an intersection point of the image scanning line L5 and the straight line L4 (right left side) is set as (xR, y, dR), and an intersection point of the image scanning line L5 and the straight line L8 8 (center) is set as (xM, y, dM). Parallax values on the image scanning line L5 between the intersection points are linear interpolated as shown in FIG. 67, and parallax values outside the intersection points (left intersection point and right intersection point) on the image scanning line L5 are assigned with a parallax value same as the parallax value dR or dL of the right intersection point or left intersection point. With this configuration, even if the road face has a semicircular shape in the width direction of the road face, the road face shape having such inclination can be detected.

(Variant example 5)

A description is given of further other variant example (hereinafter, variant example 5) of the example embodiment. Similar to the above described variant example 4, compared to the above described variant example 2 and variant example 3, the road face inclination in the road face width direction can be detected with high precision using this variant example 5.

In this variant example 5, as shown in FIG. 68, the lowest end of parallax image is equally divided into four points on the parallax image, in which a point L (xsize/4, ysize) corresponding a one-fourth (114) point among the four points from the left end, and a point R (xsize×3/4, ysize) corresponding a one-fourth (1/4) point among the four points from the right end are set. Then, a straight line L6 connecting the one-fourth (1/4) point (xsize/4, ysize) in the left and the point W is set, and a straight line L7 connecting the one-fourth (1/4) point (xsize×3/4, ysize) in the right and the point W is set. In this variant example 5, by using the straight lines L6 and L7 as boundary, an area encircled by points W, A, B, C, D is divided into three areas such as a left area encircled by points W, A, B, L, a center area encircled by points W, L, R, and a right area encircled by points W, R, C, D, and each of areas is set as a road face image candidate area. Then, a V map is generated for each road face image candidate area separately using the above described method. Then, based on the V map for each of areas, a approximated straight line corresponding to the road face is obtained for each area using the above described method.

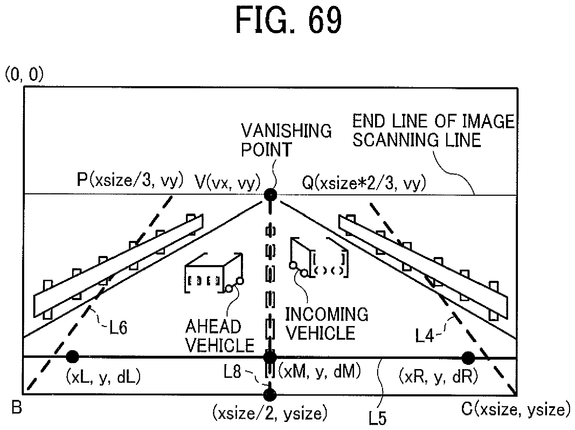

Further, as shown in FIG. 69, similar to the above described variant example 3, in this variant example 5, the straight line L3 connecting the point P (xsize/3, Vy) and the point B (0, ysize) is generated, and the straight line L4 connecting the point Q (xsize×2/3, Vy) and the point C (xsize, ysize) is generated. Further, in this variant example 5, a straight line L8 connecting the vanishing point of road face and the center of lowest end of parallax image M (xsize/2, ysize) is newly generated. Then, points (x, y) on each straight line are related to points (y, d) on the approximated straight line obtained for the three areas, obtained as above, to generate a relationship of (x, y, d). With this configuration, the height from the road face on the three straight lines L3, L4, L8 shown in FIG. 69 can be determined.

Then, the height of the road face portion other than the three straight lines L3, L4, L8 shown in FIG. 69 is determined. Similar to the above described variant example 3, as shown in FIG. 69, one image scanning line L5 (X-axis direction line in parallax image) is set. An intersection point of the image scanning line L5 and the straight line L3 (left side) is set as (xL, y, dL), an intersection point of the image scanning line L5 and the straight line L4 (right left side) is set as (xR, y, dR), and an intersection point of the image scanning line L5 and the straight line L8 8 (center) is set as (xM, y, dM). Similar to the above described variant example 4, parallax values on the image scanning line L5 between the intersection points are linear interpolated as shown in FIG. 67, and parallax values outside the intersection points (left intersection point and right intersection point) on the image scanning line L5 are assigned with a parallax value same as the parallax value dR or dL of the right intersection point or left intersection point. With this configuration, even if the road face has a semicircular shape in the width direction of the road face, the road face shape having such inclination can be detected.

As to the above described variant examples 2 to 5, a parallax image is divided into, for example, two or three areas. By increasing the dividing area numbers of parallax image, a road face shape can be detected with enhanced precision.

As to the above described one or more example embodiments, the height from road face can be detected with high precision, wherein the height from the road face means uphill and downhill of road face in the moving direction of the vehicle 100, and the road face inclination in the road face width direction.

Further, by using a V map having removed noise in the above described variant example 1, detection precision of the height from the road face can be further enhanced, wherein the height from the road face means uphill and downhill of road face in the moving direction of the vehicle 100, and the road face inclination in the road face width direction.

By enhancing detection precision of the height from the road face, detection precision of object detectable using the height from the road face can be enhanced, and precision of object classification such as pedestrians and other vehicles can be enhanced, with which probability of collision avoidance to the object can be enhanced, and road safety can be enhanced.

The above described one or more example embodiments may have following configurations.

In the invention, a vehicle 100 moving on road face is equipped with a plurality of image capturing units such as the first capturing unit 110A and the second capturing unit 110B, which captures images of a forward area of a moving direction of the vehicle, which is ahead of the vehicle 100. Based on a plurality of captured images, position information of the face such as height information from the face in the moving direction of the vehicle is detected by the above described face information detection apparatus.

The face information detection apparatus includes a parallax information generation unit such as the parallel image generation unit 131 and the parallax image generation unit 132 that generate parallax information such as parallax image data based on the plurality of captured images; a parallax histogram information generation unit such as the V map generation unit 133 that generates parallax histogram information such as V map information indicating a frequency profile of parallax values in each line area, wherein the each line area is obtainable by dividing the captured image in a plurality of areas in a upper-lower direction, based on the parallax information; a parallax value selection unit such as the road face shape detection unit 134 determines parallax values having a frequency exceeding a given frequency threshold as selected targets to be processed based on the parallax histogram information, and selects a group of parallax values matched to a feature indicated by parallax values of the face among the selected targets; and a face information detection unit such as the road face height table computing unit 135 that detects face information including height information from the face based on a selection result of the parallax value selection unit. The parallax value selection unit determines the selected targets based on parallax values selected previously such as a previous frame in the past. With this configuration, the face information (e.g., height from road face) can be detected with high precision, and various processing using the face information, specifically, such as recognition processing of object and detection processing of the road face inclination in the width direction of road face can be conducted effectively.

(Embodiment B)

In the Embodiment A, the parallax value selection unit determines one parallax value corresponding to each line area based on the selected group of parallax values. The face information detection unit detects position information of the face such as information of height from the road face based on the parallax value determined by the parallax value selection unit. The parallax value selection unit determines the selected targets, within the frequency profile of parallax values such as V map indicated by the parallax histogram information, while removing parallax values existing in a portion (noise area) of the captured image that is lower than a profile portion of parallax values previously determined for each line area (i.e., approximated straight line for the previous frame). With this configuration, based on an assumption that no target object exists at the portion that is lower than the face, noise that decreases detection precision of position information of the face (e.g., height from road face) can be effectively removed.

(Embodiment C)

In the Embodiments A or B, the parallax value selection unit determines one parallax value corresponding to each line area based on the selected group of parallax values. The face information detection unit detects position information of the face such as information of height from the road face based on the parallax value determined by the parallax value selection unit.

In the invention, parallax value selection unit determines a given frequency threshold, within the frequency profile of parallax values indicated by the parallax histogram information, based on frequency of parallax values existing in a portion of the captured image (noise area) that is lower than a profile portion of parallax values determined previously for each line area (i.e., approximated straight line for the previous frame), and determines the selected targets using the determined frequency threshold. With this configuration, noise existing in a portion other than the noise area in the frequency profile of parallax values indicated by the parallax histogram information can be removed effectively, with which position information of the face (e.g., height from road face) can be detected with further enhanced precision.

(Embodiment D)

In the Embodiment C, the parallax value selection unit determines, within the frequency profile of parallax values indicated by the parallax histogram information, a maximum frequency of parallax values existing at a portion (noise area) of the captured image that is lower than a profile portion of parallax values determined previously for each line area as the given frequency threshold. With this configuration, noise existing in a portion other than the noise area in the frequency profile of parallax values indicated by the parallax histogram information can be removed effectively, with which position information of the face (e.g., height from road face) can be detected with further enhanced precision.

(Embodiment E)

In any one of the Embodiments B to D, the parallax value selection unit segments the parallax histogram information into two or more parallax value segments depending on parallax values, determines parallax values corresponding to each line area in each of the parallax value segments using a determination algorism corresponding to each of the parallax value segments, in which different determination algorisms are used for at least two parallax value segments. With this configuration, as to the parallax value segment, suitable parallax values corresponding to each face can be determined, with which suitable parallax values corresponding to the face can be determined with a broader parallax value range.

(Embodiment F)

In any one of the Embodiments B to E, the parallax value selection unit generates approximated line information such as approximated straight line information for the selected group of parallax values, and determines parallax values on an approximated line identified by the approximated line information as parallax values corresponding to each line area. With this configuration, parallax values corresponding to road faces can be determined simply with high precision.

(Embodiment G)

In the Embodiment F, the parallax value selection unit segments the parallax histogram information into a plurality of parallax value segments depending on parallax values, and generates the approximated line information for each of parallax value segments, and determines parallax values on an approximated line identified by each of the generated approximated line information as parallax values corresponding to each line area in each of the parallax value segments. With this configuration, position information of the face can be detected with further enhanced precision.

(Embodiment H)

In any one of the Embodiments A to G, the parallax value selection unit segments the parallax histogram information into two or more segments in a left-right direction depending on the left-right direction position in the captured image, and selects a group of parallax values matched to the feature for each of segments in the left-right direction from the selected targets to be processed. With this configuration, road face slope condition in the width direction of road face can be detected.

(Embodiment I)

A vehicle-device control system includes the face information detection apparatus of any one of the Embodiments A to H to detect face information of a forward area of the moving direction of the vehicle moveable on the face; and a vehicle-device control unit to control one or more given devices based on a detection result of the face information detection apparatus provided to the vehicle. With this configuration, given devices equipped to the vehicle can be controlled with high precision.

(Embodiment J)

A computer-readable carrier medium stores a face information detection program that, when executed by a computer having a processor of a face information detection apparatus, causes the computer to execute method of detecting face information. The face information detection apparatus is useable for a vehicle moveable on a face, the vehicle is equipped with a plurality of image capturing units for capturing images of a forward area of a moving direction of the vehicle, and face information is detectable using a plurality of captured images. The method comprising the steps of 1) generating parallax information based on the plurality of captured images (generating step of parallax information); 2) generating parallax histogram information indicating a frequency profile of parallax values in each line area obtainable by dividing a captured image in a plurality of areas in a upper-lower direction, based on the parallax information (generating step of parallax histogram information); 3) determining parallax values having a frequency exceeding a given frequency threshold as selected targets to be processed based on the parallax histogram information, and selecting a group of parallax values matched to a feature indicated by parallax values of the face among the selected targets (selecting step of parallax value); and 4) detecting face information based on a selection result of the selecting step of parallax value (detecting step of face information), wherein in the electing step of parallax values, the selected targets are determined based on parallax values selected previously. With this configuration, the face information (e.g., height from road face) can be detected with high precision, and various processing using the face information, specifically, such as recognition processing of object and detection processing of the road face inclination in the width direction of road face can be conducted effectively.

The present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can compromise any suitably programmed apparatuses such as a general purpose computer, personal digital assistant, mobile telephone (such as a Wireless Application Protocol (WAP) or 3G-compliant phone) and so on. Since the present invention can be implemented as software, each and every aspect of the present invention thus encompasses computer software implementable on a programmable device.

The computer software can be provided to the programmable device using any storage medium, carrier medium, carrier means, or digital data carrier for storing processor readable code such as a flexible disk, a compact disk read only memory (CD-ROM), a digital versatile disk read only memory (DVD-ROM), DVD recording only/rewritable (DVD-R/RW), electrically erasable and programmable read only memory (EEPROM), erasable programmable read only memory (EPROM), a memory card or stick such as USB memory, a memory chip, a mini disk (MD), a magneto optical disc (MO), magnetic Tape, a hard disk in a server, a solid state memory device or the like, but not limited these.

The hardware platform includes any desired kind of hardware resources including, for example, a central processing unit (CPU), a random access memory (RAM), and a hard disk drive (HDD). The CPU may be implemented by any desired kind of any desired number of processor. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of the apparatus. Alternatively, the HDD may be provided outside of the apparatus as long as the HDD is accessible. In this example, the CPU, such as a cache memory of the CPU, and the RAM may function as a physical memory or a primary memory of the apparatus, while the HDD may function as a secondary memory of the apparatus.

In the above-described example embodiment, a computer can be used with a computer-readable program, described by object-oriented programming languages such as C++, Java (registered trademark), JavaScript (registered trademark), Perl, Ruby, or legacy programming languages such as machine language, assembler language to control functional units used for the apparatus or system. For example, a particular computer (e.g., personal computer, work station) may control an information processing apparatus or an image processing apparatus such as image forming apparatus using a computer-readable program, which can execute the above-described processes or steps. In the above described embodiments, at least one or more of the units of apparatus can be implemented in hardware or as a combination of hardware/software combination. In example embodiment, processing units, computing units, or controllers can be configured with using various types of processors, circuits, or the like such as a programmed processor, a circuit, an application specific integrated circuit (ASIC), used singly or in combination.

In the above described one or more example embodiments, the face information detection apparatus can detect face information with high precision, and the above described face information detection apparatus can be applied to the vehicle-device control system and face information detection program.

In the above described one or more example embodiments, the selected targets to be processed is determined based on parallax values selected previously. Typically, face information does not change abruptly. Therefore, even if parallax information generated for the current face information detection includes error, by using parallax values correctly selected previously as a reference, parallax values having wrong values (i.e., noise) for the face can be indentified. Therefore, the selected targets can be determined while removing the wrong parallax value (i.e., noise) based on the parallax values selected previously, and therefore, a group of parallax values matched to a feature of the face can be selected effectively, and face information can be detected and obtained with high precision.

**Claims**

1. A road face position information detection apparatus (120, 102) for a vehicle moving on a road face, the vehicle equipped with a plurality of image capturing units for capturing a plurality of images of a forward area in a moving direction of the vehicle, road face information detectable using the plurality of captured images, the road face information detection apparatus (120, 102) comprising:

   a parallax information generation unit (121, 131, 132) configured to generate parallax information based on the plurality of captured images;
   a V map generation unit (133) configured to generate a V map indicating a frequency profile of parallax values in each horizontal line of the captured image, based on the parallax information;
   a road face shape detection unit (134) configured to detect points on the V map having a frequency exceeding a given frequency threshold and indicating a feature that parallax values become smaller as closer to the upper part of the captured image as road face candidate points based on the V map by searching a range the center of which is determined by the road surface candidate points detected on the V map generated from the captured image in a previous frame, and to conduct linear approximation processing for the road face candidate points to obtain an approximated straight line on the V map; and
   a road face information detection unit (135) configured to detect position information including height information of the road face based on a detection result of the road face shape detection unit (134), wherein the height information is obtained by comparing the approximated straight line output from the road face shape detection unit (134) with a reference straight line corresponding to a virtual reference road face obtained by extending a face of a road face parallel to the road face right below the vehicle to ahead of the vehicle,
   **characterized in that**
   the road face shape detection unit (134), within a frequency profile of parallax values indicated by the V map, is further configured to determine a maximum frequency of parallax values existing in a portion of the captured image that is lower than a profile portion of parallax values determined for the approximated straight line for the previous frame as the given frequency threshold, and to determine the road face candidate points using the determined frequency threshold.

2. The road face position information detection apparatus (120, 102) of claim 1,

   wherein the road face information detection unit (135) is configured to detect position information of the road face based on the parallax value determined by the road face shape detection unit (134),
   wherein the road face shape detection unit (134) is configured to determine the road face candidate points, within the frequency profile of parallax values indicated by the V map , while removing parallax values existing in a portion of the captured image that is lower than a profile portion of parallax values previously determined for each line area.

3. The road face position information detection apparatus (120, 102) of any one of claims 1 to 2, wherein the road face shape detection unit (134) is configured to segment the V map into two or more segments in a left-right direction depending on the left-right direction position in the captured image, and to select a group of parallax values matched to the feature for each of the segments in the left-right direction.

4. A vehicle-device control system comprising:

the road face position information detection apparatus (120, 102) of any one of claims 1 to 3 to detect road face information of a forward area of a moving direction of a vehicle moving on a road face; and
a vehicle-device control unit configured to control one or more given devices based on a detection result of the road face information detection apparatus (120, 102) provided to the vehicle.

5. A computer-readable carrier medium storing a road face position information detection program that, when executed by a computer having a processor of a road face information detection apparatus (120, 102), causes the computer to execute method of detecting road face position information, the road face position information detection apparatus (120, 102) for a vehicle moving on a road face, the vehicle equipped with a plurality of image capturing units for capturing a plurality of images of a forward area of a moving direction of the vehicle, road face information detectable using a plurality of captured images,
the method comprising the steps of:

1) generating parallax information based on the plurality of captured images (generating step of parallax information);
2) generating a V map indicating a frequency profile of parallax values in each horizontal line of the captured image, based on the parallax information (generating step of V map);
3) detecting points on the V map having a frequency exceeding a given frequency threshold and indicating a feature that parallax values become smaller as closer to the upper part of the captured image as road face candidate points (selecting step of parallax value) by searching a range the center of which is determined by the road surface candidate points detected on the V map generated from the captured image in a previous frame, and conducting linear approximation processing for the road face candidate points to obtain an approximated straight line on the V map; and
4) detecting road face position information including height information of the road face based on a selection result of the selecting step of parallax value (detecting step of road face information), wherein the height information is obtained by comparing the approximated straight line with a reference straight line corresponding to a virtual reference road face obtained by extending a face of a road face parallel to the road face right below the vehicle to ahead of the vehicle,
**characterized by**
determining, within a frequency profile of parallax values indicated by the V map, a maximum frequency of parallax values existing in a portion of the captured image that is lower than a profile portion of parallax values determined for the approximated straight line for the previous frame as the given frequency threshold, and determining the road face candidate points using the determined frequency threshold.

## Patentansprüche

1. Straßenbelagpositionsinformationserkennungsvorrichtung (120, 102) für ein Fahrzeug, das sich auf einem Straßenbelag bewegt, wobei das Fahrzeug mit mehreren Bilderfassungseinheiten zum Erfassen mehrerer Bilder eines vorderen Bereichs in einer Bewegungsrichtung des Fahrzeugs ausgestattet ist, wobei Straßenbelaginformationen unter Verwendung der mehreren erfassten Bilder erkennbar sind, wobei die Straßenbelaginformationserkennungsvorrichtung (120, 102) umfasst:

eine Parallaxeninformations-Erzeugungseinheit (121, 131, 132), die so konfiguriert ist, dass sie Parallaxeninformationen basierend auf den mehreren erfassten Bilder erzeugt;
eine V-Card-Erzeugungseinheit (133), die so konfiguriert ist, dass sie auf der Grundlage der Parallaxeninformationen eine V-Card erzeugt, die ein Frequenzprofil von Parallaxenwerten in jeder horizontalen Zeile des aufgenommenen Bildes angibt;
eine Straßenbelagformerkennungseinheit (134), die so konfiguriert ist, dass sie Punkte auf der V-Card erkennt, deren Häufigkeit einen gegebenen Frequenzschwellenwert überschreitet und ein Merkmal, dass Parallaxenwerte umso kleiner werden, je mehr man sich dem oberen Teil des erfassten Bildes nähert, als Straßenbelag-Kandidatenpunkte auf der V-Card anzeigt, durch Durchsuchen eines Bereichs, dessen Mittelpunkt durch die auf der V-Card erkannten Kandidatenpunkte des Straßenbelags bestimmt wird, die aus dem erfassten Bild in einem vorherigen Frame generiert wurden, und eine lineare Approximationsverarbeitung für die Kandidatenpunkte der Straßenbelag durchführt, um eine angenäherte Gerade auf der V-Card zu erhalten; und
eine Straßenbelaginformationserkennungseinheit (135), die so konfiguriert ist, dass sie Positionsinformationen einschließlich Höheninformationen des Straßenbelags basierend auf einem Erkennungsergebnis der Straßenbelagformerkennungseinheit (134) erkennt, wobei die Höheninformationen durch Vergleichen der von der Straßenbelagformerkennungseinheit (134) ausgegebenen angenäherten Geraden mit einer Referenzgeraden erhalten werden, die einem virtuellen Referenz-Straßenbelag entspricht, der durch Verlängern einer Oberfläche eines Straßenbelags parallel zum Straßenbelag direkt unter dem Fahrzeug bis vor das Fahrzeug erhalten wird, **dadurch gekennzeichnet, dass**

die Straßenbelagformerkennungseinheit (134) innerhalb eines durch die V-Card angezeigten Frequenzprofils von Parallaxenwerten ferner dazu konfiguriert ist, eine maximale Häufigkeit von Parallaxenwerten zu bestimmen, die in einem Abschnitt des erfassten Bildes vorhanden sind, der niedriger als ein Profilabschnitt von Parallaxenwerten ist, die für die angenäherte Gerade für das vorherige Bild als gegebene Frequenzschwelle bestimmt wurden, und um die Straßenbelag-Kandidatenpunkte unter Verwendung der bestimmten Frequenzschwelle zu bestimmen.

2. Straßenbelagpositionsinformationserkennungsvorrichtung (120, 102) nach Anspruch 1,

wobei die Straßenbelaginformationserkennungseinheit (135) dazu konfiguriert ist, Positionsinformationen des Straßenbelags basierend auf dem von der Straßenbelagformerkennungseinheit (134) bestimmten Parallaxenwert zu erfassen,
wobei die Straßenbelagformerkennungseinheit (134) so konfiguriert ist, dass sie die Straßenbelag-Kandidatenpunkte innerhalb des durch die V-Card angegebenen Frequenzprofils von Parallaxenwerten ermittelt und dabei Parallaxenwerte entfernt, die in einem Teil des erfassten Bildes vorhanden sind, der niedriger ist als Profilanteil der zuvor für jeden Linienbereich ermittelten Parallaxenwerte.

3. Straßenbelagpositionsinformationserkennungsvorrichtung (120, 102) nach einem der Ansprüche 1 bis 2, wobei die Straßenbelagformerkennungseinheit (134) so konfiguriert ist, dass sie die V-Card in zwei oder mehr Segmente in Richtung von links nach rechts segmentiert, in Abhängigkeit von der Links-Rechts-Richtungsposition im aufgenommenen Bild, und für jedes Segment in der Links-Rechts-Richtung eine Gruppe von Parallaxenwerten auswählt, die dem Merkmal entsprechen.

4. Fahrzeuggeräte-Steuerungssystem, das umfasst:

die Straßenbelagpositionsinformationserkennungsvorrichtung (120, 102) nach einem der Ansprüche 1 bis 3, um Straßenbelaginformationen eines vorderen Bereichs einer Bewegungsrichtung eines Fahrzeugs zu erfassen, das sich auf einer Straßenbelag bewegt; und
eine Fahrzeuggeräte-Steuereinheit, die so konfiguriert ist, dass sie ein oder mehrere gegebene Geräte auf der Grundlage eines Erkennungsergebnisses der dem Fahrzeug bereitgestellten Straßenbelaginformationserkennungsvorrichtung (120, 102) steuert.

5. Computerlesbares Trägermedium, auf dem ein Programm zur Erkennung von Straßenbelagpositionsinformationen gespeichert ist, das, wenn es von einem Computer mit einem Prozessor einer Straßenbelaginformationserkennungsvorrichtung (120, 102) ausgeführt wird, den Computer veranlasst, ein Verfahren zur Erkennung der Straßenbelagpositionsinformation auszuführen, die Straßenbelagpositionsinformationserkennungsvorrichtung (120, 102) für ein Fahrzeug, das sich auf einem Straßenbelag bewegt, wobei das Fahrzeug mit mehreren Bilderfassungseinheiten zum Erfassen mehrerer Bilder eines vorderen Bereichs in Bewegungsrichtung des Fahrzeugs ausgestattet ist, Straßenbelaginformationen, die anhand einer Vielzahl erfasster Bilder erkennbar sind,
wobei das Verfahren die folgenden Schritte umfasst:

1) Erzeugen von Parallaxeninformationen basierend auf der Vielzahl erfasster Bilder (Erzeugungsschritt von Parallaxeninformationen);
2) Erzeugen einer V-Card, die ein Frequenzprofil von Parallaxenwerten in jeder horizontalen Zeile des aufgenommenen Bildes angibt, basierend auf den Parallaxeninformationen (Erzeugungsschritt der V-Card);
3) Erkennen von Punkten auf der V-Card mit einer Häufigkeit, die einen bestimmten Frequenzschwellenwert überschreitet, und Anzeigen eines Merkmals, bei dem Parallaxenwerte umso kleiner werden, je näher sie als Kandidatenpunkte für die Straßenbelag am oberen Teil des erfassten Bilds liegen (Auswahlschritt des Parallaxenwerts), durch Durchchuchen eines Bereichs, dessen Mittelpunkt durch die Straßenbelag-Kandidatenpunkte bestimmt wird, die auf der V-Card erkannt wurden, die aus dem erfassten Bild in einem vorherigen Frame generiert wurde, und Durchführen einer linearen Approximationsverarbeitung für die Straßenbelag-Kandidatenpunkte, um eine angenäherte Gerade auf der V-Card zu erhalten; und
4) Erfassen von Straßenbelagpositionsinformationen, einschließlich Höheninformationen des Straßenbelags, basierend auf einem Auswahlergebnis des Auswahlschritts des Parallaxenwerts (Erkennungsschritt der Stra-

31

ßenbelaginformationen), wobei die Höheninformationen durch Vergleichen der angenäherten Geraden mit einer Referenzgeraden erhalten werden, die einem virtuellen Referenz-Straßenbelag entspricht, der durch Verlängerung eines Straßenbelags parallel zum Straßenbelag direkt unter dem Fahrzeug bis vor das Fahrzeug erhalten wird,

**gekennzeichnet durch**

das Bestimmen, innerhalb eines durch die V-Card angegebenen Frequenzprofils von Parallaxenwerten, einer maximalen Häufigkeit von Parallaxenwerten, die in einem Teil des erfassten Bildes vorhanden ist, der niedriger ist als ein Profilteil von Parallaxenwerten, der für die angenäherte Gerade für das vorherige Bild bestimmt wurde, als den gegebenen Häufigkeitsschwellenwert, und Bestimmen der Straßenbelag-Kandidatenpunkte unter Verwendung des bestimmten Häufigkeitsschwellenwerts.

**Revendications**

1. Appareil de détection d'informations de position de surface de route (120, 102) pour un véhicule se déplaçant sur une surface de route, le véhicule étant équipé d'une pluralité d'unités de capture d'images pour capturer une pluralité d'images d'une zone avant dans une direction de déplacement du véhicule, des informations de surface de route détectables à l'aide de la pluralité d'images capturées, l'appareil de détection d'informations de surface de route (120, 102) comprenant :

une unité de génération d'informations de parallaxe (121, 131, 132) configurée pour générer des informations de parallaxe sur la base de la pluralité d'images capturées ;
une unité de génération de carte V (133) configurée pour générer une carte V indiquant un profil de fréquence de valeurs de parallaxe dans chaque ligne horizontale de l'image capturée, sur la base des informations de parallaxe ;
une unité de détection de forme de surface de route (134) configurée pour détecter des points sur la carte V ayant une fréquence dépassant un seuil de fréquence donné et indiquant une caractéristique selon laquelle les valeurs de parallaxe deviennent plus petites à mesure qu'on se rapproche de la partie supérieure de l'image capturée en fonction des points candidats de surface de route basés sur la carte V en recherchant une plage dont le centre est déterminé par les points candidats de surface de route détectés sur la carte V générée à partir de l'image capturée dans une image précédente, et pour effectuer un traitement d'approximation linéaire pour les points candidats de surface de route pour obtenir un ligne droite approchée sur la carte V ; et
une unité de détection d'informations de surface de route (135) configurée pour détecter des informations de position comprenant des informations de hauteur de la surface de route sur la base d'un résultat de détection de l'unité de détection de forme de surface de route (134), les informations de hauteur étant obtenues en comparant la sortie de ligne droite approchée à partir de l'unité de détection de forme de surface de route (134) avec une ligne droite de référence correspondant à une surface de route de référence virtuelle obtenue en prolongeant une face d'une surface de route parallèle à la surface de route juste en dessous du véhicule jusqu'en avant du véhicule,

**caractérisé en ce que**

l'unité de détection de forme de surface de route (134), dans un profil de fréquence de valeurs de parallaxe indiquées par la carte V, est en outre configurée pour déterminer une fréquence maximale de valeurs de parallaxe existant dans une partie de l'image capturée qui est inférieure à une partie de profil de valeurs de parallaxe déterminées pour la ligne droite approchée pour la trame précédente en tant que seuil de fréquence donné, et pour déterminer les points candidats de surface de route à l'aide du seuil de fréquence déterminé.

2. Appareil de détection d'informations de position de surface de route (120, 102) selon la revendication 1,

dans lequel l'unité de détection d'informations de surface de route (135) est configurée pour détecter des informations de position de la surface de route sur la base de la valeur de parallaxe déterminée par l'unité de détection de forme de surface de route (134),
dans lequel l'unité de détection de forme de surface de route (134) est configurée pour déterminer les points candidats de surface de route, dans le profil de fréquence des valeurs de parallaxe indiqué par la carte V, tout en supprimant les valeurs de parallaxe existant dans une partie de l'image capturée qui est inférieure à un partie de profil des valeurs de parallaxe préalablement déterminées pour chaque zone de ligne.

3. Appareil de détection d'informations de position de bord de route (120, 102) selon l'une quelconque des revendications 1 à 2, dans lequel l'unité de détection de forme de surface de route (134) est configurée pour segmenter la carte V en deux ou plusieurs segments dans une direction gauche-droite en fonction de la position dans la direction gauche-droite dans l'image capturée, et pour sélectionner un groupe de valeurs de parallaxe adaptées à la caractéristique pour chacun des segments dans la direction gauche-droite.

4. Système de commande de dispositif de véhicule comprenant :

l'appareil de détection d'informations de position de surface de route (120, 102) selon l'une quelconque des revendications 1 à 3 pour détecter des informations de surface de route d'une zone avant d'une direction de déplacement d'un véhicule se déplaçant sur une surface de route ; et

une unité de commande de dispositif de véhicule configurée pour commander un ou plusieurs dispositifs donnés sur la base d'un résultat de détection de l'appareil de détection d'informations de surface de route (120, 102) fourni au véhicule.

5. Support lisible par ordinateur stockant un programme de détection d'informations de position de surface de route qui, lorsqu'il est exécuté par un ordinateur doté d'un processeur d'un appareil de détection d'informations de surface de route (120, 102), amène l'ordinateur à exécuter un procédé de détection d'informations de position de surface de route, l'appareil de détection d'informations de position de bord de route (120, 102) pour un véhicule se déplaçant sur une surface de route, le véhicule étant équipé d'une pluralité d'unités de capture d'images pour capturer une pluralité d'images d'une zone avant d'une direction de déplacement du véhicule, des informations de surface de route détectables à l'aide d'une pluralité d'images capturées,

le procédé comprenant les étapes consistant à :

1) générer des informations de parallaxe sur la base de la pluralité d'images capturées (étape de génération d'informations de parallaxe) ;

2) générer une carte V indiquant un profil de fréquence de valeurs de parallaxe dans chaque ligne horizontale de l'image capturée, sur la base des informations de parallaxe (étape de génération de carte V) ;

3) détecter des points sur la carte V ayant une fréquence dépassant un seuil de fréquence donné et indiquer une caractéristique selon laquelle les valeurs de parallaxe deviennent plus petites à mesure que l'on se rapproche de la partie supérieure de l'image capturée en tant que points candidats de surface de route (étape de sélection de la valeur de parallaxe) en recherchant une plage dont le centre est déterminé par les points candidats de surface de route détectés sur la carte V générée à partir de l'image capturée dans une trame précédente, et effectuer un traitement d'approximation linéaire pour les points candidats de surface de route pour obtenir une ligne droite approchée sur la carte V ; et

4) détecter des informations de position de surface de route comprenant des informations de hauteur de la surface de route sur la base d'un résultat de sélection de l'étape de sélection de valeur de parallaxe (étape de détection d'informations de surface de route), les informations de hauteur étant obtenues en comparant la ligne droite approchée avec une ligne droite de référence correspondant à une surface de route de référence virtuelle obtenue en prolongeant une face d'une surface de route parallèle à la surface de route juste en dessous du véhicule jusqu'en avant du véhicule,

**caractérisé par**

la détermination, dans un profil de fréquence de valeurs de parallaxe indiqué par la carte V, d'une fréquence maximale de valeurs de parallaxe existant dans une partie de l'image capturée qui est inférieure à une partie de profil de valeurs de parallaxe déterminée pour la ligne droite approchée pour la trame précédente comme le seuil de fréquence donné, et la détermination des points candidats de surface de route à l'aide du seuil de fréquence déterminé.

# FIG. 1

# FIG. 2

# FIG. 3

# FIG. 4

SERIAL BUS

~110B

~120, 102

~124

| FPGA | RAM |
| CPU | ROM |

DATA BUS

| SERIAL IF | DATA IF |

# FIG. 5

STEREO CAMERA — 110A, 110B → PARALLEL IMAGE GENERATION UNIT — 131 → PARALLAX IMAGE GENERATION UNIT — 132

V MAP GENERATION UNIT — 133 → ROAD FACE SHAPE DETECTION UNIT — 134 → ROAD FACE HEIGHT TABLE COMPUTING UNIT — 135

U MAP GENERATION UNIT — 136 → ISOLATION AREA DETECTION UNIT — 137 → PARALLAX-IMAGE CORRESPONDING AREA DETECTION UNIT — 138

OBJECT AREA EXTRACTION UNIT — 139 → OBJECT TYPE CLASSIFICATION UNIT — 140 → THREE DIMENSIONAL POSITION DETERMINATION UNIT — 141 → OBJECT POSITION

GUARD RAIL DETECTION UNIT — 142 → GUARD RAIL POSITION

EP 2 767 927 B1

# FIG. 6A

PARALLAX IMAGE

| 0 | | | | x |
|---|---|---|---|---|
| 0 | 0 | 1 | 0 | 0 |
| 0 | 3 | 2 | 3 | 0 |
| 0 | 4 | 0 | 4 | 0 |
| 5 | 0 | 0 | 0 | 5 |

y

# FIG. 6B

V MAP

| 1 | 2 | 3 | 4 | 5 | Δ (PARALLAX) |
|---|---|---|---|---|---|
| 1 | 0 | 0 | 0 | 0 | |
| 0 | 1 | 2 | 0 | 0 | |
| 0 | 0 | 0 | 2 | 0 | |
| 0 | 0 | 0 | 0 | 2 | |

y

# FIG. 7

TELEGRAPH POLE

ROAD FACE

AHEAD VEHICLE

CAPTURED IMAGE

# FIG. 8

(0,0)

↓y

ROAD FACE

AHEAD
VEHICLE

TELEGRAPH POLE

A

V MAP

PARALLAX d

# FIG. 9

↓y

REFERENCE
ROAD FACE

ROAD
FACE

EXTRACTION
RANGE

2δ

V MAP

PARALLAX d

# FIG. 10

# FIG. 11

# FIG. 12

V MAP GENERATION UNIT

133A | 133B | 133C | 133D

| VEHICLE OPERATION INFORMATION INPUT UNIT | → | PARALLAX-IMAGE -ROAD-FACE-AREA SETTING UNIT | → | PROCESS AREA EXTRACTION UNIT | → | V MAP INFORMATION GENERATION UNIT |

# FIG. 13

V MAP GENERATION UNIT

133A | 133B | 133E | 133F

| VEHICLE OPERATION INFORMATION INPUT UNIT | → | PARALLAX-IMAGE -ROAD-FACE-AREA SETTING UNIT | → | V MAP INFORMATION GENERATION UNIT | → | PROCESS AREA EXTRACTION UNIT |

EP 2 767 927 B1

# FIG. 14

START

BASED ON VANISHING POINTINFORMATION, AREA TO EXTRACT PARALLAX PIXEL DATA FROM PARALLAX IMAGE IS SET ⌐S1A

PARALLAX PIXEL DATA IS EXTRACTED FROM REFERENCE STRAIGHT LINE AND $\delta$ ⌐S2A

GENERATION OF V MAP INFORMATION ⌐S3A

END

# FIG. 15

POINT WHERE OFFSET IS SUBTRACTED FROM
Y-COORDINATE OF VANISHING POINT
W (vx, vy-offset)

(0, 0)

VANISHING POINT
V (vx, vy)

AHEAD
VEHICLE 1

INCOMING
VEHICLE 2

A
(0, ysize*3/4)

D
(xsize, ysize*3/4)

B
(0, ysize)

C
(xsize, ysize)

# FIG. 16

```
                    ┌─────────┐
                    │  START  │
                    └────┬────┘
                         │
                         ▼
    ┌────────────────────────────────────────────┐  ⌐S1B
    │  VEHICLE OPERATION INFORMATION IS INPUT     │
    └────────────────────┬───────────────────────┘
                         │
                         ▼
    ┌────────────────────────────────────────────┐  ⌐S2B
    │         BASED ON VEHICLE OPERATION          │
    │   INFORMATION, VANISHING POINT AND          │
    │  REFERENCE STRAIGHT LINE ARE CORRECTED      │
    └────────────────────┬───────────────────────┘
                         │
                         ▼
    ┌────────────────────────────────────────────┐  ⌐S3B
    │  BASED ON VANISHING POINT INFORMATION,      │
    │  AREA TO EXTRACT PARALLAX PIXEL DATA        │
    │       FROM PARALLAX IMAGE IS SET            │
    └────────────────────┬───────────────────────┘
                         │
                         ▼
    ┌────────────────────────────────────────────┐  ⌐S4B
    │  PARALLAX PIXEL DATA IS EXTRACTED FROM      │
    │     REFERENCE STRAIGHT LINE AND  δ          │
    └────────────────────┬───────────────────────┘
                         │
                         ▼
    ┌────────────────────────────────────────────┐  ⌐S5B
    │       GENERATION OF V MAP INFORMATION       │
    └────────────────────┬───────────────────────┘
                         │
                         ▼
                    ┌─────────┐
                    │   END   │
                    └─────────┘
```

# FIG. 17

ROAD FACE SHAPE DETECTION UNIT                                    134

```
┌ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┐
            134A              134B                     134C
│  ┌──────────────┐   ┌──────────────┐   ┌──────────────────┐     │
   │  ROAD FACE   │   │ SEGMENT LINE │   │     SEGMENT       │
│  │ CANDIDATE POINT │→│ APPROXIMATION │→ │  APPROXIMATION    │ ──→ │
   │ DETECTION UNIT │   │    UNIT     │   │LINE CONNECTING UNIT│
│  └──────────────┘   └──────────────┘   └──────────────────┘     │
└ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┘
```

# FIG. 18

APPROXIMATION LINE OF PREVIOUS FRAME

y

$\delta$

SEARCH RANGE

B1

$\delta$

PARALLAX

# FIG. 19

APPROXIMATION LINE OF PREVIOUS FRAME

y

δ

SEARCH RANGE

B2

δ

PARALLAX

# FIG. 20A

START

①

S1

PARALLAX VALUE d
IS GREATER THAN REFERENCE
PARALLAX VALUE?

NO → ②

FIRST ROAD FACE
CANDIDATE POINT
DETECTION PROCESS

YES

S2

SET SEARCH AREA FOR "y"

S3

COMPUTE TOTAL OF FREQUENCY
VALUES OF 5 × 7 COORDINATE
SURROUNDING EACH (d, y)

S4

SET THRESHOLD BASED ON
MAXIMUM OF TOTAL OF
FREQUENCY VALUES

S5

AMONG (d, y) HAVING FREQUENCY
VALUES GREATER THAN
THRESHOLD, (d, y) HAVING THE
GREATEST Y IS DETECTED AS
ROAD FACE CANDIDATE POINT

S6

YES — ANY NEXT
PARALLAX VALUE d?

NO

③

END

47

# FIG. 20B

SECOND ROAD FACE
CANDIDATE POINT
DETECTION PROCESS  (2)

S7

SET SEARCH AREA FOR "y"

S8

AMONG (d, y),
IS THERE ANY (d, y)
THAT FREQUENCY VALUE IS
GREATER THAN FIRST
THRESHOLD ?  ——NO

YES

S9

RETAIN (d, y) THAT FREQUENCY
VALUE IS GREATER THAN FIRST
THRESHOLD

S10

IS THERE
ANY (d, y) THAT TOTAL
FREQUENCY VALUE OF
SURROUNDING 8 POINTS IS
GREATER THAN SECOND
THRESHOLD ?  ——NO

YES

S11

RETAIN (d, y) THAT TOTAL FREQUENCY
VALUE OF SURROUNDING 8 POINTS IS
GREATER THAN SECOND THRESHOLD

S12

AMONG (d, y) , (d, y) HAVING THE
GREATEST Y IS DETECTED AS
ROAD FACE CANDIDATE POINT

S13

ANY NEXT
PARALLAX VALUE d?  ——YES——  (1)

NO

(3)

# FIG. 21

# FIG. 22

EP 2 767 927 B1

```
                            START

                            S100
              PARALLAX
         VALUE d IS GREATER THAN          NO
          REFERENCE PARALLAX
              VALUE?

FIRST ROAD FACE                      SECOND ROAD FACE
CANDIDATE POINT                      CANDIDATE POINT
DETECTION PROCESS        YES         DETECTION PROCESS

S200    SET SEARCH AREA FOR "y"      S600    SET SEARCH AREA FOR "y"

        EXTRACT V MAP COMPONENT               EXTRACT V MAP COMPONENT
S300    HAVING FREQUENCY VALUE       S700    HAVING FREQUENCY VALUE
        GREATER THAN FIRST THRESHOLD          GREATER THAN SECOND THRESHOLD

        AMONG EXTRACTED V MAP                 AMONG EXTRACTED V MAP
        COMPONENT, V MAP COMPONENT            COMPONENT, V MAP COMPONENT
S400    HAVING THE GREATEST FREQUENCY S800   HAVING THE GREATEST FREQUENCY
        VALUE IS DETECTED AS ROAD FACE        VALUE IS DETECTED AS ROAD FACE
        CANDIDATE POINT                       CANDIDATE POINT

                            S500                          S900
 YES          ANY NEXT                       ANY NEXT          YES
         PARALLAX VALUE d?               PARALLAX VALUE d?

                       NO                              NO

                            END
```

# FIG. 23

(0, 0)

| | THIRD SEGMENT | SECOND SEGMENT | FIRST SEGMENT |

ROAD FACE CANDIDATE POINT

E3　　　　　S3 (E2)　　　　S2 (E1)　　　　　　　　　S1 ⟶

PARALLAX

# FIG. 24

(0, 0)

| | THIRD SEGMENT | SECOND SEGMENT | FIRST SEGMENT |

ROAD FACE CANDIDATE POINT

E3　　　　E2　　S3L　　E1　　　　　S2L　　　　S1 ⟶

PARALLAX

# FIG. 25

# FIG. 26A

FOURTH
SEGMENT

(0, 0)

↓y

| THIRD SEGMENT | SECOND SEGMENT | FIRST SEGMENT |

ROAD FACE
CANDIDATE POINT

E4 S4 (E3)    S3 (E2)    S2 (E1)    S1 →
PARALLAX

# FIG. 26B

(0, 0)

↓y

| THIRD SEGMENT | SECOND SEGMENT | FIRST SEGMENT |

ROAD FACE
CANDIDATE POINT

E3    S3 (E2)    S2 (E1)    S1 →
PARALLAX

# FIG. 27

```
              ┌──────────┐
              │  START   │
              └────┬─────┘
                   │
                   ▼
      ┌──────────────────────────┐ ╭S21
      │   SET FIRST STRAIGHT LINE │
      │ APPROXIMATION SEGMENT     │
      └──────────┬───────────────┘
                 │
                 ▼
      ┌──────────────────────────┐ ╭S22
      │    EXTRACT ROAD FACE      │
      │  CANDIDATE POINTS IN SET  │
      │     PARALLAX AREA         │
      └──────────┬───────────────┘
                 │
                 ▼
      ┌──────────────────────────┐ ╭S23
      │     CONDUCT LINEAR        │
      │     APPROXIMATION         │
      └──────────┬───────────────┘
                 │
                 ▼         S24
            ╱──────────╲
           ╱ REMAINING  ╲   YES
          ╱  SEGMENT     ╲──────────►
          ╲  EXISTS?     ╱
           ╲            ╱
            ╲──────────╱
                 │ NO
                 ▼
            ┌─────────┐
            │   END   │
            └─────────┘
```

SET SECOND STRAIGHT LINE APPROXIMATION SEGMENT — S25

REMAINING SEGMENT IS SMALL? — S26 — NO

EXTEND STRAIGHT LINE APPROXIMATION SEGMENT AND SET AS LAST SEGMENT — S27

YES

# FIG. 28A

START

SET FIRST STRAIGHT LINE
APPROXIMATION SEGMENT — S111

EXTEND STRAIGHT LINE
APPROXIMATION SEGMENT
(I.E., SET PARALLAX AREA) — S114

6

7

EXTRACT ROAD FACE
CANDIDATE POINTS IN SET
PARALLAX AREA — S112

NUMBER
OF ROAD FACE
CANDIDATE POINTS IS
GREATER THAN
GIVEN
NUMBER? — S113

NO

YES

STRAIGHT LINE
APPROXIMATION — S115

LAST SEGMENT? — S116

YES

END

NO

GRADIENT
AND INTERCEPT OF
OBTAINED APPROXIMATED
STRAIGHT LINE ARE
WITHIN A GIVEN
RANGE? — S117

NO

YES

5

4

# FIG. 28B

④
↓

S118

NO ← FIRST STRAIGHT LINE APPROXIMATION SEGMENT?

YES
↓

S119

⑤ ← NO — CORRELATION VALUE OF APPROXIMATED STRAIGHT LINE IS GREATER THAN GIVEN VALUE?

YES
↓

S120

REMAINING SEGMENT EXISTS? — YES → 

NO
↓

END

S121

SET SECOND STRAIGHT LINE APPROXIMATION SEGMENT
↓

S122

⑦ ← NO — REMAINING SEGMENT IS SMALL ?

YES S123
↓

EXTEND STRAIGHT LINE APPROXIMATION SEGMENT AND SET AS LAST SEGMENT
↓

⑥

# FIG. 29A

(0, 0)

↓y

| THIRD SEGMENT | SECOND SEGMENT | FIRST SEGMENT |

ROAD FACE CANDIDATE POINT

E4  S4 (E3)  S3 (E2)        S2 (E1)              S1 ⟶

PARALLAX

# FIG. 29B

(0, 0)

↓y

| SECOND SEGMENT | FIRST SEGMENT |

ROAD FACE CANDIDATE POINT

S3 (E2)        S2 (E1)                          S1 ⟶

PARALLAX

# FIG. 30A

(0, 0)

y↓

| THIRD SEGMENT | SECOND SEGMENT | FIRST SEGMENT |

ROAD FACE CANDIDATE POINT

E4   S4 (E3)   S3 (E2)      S2 (E1)                    S1

PARALLAX

# FIG. 30B

(0, 0)

y↓

| SECOND SEGMENT | FIRST SEGMENT |

ROAD FACE CANDIDATE POINT

S3 (E2)                      S2 (E1)                    S1

PARALLAX

# FIG. 31A

# FIG. 31B

# FIG. 32

CAPTURED IMAGE

# FIG. 33

U MAP

# FIG. 34

```
        ┌─────────┐
        │  START  │
        └────┬────┘
             │
             ▼
┌──────────────────────────┐  S31
│ SMOOTHING IS CONDUCTED   │
│   FOR U MAP INFORMATION  │
└────────────┬─────────────┘
             │
             ▼
┌──────────────────────────┐  S32
│ BINARIZATION IS CONDUCTED│
│   FOR U MAP INFORMATION  │
└────────────┬─────────────┘
             │
             ▼
┌──────────────────────────┐  S33
│   LABELING IS CONDUCTED  │
└────────────┬─────────────┘
             │
             ▼
        ┌─────────┐
        │   END   │
        └─────────┘
```

# FIG. 35

# FIG. 36

# FIG. 37

EP 2 767 927 B1

# FIG. 38

DETECTION WIDTH OF
ISOLATED AREA A

DETECTION WIDTH OF
ISOLATED AREA B

AHEAD
VEHICLE

INCOMING
VEHICLE

PARALLAX IMAGE

# FIG. 39

OBJECT
AREA

OBJECT
AREA

AHEAD
VEHICLE

INCOMING
VEHICLE

PARALLAX IMAGE

63

# FIG. 40

```
        ( START )
            │
            ▼
┌──────────────────────────────────────────┐  ╱S41
│ BASED ON WIDTH OF ISOLATED AREA (xmin, xmax),│
│ SEARCH RANGE IN X-AXIS DIRECTION OF         │
│ PARALLAX IMAGE IS SET                       │
└──────────────────────────────────────────┘
            │
            ▼
┌──────────────────────────────────────────┐  ╱S42
│ BASED ON MAXIMUM PARALLAX OF ISOLATED      │
│ AREA, ymax IS SET                          │
└──────────────────────────────────────────┘
            │
            ▼
┌──────────────────────────────────────────┐  ╱S43
│ BASED ON HEIGHT OF ISOLATED AREA (ymin, ymax),│
│ SEARCH RANGE IN Y-AXIS DIRECTION OF        │
│ PARALLAX IMAGE IS SET                      │
└──────────────────────────────────────────┘
            │
            ▼
┌──────────────────────────────────────────┐  ╱S44
│ EXTRACT OBJECT CANDIDATE PIXELS HAVING     │
│ PARALLAX WITHIN RANGE FROM MINIMUM         │
│ PARALLAX VALUE TO MAXIMUM PARALLAX VALUE   │
└──────────────────────────────────────────┘
            │
            ▼
┌──────────────────────────────────────────┐  ╱S45
│ EXTRACT OBJECT CANDIDATE LINE HAVING       │
│ OBJECT CANDIDATE PIXELS WITH GIVEN NUMBER  │
│ OR MORE                                    │
└──────────────────────────────────────────┘
            │
            ▼
┌──────────────────────────────────────────┐  ╱S46
│ OBJECT CANDIDATE LINE HAVING               │
│ GREATER DENSITY IS DETERMINED AS OBJECT LINE│
└──────────────────────────────────────────┘
            │
            ▼
┌──────────────────────────────────────────┐  ╱S47
│ CIRCUMSCRIBED RECTANGLE OF CONNECTED       │
│ OBJECT LINE  IS DETECTED AS OBJECT AREA IN │
│ PARALLAX IMAGE                             │
└──────────────────────────────────────────┘
            │
            ▼
        (  END  )
```

# FIG. 41

| OBJECT TYPE | WIDTH | HEIGHT | DEPTH | UNIT (mm) |
|---|---|---|---|---|
| MOTOR CYCLE, BICYCLE | <1100 | <2500 | >1000 | |
| PEDESTRIAN | <1100 | <2500 | ≤1000 | |
| SMALL CAR | <1700 | <1700 | <10000 | |
| MEDIUM CAR | <1700 | <2500 | <10000 | |
| TRUCKS | <3500 | <3500 | <15000 | |
| OTHERS: | OBJECT NOT IN THE ABOVE | | | |

# FIG. 42

START

HOUGH CONVERSION FOR U MAP — S51

DETECT LEFT AND RIGHT LINES — S52

DETECT GUARD RAIL CANDIDATE COORDINATES — S53

DETECT GUARD RAIL LINE PORTION — S54

END

# FIG. 43

PARALLAX LINE
CORRESPONDING TO 30M

(0, 0)

PARALLAX

L1

L2

GUARD RAIL
(LEFT)

GUARD RAIL
(RIGHT)

AHEAD
VEHICLE

INCOMING
VEHICLE

U MAP

x

# FIG. 44

L1

5 × 5 AREA

GUARD RAIL
(LEFT)

(xmax, d2, y2)

(xmin, d1, y1)

DETECTED GUARD RAIL
CANDIDATE COORDINATES

# FIG. 45

PARALLAX IMAGE

# FIG. 46

$$L\tan\theta$$

L

$\theta$

CAMERA LENS

f

IMAGE SENSOR

$\Delta x$

VANISHING POINT

# FIG. 47

r

L

$\theta$

r

CAMERA LENS POSITION

IMAGE SENSOR $\Delta x$

# FIG. 48

y

Vy FOR DECELERATION

Vy FOR CONSTANT SPEED

Vy FOR ACCELERATION

ROAD FACE FOR DECELERATION

ROAD FACE FOR CONSTANT SPEED

ROAD FACE FOR ACCELERATION

PARALLAX

# FIG. 49

CAPTURED IMAGE

(ZEBRA ZONE label pointing to the zebra zone pattern in the figure)

# FIG. 50

(0,0)

y

ROAD FACE

ERROR PARALLAX DUE TO HORIZONTAL LINE OF ZEBRA ZONE

A

V MAP

PARALLAX d

# FIG. 51

(0,0)

↓ y

APPROXIMATED STRAIGHT LINE
OF ROAD FACE HAVING ERROR

APPROXIMATED
STRAIGHT LINE
OF ROAD FACE
HAVING LESS ERROR

ERROR PARALLAX
DUE TO HORIZONTAL LINE
OF ZEBRA ZONE

A

ROAD FACE

V MAP

PARALLAX d

# FIG. 52

133A′

133B′

133C′

| MAP VOTING UNIT | → | NOISE AREA MAXIMUM FREQUENCY DETECTION UNIT | → | FREQUENCY CORRECTION UNIT | → |

# FIG. 53

(0,0)

$\downarrow y$

APPROXIMATED STRAIGHT LINE
OF PREVIOUS FRAME

$\vdash$--REFERENCE DISTANCE (PARALLAX)

ERROR PARALLAX
DUE TO HORIZONTAL LINE
OF ZEBRA ZONE

$\delta n$

FIRST
NOISE AREA

ROAD FACE

SECOND NOISE AREA

PROVISIONAL V MAP

PARALLAX d

# FIG. 54

(0,0)

$\downarrow y$

$\vdash$--REFERENCE DISTANCE (PARALLAX)

ROAD FACE

$\delta n$

FIRST
NOISE AREA

SECOND NOISE AREA

V MAP AFTER CORRECTION

PARALLAX d

# FIG. 55

START

→ S61 VOTING OF PARALLAX DATA (d, y) (GENERATION OF USUAL V MAP)

→ S62 OBTAIN DATA OF APPROXIMATED STRAIGHT LINE OF ROAD FACE IN PREVIOUS FRAME

→ S63 BASED ON DATA OF APPROXIMATED STRAIGHT LINE AND δn, NOISE AREA IS SET

→ S64 MAXIMUM FREQUENCY VALUE IN NOISE AREA IS DETECTED

→ S65 FREQUENCY VALUE IN NOISE AREA, SMALLER THAN MAXIMUM FREQUENCY VALUE, IS CORRECTED TO ZERO

→ END

# FIG. 56

START

→ S61 VOTING OF PARALLAX DATA (d, y) (GENERATION OF USUAL V MAP)

→ S62 OBTAIN DATA OF APPROXIMATED STRAIGHT LINE OF ROAD FACE IN PREVIOUS FRAME

→ S63 BASED ON DATA OF APPROXIMATED STRAIGHT LINE AND δn, NOISE AREA IS SET

→ S66 V MAP IS DIVIDED USING REFERENCE DISTANCE (PARALLAX)

→ S67 MAXIMUM FREQUENCY VALUE IS DETECTED FOR EACH OF NOISE AREAS

→ S68 FREQUENCY VALUE IN EACH NOISE AREA, SMALLER THAN MAXIMUM FREQUENCY VALUE IN EACH NOISE AREA, IS CORRECTED TO ZERO

→ END

# FIG. 57

```
        START
          │
          ▼
┌──────────────────────────┐  S71
│ MULTIPLE V MAP IS GENERATED │
└──────────────────────────┘
          │
          ▼
┌──────────────────────────┐  S72
│ ROAD FACE SHAPE IS DETECTED │
└──────────────────────────┘
          │
          ▼
┌──────────────────────────┐  S73
│ THREE DIMENSIONAL HEIGHT FROM │
│     ROAD FACE IS DETECTED     │
└──────────────────────────┘
          │
          ▼
         END
```

# FIG. 58

(0, 0)

DIVIDING LINE

VANISHING POINT

AHEAD VEHICLE

INCOMING VEHICLE

(xsize/2, ysize)          (xsize, ysize)

PARALLAX IMAGE

# FIG. 59

(0, 0)

VANISHING POINT

AHEAD
VEHICLE

INCOMING
VEHICLE

(x, y)

L3

L14

(xsize/2, ysize)

(xsize, ysize)

PARALLAX IMAGE

# FIG. 60

(0, 0)

VANISHING POINT

AHEAD
VEHICLE

INCOMING
VEHICLE

L3

L4

(xL, ydL)

(xR,y, dR)

(xsize/2, ysize)

L5

(xsize, ysize)

PARALLAX IMAGE

# FIG.61

PARALLAX

dR

dL

(xL, y, dL)          (xc, y, dc)          (xR, y, dR)

x

# FIG. 62

(0, 0)

POINT WHERE OFFSET
IS SUBTRACTED
FROM Y-COORDINATE
OF VANISHING POINT
W(vx, vy-offset)

DIVIDING LINE

VANISHING POINT
V(vx, vy)

A
(0, ysize*3/4)

D
(xsize, ysize*3/4)

AHEAD
VEHICLE

INCOMING
VEHICLE

B
(0, ysize)

M
(xsize/2, ysize)

C
(xsize, ysize)

EP 2 767 927 B1

# FIG. 63

(0, 0)

VANISHING POINT

P(xsize/3, vy)    V(vx, vy)    Q(xsize*2/3, vy)

L3

AHEAD
VEHICLE

INCOMING
VEHICLE

L4

B

M(xsize/2, ysize)

C

(xsize, ysize)

# FIG. 64

(0, 0)

END LINE
OF IMAGE
SCANNING LINE

VANISHING POINT

P(xsize/3, vy)    V(vx, vy)    Q(xsize*2/3, vy)

L3

AHEAD
VEHICLE

INCOMING
VEHICLE

L4

B

M(xsize/2, ysize)

L5

C

(xsize, ysize)

# FIG. 65

(0, 0)

PARALLAX IMAGE

# FIG. 66

(0, 0)

PARALLAX IMAGE

# FIG.67

PARALLAX

dR

dL

(xL, y, dL)　　　(xM, y, dM)　　　(xR, y, dR)

x

# FIG. 68

(0, 0)

POINT WHERE OFFSET
IS SUBTRACTED
FROM Y-COORDINATE
OF VANISHING POINT
W(vx, vy-offset)

VANISHING POINT
V(vx, vy)

AHEAD
VEHICLE

INCOMING
VEHICLE

L6

L7

A
(0, ysize*3/4)

D
(xsize, ysize:3/4)

B
(0, ysize)

L
(xsize/4, ysize)

R
(xsize*3/4, ysize)

C
(xsize, ysize)

## FIG. 69

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010271964 A

- JP 4018310 B

**Non-patent literature cited in the description**

- Road Segmentation Supervised by an Extended V-Disparity Algorithm for Autonomous Navigation. **NICOLAS SOQUET et al.** Intelligent Vehicles Symposium, 2007 IEEE. IEEE, 01 June 2007, 160-165

- A Comparison of Color and Infrared Stereo Approaches to Pedestrian Detection. **STEPHEN J. KROTOSKY et al.** Intelligent Vehicles Symposium, 2007 IEEE. IEEE, 01 June 2007, 81-86